# EUROPEAN PATENT APPLICATION

(11) **EP 4 564 824 A1**
(43) Date of publication of application: **04.06.2025**
(21) Application number: 24762870.4
(22) Date of filing: 08.01.2024
(51) Int. Cl.: H04N 21/41

(54) **SCREEN CASTING METHOD, DEVICE AND SYSTEM**

(30) Priority: 27.02.2023 CN 202310215114
(71) Applicant: Huawei Technologies Co., Ltd., Shenzhen, Guangdong 518129 (CN)
(72) Inventor: DING, Kang, Shenzhen, Guangdong 518129 (CN)
(74) Representative: Grünecker Patent- und Rechtsanwälte PartG mbB
(86) International application number: PCT/CN2024/071012
(87) International publication number: WO 2024/179187

(57) **Abstract**

This application discloses a projection method and system, and a device, and relates to the field of terminal technologies, to reduce power consumption of a projection sender during projection, improve a battery life, and improve visual experience of a user during projection. In this application, in a process in which a first device performs projection onto a second device so that the second device displays a first projection interface, the second device detects an event that is about whether the user pays attention to the first projection interface displayed on the second device, and sends, to the first device, a corresponding instruction for adjusting a projection effect. In this way, the first device dynamically adjusts the projection effect, to reduce power consumption of the first device, improve a battery life, and improve visual experience when the user watches the first projection interface displayed on the second device.

## Description

This application claims priority to Chinese Patent Application No. 202310215114.7, filed with the China National Intellectual Property Administration on February 27, 2023 and entitled "PROJECTION METHOD AND SYSTEM, AND DEVICE", which is incorporated herein by reference in its entirety.

### TECHNICAL FIELD

Embodiments of this application relate to the field of terminal technologies, and in particular, to a projection method and system, and a device.

### BACKGROUND

With social development, more devices with screens exist in various industries, and projection technologies are also widely used. A projection sending end is generally a mobile device like a mobile phone or a tablet. A projection power consumption issue is serious, affecting user experience.

In a conventional projection technology, once projection succeeds, the projection sending end continuously generates video streams based on a specified encoding parameter and sends the video streams to a projection receiving end for decoding, rendering, and display. Consequently, power of the projection sending end (mainly an encoder, a CPU, and a Wi-Fi part) is continuously consumed, affecting a battery life of the projection sending end. However, when a plurality of sending end windows are projected onto the receiving end, display effects of the windows are the same, and a sending end window that a user does not pay attention to still continuously sends video streams, causing a specific waste of resources and poor visual experience of the user.

### SUMMARY

Embodiments of this application provide a projection method and system, and a device. During projection, a projection sending end can dynamically adjust a projection effect based on an event that is about whether a user pays attention to an interface synchronously displayed on a projection receiving end and that is sent by the projection receiving end, to reduce power consumption of the projection sending end, and improve visual experience of the user.

The following technical solutions are used in embodiments of this application, to achieve the foregoing objectives.

According to a first aspect, a projection method is provided. The method is applied to a second device in a scenario in which a first device performs projection onto the second device. The method includes: The second device displays a first projection interface, where the first projection interface corresponds to a display interface of a first application on the first device; and in response to detecting a first event that a user does not pay attention to the first projection interface displayed on the second device, the second device sends, to the first device, a first instruction for adjusting a projection effect.

According to the technical solution provided in the first aspect, when displaying the first projection interface, in response to detecting the first event that the user does not pay attention to the first projection interface displayed on the second device, the second device sends, to the first device, the first instruction for adjusting the projection effect, so that the first device dynamically adjusts the projection effect according to the first instruction. This reduces power consumption of the first device without affecting subjective experience of the user, and increases a battery life.

In a possible implementation, the first event includes at least one of the following events: The user does not gaze at the first projection interface, the head of the user turns to an area other than the first projection interface, or the user does not touch the first projection interface.

For example, the first device may be a mobile phone, and the second device may be a vehicle. The first event may be that the user does not gaze at an interface that is projected by the mobile phone and that is displayed on a display of the vehicle. The first event may be that the head of the user turns to an area other than the interface that is projected by the mobile phone and that is displayed on the display of the vehicle. The first event may alternatively be that the head of the user turns to the area other than the interface that is projected by the mobile phone and that is displayed on the display of the vehicle and the user does not gaze at the interface that is projected by the mobile phone and that is displayed on the display of the vehicle.

For another example, the first device may be a mobile phone, and the second device may be a smart television. The first event may be that the user does not gaze at an interface that is projected by the mobile phone and that is displayed on a display of the smart television. The first event may be that the head of the user turns to an area other than the interface that is projected by the mobile phone and that is displayed on the display of the smart television. The first event may alternatively be a combination of the foregoing two events.

For still another example, the first device may be a mobile phone, and the second device may be a notebook computer. The first event may be that the user does not gaze at an interface that is projected by the mobile phone and that is displayed on a display of the notebook computer. The first event may be that the user does not touch the interface that is projected by the mobile phone and that is displayed on the display of the notebook computer. The first event may alternatively be a combination of the foregoing two events.

In a possible implementation, after the second device sends, to the first device, the first instruction for adjusting the projection effect, the method further includes: The second device displays the first projection interface obtained after the projection effect is adjusted, where the first projection interface obtained after the projection effect is adjusted corresponds to the display interface that is of the first application on the first device and that is obtained after the projection effect is adjusted according to the first instruction.

In a possible implementation, the first projection interface obtained after the projection effect is adjusted includes at least one of the following: the first projection interface that is scaled down and displayed, the first projection interface that is displayed on an edge of a screen, or the first projection interface for which at least one of a bitrate, a frame rate, and resolution is reduced.

For example, the first device is a mobile phone, and the second device is a smart television. After the mobile phone adjusts the display interface of the first application according to the first instruction, the smart television displays the corresponding first projection interface obtained after the projection effect is adjusted. Compared with that for the first projection interface obtained before the projection effect is adjusted, at least one of the bitrate, the frame rate, and the resolution may be reduced for the first projection interface obtained after the projection effect is adjusted. The first projection interface obtained after the projection effect is adjusted may alternatively be scaled down, or displayed on an edge of the smart television, or scaled down and displayed on the edge of the smart television. Because the user does not pay attention to the first projection interface, power consumption of the first device, namely, the mobile phone, is reduced without affecting subjective visual experience of the user, and the battery life is improved.

In a possible implementation, after the second device sends, to the first device, the first instruction for adjusting the projection effect, the method further includes: The second device stops displaying the first projection interface.

For example, the first device is a mobile phone, the second device is a vehicle, and the first application on the mobile phone is a map navigation application. That the mobile phone adjusts the projection effect according to the first instruction may include stopping displaying a display interface of the map navigation application. In this case, correspondingly, display of a display interface (the first projection interface) that is of the map navigation application and that is displayed on a display of the vehicle is also synchronously stopped, to further reduce power consumption.

In a possible implementation, that the second device stops displaying the first projection interface further includes: The second device restores display of the first projection interface in response to an emergency event.

In a possible implementation, the emergency event includes a road condition navigation event.

For example, the first device is a mobile phone, the second device is a vehicle, and the first application on the mobile phone is a map navigation application. If the map navigation application on the mobile phone learns, through calculation in a background, that a turn needs to be performed at a close distance ahead, a display interface of the map navigation application is restored. Correspondingly, display of the display interface of the map navigation application, namely, the first projection interface, is also synchronously restored on a display of the vehicle. It should be noted that the road condition navigation event may alternatively be any emergency situation encountered in a driving process, for example, emergency braking, an emergency stop, emergency acceleration, or emergency avoidance. This is not limited in embodiments of this application.

In a possible implementation, in response to detecting a second event that the user pays attention to the first projection interface, the second device sends, to the first device, a second instruction for adjusting a projection effect. According to this solution, when the user pays attention to the first projection interface, the projection effect can be restored, to ensure that an image is clear and subjective visual experience of the user is not affected.

In a possible implementation, the second event includes at least one of the following events: The user gazes at the first projection interface, the head of the user turns to the first projection interface, or the user touches the first projection interface.

For example, the first device may be a mobile phone, and the second device may be a vehicle. The second event may be that the user gazes at an interface that is projected by the mobile phone and that is displayed on a display of the vehicle. The second event may be that the head of the user turns to the interface that is projected by the mobile phone and that is displayed on the display of the vehicle. The first event may alternatively be that the head of the user turns to the interface that is projected by the mobile phone and that is displayed on the display of the vehicle and the user gazes at the interface that is projected by the mobile phone and that is displayed on the display of the vehicle.

For another example, the first device may be a mobile phone, and the second device may be a smart television. The second event may be that the user gazes at an interface that is projected by the mobile phone and that is displayed on a display of the smart television. The second event may be that the head of the user turns to the interface that is projected by the mobile phone and that is displayed on the display of the smart television. The second event may alternatively be a combination of the foregoing two events.

For still another example, the first device may be a mobile phone, and the second device may be a notebook computer. The second event may be that the user gazes at an interface that is projected by the mobile phone and that is displayed on a display of the notebook computer. The second event may be that the user touches the interface that is projected by the mobile phone and that is displayed on the display of the notebook computer. The second event may alternatively be a combination of the foregoing two events.

In a possible implementation, after the second device sends, to the first device, the second instruction for adjusting the projection effect, the method further includes: The second device displays the first projection interface obtained after the projection effect is adjusted, where the first projection interface obtained after the projection effect is adjusted corresponds to the display interface that is of the first application on the first device and that is obtained after the projection effect is adjusted according to the second instruction.

In a possible implementation, the first projection interface obtained after the projection effect is adjusted includes at least one of the following: the first projection interface that is scaled up and displayed, the first projection interface that is displayed in a middle, or the first projection interface for which at least one of the bitrate, the frame rate, and the resolution is increased.

For example, the first device is a mobile phone, and the second device is a smart television. After the mobile phone adjusts the display interface of the first application according to the second instruction, the smart television displays the corresponding first projection interface obtained after the projection effect is adjusted. Compared with that for the first projection interface obtained before the projection effect is adjusted, at least one of the bitrate, the frame rate, and the resolution may be increased for the first projection interface obtained after the projection effect is adjusted. The first projection interface obtained after the projection effect is adjusted may alternatively be scaled up, or displayed in the middle of the smart television, or scaled up and displayed in the middle of the smart television. This can improve visual experience when the user watches the first projection interface. According to the foregoing steps, the first projection interface that the user pays attention to can be restored from a state of low power consumption, and subjective visual experience of the user is not affected.

In a possible implementation, the second device further displays a second projection interface. The second projection interface corresponds to a display interface of a second application on the first device. The method further includes: The second device displays the second projection interface obtained after a projection effect is adjusted, where the second projection interface obtained after the projection effect is adjusted corresponds to the display interface that is of the second application on the first device and that is obtained after the projection effect is adjusted according to the second instruction.

In a possible implementation, the second projection interface obtained after the projection effect is adjusted includes at least one of the following: the second projection interface that is scaled down and displayed, the second projection interface that is displayed on the edge of the screen, or the second projection interface for which at least one of a bitrate, a frame rate, and resolution is reduced.

For example, the first device is a mobile phone, and the second device is a notebook computer. The mobile phone displays the display interface of the first application and the display interface of the second application, and the notebook computer displays the first projection interface (corresponding to the display interface of the first application on the mobile phone) and the second projection interface (corresponding to the display interface of the second application on the mobile phone). It is assumed that the user pays attention to the first projection interface. After the mobile phone adjusts the display interface of the second application according to the second instruction, the notebook computer displays the corresponding second projection interface obtained after the projection effect is adjusted. Compared with that for the second projection interface obtained before the projection effect is adjusted, at least one of the bitrate, the frame rate, and the resolution is reduced for the second projection interface obtained after the projection effect is adjusted. The second projection interface obtained after the projection effect is adjusted may alternatively be scaled down, or displayed on an edge of the notebook computer, or scaled down and displayed on the edge of the notebook computer. Because the user does not pay attention to the second projection interface, power consumption of the first device, namely, the mobile phone, is reduced without affecting subjective visual experience of the user, and the battery life is improved.

In a possible implementation, the second device further displays a third projection interface. The third projection interface corresponds to a display interface of a third application on a third device. The method further includes: The second device sends, to the third device, a third instruction for adjusting a projection effect of the display interface of the third application.

In a possible implementation, after the second device sends, to the third device, the third instruction for adjusting the projection effect of the display interface of the third application, the method further includes: The second device displays the third projection interface obtained after the projection effect is adjusted, where the third projection interface obtained after the projection effect is adjusted corresponds to the display interface that is of the third application on the third device and that is obtained after the projection effect is adjusted according to the third instruction.

In a possible implementation, the third projection interface obtained after the projection effect is adjusted includes at least one of the following: the third projection interface that is scaled down and displayed, the third projection interface that is displayed on the edge of the screen, or the third projection interface for which at least one of a bitrate, a frame rate, and resolution is reduced.

For example, the first device is a mobile phone A, the second device is a smart television, and the third device is a mobile phone B. Because the user pays attention to the first projection interface projected by the mobile phone A onto the smart television, and the user does not pay attention to the third projection interface projected by the mobile phone B onto the smart television, after the mobile phone B adjusts the projection effect according to the third instruction, correspondingly, at least one of the bitrate, the frame rate, and the resolution may be reduced for the third projection interface that is for adjusting projection and that is displayed on the smart television. The third projection interface obtained after the projection effect is adjusted may alternatively be scaled down, or displayed on an edge of the smart television, or scaled down and displayed on the edge of the smart television. Because the user does not pay attention to the third projection interface, power consumption of the third device, namely, the mobile phone B, is reduced without affecting subjective visual experience of the user, and a battery life is improved.

According to a second aspect, a projection method is provided. The method is applied to a projection system. The projection system includes a first device and a second device. The method includes: The first device projects a display interface of a first application onto the second device; the second device displays a first projection interface, where the first projection interface corresponds to the display interface of the first application on the first device; in response to detecting a first event that a user does not pay attention to the first projection interface displayed on the second device, the second device sends, to the first device, a first instruction for adjusting a projection effect; the first device receives the first instruction; and the first device adjusts the projection effect of the display interface of the first application according to the first instruction.

According to the technical solution provided in the second aspect, when displaying the first projection interface, in response to detecting the first event that the user does not pay attention to the first projection interface displayed on the second device, the second device sends, to the first device, the first instruction for adjusting the projection effect; and the first device receives the first instruction, and adjusts the projection effect of the display interface of the first application according to the first instruction. This reduces power consumption of the first device without affecting subjective experience of the user, and increases a battery life.

In a possible implementation, the first event includes at least one of the following events: The user does not gaze at the first projection interface, the head of the user turns to an area other than the first projection interface, or the user does not touch the first projection interface.

In a possible implementation, that the first device adjusts the projection effect of the display interface of the first application according to the first instruction includes at least one of the following: stopping encoding of a video picture corresponding to the display interface of the first application, stopping encoding of an audio corresponding to the display interface of the first application, or reducing at least one of a bitrate, a frame rate, or resolution of the video picture corresponding to the display interface of the first application.

For example, the first device is a mobile phone, and the second device is a vehicle. The mobile phone displays a display interface of a map navigation application, and projects the display interface of the map navigation application onto a display of the vehicle for display. That the mobile phone adjusts a projection effect of the display interface of the map navigation application according to the first instruction may be stopping only encoding of a video picture corresponding to the display interface of the map navigation application, and still encoding and synchronously broadcasting an audio to the vehicle. Because encoding of the video picture is stopped, projection power consumption of the first device can be reduced to some extent. That the mobile phone adjusts the projection effect of the display interface of the map navigation application according to the first instruction may alternatively be stopping encoding of the video picture and the audio that correspond to the display interface of the map navigation application. This greatly reduces projection power consumption of the first device. That the mobile phone adjusts the projection effect of the display interface of the map navigation application according to the first instruction may alternatively be reducing at least one of a bitrate, a frame rate, or resolution of the video picture corresponding to the display interface of the map navigation application, and still synchronously projecting the video picture and the audio onto the vehicle.

In a possible implementation, after the first device adjusts the projection effect of the display interface of the first application according to the first instruction, the method further includes: The first device projects, onto the second device, the display interface that is of the first application and that is obtained after the projection effect is adjusted according to the first instruction; and the second device displays the first projection interface obtained after the projection effect is adjusted, where the first projection interface obtained after the projection effect is adjusted corresponds to the display interface that is of the first application on the first device and that is obtained after the projection effect is adjusted according to the first instruction.

In a possible implementation, the first projection interface obtained after the projection effect is adjusted includes at least one of the following: the first projection interface that is scaled down and displayed, the first projection interface that is displayed on an edge of a screen, or the first projection interface for which at least one of a bitrate, a frame rate, and resolution is reduced.

For example, the first device is a mobile phone, and the second device is a smart television. After the mobile phone adjusts the display interface of the first application according to the first instruction, the smart television displays the corresponding first projection interface obtained after the projection effect is adjusted. Compared with that for the first projection interface obtained before the projection effect is adjusted, at least one of the bitrate, the frame rate, and the resolution may be reduced for the first projection interface obtained after the projection effect is adjusted. The first projection interface obtained after the projection effect is adjusted may alternatively be scaled down, or displayed on an edge of the smart television, or scaled down and displayed on the edge of the smart television. Because the user does not pay attention to the first projection interface, power consumption of the first device, namely, the mobile phone, is reduced without affecting subjective visual experience of the user, and the battery life is improved.

In a possible implementation, that the first device adjusts the projection effect of the display interface of the first application according to the first instruction further includes: The first device stops displaying the display interface of the first application.

In a possible implementation, after the first device adjusts the projection effect of the display interface of the first application according to the first instruction, the method further includes: The second device stops displaying the first projection interface.

For example, the first device is a mobile phone, the second device is a vehicle, and the first application on the mobile phone is a map navigation application. That the mobile phone adjusts the projection effect according to the first instruction may be stopping displaying a display interface of the map navigation application. In this case, correspondingly, display of a display interface (the first projection interface) that is of the map navigation application and that is displayed on a display of the vehicle is also synchronously stopped, to further reduce power consumption.

In a possible implementation, in response to an emergency event, the first device restores display of the display interface of the first application, and the second device restores display of the first projection interface.

In a possible implementation, the emergency event includes a road condition navigation event.

For example, the first device is a mobile phone, the second device is a vehicle, and the first application on the mobile phone is a map navigation application. If the map navigation application on the mobile phone learns, through calculation in a background, that a turn needs to be performed at a close distance ahead, a display interface of the map navigation application is restored. Correspondingly, display of the display interface of the map navigation application, namely, the first projection interface, is also synchronously restored on a display of the vehicle. It should be noted that the road condition navigation event may alternatively be any emergency situation encountered in a driving process, for example, emergency braking, an emergency stop, emergency acceleration, or emergency avoidance. This is not limited in embodiments of this application.

In a possible implementation, in response to detecting a second event that the user pays attention to the first projection interface, the second device sends, to the first device, a second instruction for adjusting a projection effect. The first device receives the second instruction. The first device adjusts the projection effect of the display interface of the first application according to the second instruction. According to this solution, when the user pays attention to the first projection interface, the projection effect can be restored, to ensure that an image is clear and subjective visual experience of the user is not affected.

In a possible implementation, the second event includes at least one of the following events: The user gazes at the first projection interface, the head of the user turns to the first projection interface, or the user touches the first projection interface.

In a possible implementation, that the first device adjusts the projection effect of the display interface of the first application according to the second instruction includes at least one of the following: starting encoding of the video picture corresponding to the display interface of the first application, starting encoding of the audio corresponding to the display interface of the first application, or increasing at least one of the bitrate, the frame rate, or the resolution of the video picture corresponding to the display interface of the first application.

For example, the first device is a mobile phone, and the second device is a vehicle. The mobile phone displays a display interface of a map navigation application, and projects the display interface of the map navigation application onto a display of the vehicle for display. That the mobile phone adjusts a projection effect of the display interface of the map navigation application according to the second instruction may be starting only encoding of a video picture corresponding to the display interface of the map navigation application (if encoding of the video picture is previously stopped), and still encoding and synchronously broadcasting an audio to the vehicle. That the mobile phone adjusts the projection effect of the display interface of the map navigation application according to the second instruction may alternatively be starting encoding of the video picture and the audio that correspond to the display interface of the map navigation application (if encoding of the video picture and the audio is previously stopped). That the mobile phone adjusts the projection effect of the display interface of the map navigation application according to the second instruction may alternatively be increasing at least one of a bitrate, a frame rate, or resolution of the video picture corresponding to the display interface of the map navigation application.

In a possible implementation, after the first device adjusts the projection effect of the display interface of the first application according to the second instruction, the method further includes: The first device projects, onto the second device, the display interface that is of the first application and that is obtained after the projection effect is adjusted according to the second instruction; and the second device displays the first projection interface obtained after the projection effect is adjusted, where the first projection interface obtained after the projection effect is adjusted corresponds to the display interface that is of the first application on the first device and that is obtained after the projection effect is adjusted according to the second instruction.

In a possible implementation, the first projection interface obtained after the projection effect is adjusted includes at least one of the following: the first projection interface that is scaled up and displayed, the first projection interface that is displayed in a middle, or the first projection interface for which at least one of the bitrate, the frame rate, and the resolution is increased.

For example, the first device is a mobile phone, and the second device is a smart television. After the mobile phone adjusts the display interface of the first application according to the second instruction, the smart television displays the corresponding first projection interface obtained after the projection effect is adjusted. Compared with that for the first projection interface obtained before the projection effect is adjusted, at least one of the bitrate, the frame rate, and the resolution may be increased for the first projection interface obtained after the projection effect is adjusted. The first projection interface obtained after the projection effect is adjusted may alternatively be scaled up, or displayed in the middle of the smart television, or scaled up and displayed in the middle of the smart television. This increases visual experience when the user watches the first projection interface. According to the foregoing steps, the first projection interface that the user pays attention to can be restored from a state of low power consumption.

In a possible implementation, the second device further displays a second projection interface. The second projection interface corresponds to a display interface of a second application on the first device. The method further includes: The first device adjusts the projection effect of the display interface of the second application according to the second instruction.

In a possible implementation, that the first device adjusts the projection effect of the display interface of the second application according to the second instruction includes: stopping encoding of a video picture corresponding to the display interface of the second application, stopping encoding of an audio corresponding to the display interface of the second application, or reducing at least one of a bitrate, a frame rate, or resolution of the video picture corresponding to the display interface of the second application.

For example, the first device is a mobile phone, and the second device is a notebook computer. The mobile phone displays the display interface of the first application and the display interface of the second application, and the notebook computer displays the first projection interface (corresponding to the display interface of the first application on the mobile phone) and the second projection interface (corresponding to the display interface of the second application on the mobile phone). It is assumed that the user pays attention to the first projection interface. In this case, that the mobile phone adjusts the display interface of the second application according to the second instruction may be stopping encoding of the video picture corresponding to the display interface of the second application, or stopping encoding of the video picture and the audio that correspond to the display interface of the second application, or reducing at least one of the bitrate, the frame rate, or the resolution of the video picture corresponding to the display interface of the second application. Because the user does not pay attention to the second projection interface, power consumption of the first device, namely, the mobile phone, is reduced without affecting subjective visual experience of the user, and the battery life is improved.

In a possible implementation, after the first device adjusts the projection effect of the display interface of the second application according to the second instruction, the method further includes: The first device projects, onto the second device, the display interface that is of the second application and that is obtained after the projection effect is adjusted according to the second instruction; and the second device displays the second projection interface obtained after the projection effect is adjusted, where the second projection interface obtained after the projection effect is adjusted corresponds to the display interface that is of the second application on the first device and that is obtained after the projection effect is adjusted according to the second instruction.

In a possible implementation, the second projection interface obtained after the projection effect is adjusted includes at least one of the following: the second projection interface that is scaled down and displayed, the second projection interface that is displayed on the edge of the screen, or the second projection interface for which at least one of a bitrate, a frame rate, and resolution is reduced.

In a possible implementation, the second device further displays a third projection interface. The third projection interface corresponds to a display interface of a third application on a third device. The method further includes: The second device sends, to the third device, a third instruction for adjusting a projection effect of the display interface of the third application; and the third device adjusts the projection effect of the display interface of the third application according to the third instruction.

In a possible implementation, that the third device adjusts the projection effect of the display interface of the third application according to the third instruction includes: stopping encoding of a video picture corresponding to the display interface of the third application, stopping encoding of an audio corresponding to the display interface of the third application, or reducing at least one of a bitrate, a frame rate, or resolution of the video picture corresponding to the display interface of the third application.

For example, the first device is a mobile phone A, the second device is a smart television, and the third device is a mobile phone B. The user pays attention to the first projection interface projected by the mobile phone A onto the smart television, and the user does not pay attention to the third projection interface projected by the mobile phone B onto the smart television. That the mobile phone B adjusts the projection effect of the display interface of the third application according to the third instruction may be stopping encoding of the video picture corresponding to the display interface of the third application, or stopping encoding of the video picture and the audio that correspond to the display interface of the third application, or reducing at least one of the bitrate, the frame rate, or the resolution of the video picture corresponding to the display interface of the third application. Because the user does not pay attention to the third interface on the third device, power consumption of the third device can be reduced through the foregoing processing without affecting subjective visual experience of the user, and a battery life of the third device can be improved.

In a possible implementation, after the third device adjusts the projection effect of the display interface of the third application according to the third instruction, the method further includes: The third device projects, onto the second device, the display interface that is of the third application and that is obtained after the projection effect is adjusted according to the third instruction; and the second device displays the third projection interface obtained after the projection effect is adjusted, where the third projection interface obtained after the projection effect is adjusted corresponds to the display interface that is of the third application on the third device and that is obtained after the projection effect is adjusted according to the third instruction.

In a possible implementation, the third projection interface obtained after the projection effect is adjusted includes at least one of the following: the third projection interface that is scaled down and displayed, the third projection interface that is displayed on the edge of the screen, or the third projection interface for which at least one of a bitrate, a frame rate, and resolution is reduced.

According to a third aspect, a projection method is provided. The method is applied to a first device in a scenario in which the first device performs projection onto a second device. The method includes: The first device projects a display interface of a first application onto the second device, so that the second device displays a first projection interface, where the first projection interface corresponds to the display interface of the first application on the first device; the first device receives a first instruction that is for adjusting a projection effect and that is sent by the second device; and the first device adjusts the projection effect of the display interface of the first application according to the first instruction.

According to the technical solution provided in the third aspect, the first device receives the first instruction that is for adjusting the projection effect and that is sent by the second device, and dynamically adjusts the projection effect. This reduces power consumption of the first device without affecting subjective experience of the user, and increases a battery life.

In a possible implementation, that the first device adjusts the projection effect of the display interface of the first application according to the first instruction includes at least one of the following: stopping encoding of a video picture corresponding to the display interface of the first application, stopping encoding of an audio corresponding to the display interface of the first application, or reducing at least one of a bitrate, a frame rate, or resolution of the video picture corresponding to the display interface of the first application.

In a possible implementation, after the first device adjusts the projection effect of the display interface of the first application according to the first instruction, the method further includes: The first device projects, onto the second device, the display interface that is of the first application and that is obtained after the projection effect is adjusted according to the first instruction.

In a possible implementation, that the first device adjusts the projection effect of the display interface of the first application according to the first instruction further includes: The first device stops displaying the display interface of the first application.

For example, the first device is a mobile phone, the second device is a vehicle, and the first application on the mobile phone is a map navigation application. That the mobile phone adjusts the projection effect according to the first instruction may be stopping displaying a display interface of the map navigation application, to further reduce power consumption.

In a possible implementation, the first device restores display of the display interface of the first application in response to an emergency event.

In a possible implementation, the emergency event includes a road condition navigation event.

For example, the first device is a mobile phone, the second device is a vehicle, and the first application on the mobile phone is a map navigation application. If the map navigation application on the mobile phone learns, through calculation in a background, that a turn needs to be performed at a close distance ahead, a display interface of the map navigation application is restored. It should be noted that the road condition navigation event may alternatively be any emergency situation encountered in a driving process, for example, emergency braking, an emergency stop, emergency acceleration, or emergency avoidance. This is not limited in embodiments of this application.

In a possible implementation, the first device receives a second instruction that is for adjusting a projection effect and that is sent by the second device. The first device adjusts the projection effect of the display interface of the first application according to the second instruction.

In a possible implementation, that the first device adjusts the projection effect of the display interface of the first application according to the second instruction includes: starting encoding of a video picture corresponding to the display interface of the first application, starting encoding of an audio corresponding to the display interface of the first application, or increasing at least one of a bitrate, a frame rate, or resolution of the video picture corresponding to the display interface of the first application.

In a possible implementation, after the first device adjusts the projection effect of the display interface of the first application according to the second instruction, the method further includes: The first device projects, onto the second device, the display interface that is of the first application and that is obtained after the projection effect is adjusted according to the second instruction.

In a possible implementation, the first device further projects a display interface of a second application onto the second device. The method further includes: The first device adjusts the projection effect of the display interface of the second application according to the second instruction.

In a possible implementation, that the first device adjusts the projection effect of the display interface of the second application according to the second instruction includes: stopping encoding of a video picture corresponding to the display interface of the second application, stopping encoding of an audio corresponding to the display interface of the second application, or reducing at least one of a bitrate, a frame rate, or resolution of the video picture corresponding to the display interface of the second application.

For example, the first device is a mobile phone, and the second device is a notebook computer. The mobile phone displays the display interface of the first application and the display interface of the second application, and the notebook computer displays the first projection interface (corresponding to the display interface of the first application on the mobile phone) and the second projection interface (corresponding to the display interface of the second application on the mobile phone). It is assumed that the user pays attention to the first projection interface. In this case, that the mobile phone adjusts the display interface of the second application according to the second instruction may be stopping encoding of the video picture corresponding to the display interface of the second application, or stopping encoding of the video picture and the audio that correspond to the display interface of the second application, or reducing at least one of the bitrate, the frame rate, or the resolution of the video picture corresponding to the display interface of the second application. Because the user does not pay attention to the second projection interface, power consumption of the first device, namely, the mobile phone, is reduced without affecting subjective visual experience of the user, and the battery life is improved.

In a possible implementation, after the first device adjusts the projection effect of the display interface of the second application according to the second instruction, the method further includes: The first device projects, onto the second device, the display interface that is of the second application and that is obtained after the projection effect is adjusted according to the second instruction.

According to a fourth aspect, a second device is provided. The second device includes a memory, one or more processors, and one or more programs. The one or more programs are stored in the memory. When the one or more processors execute the one or more programs, the second device is enabled to perform the method according to any one of the possible implementations of the first aspect.

According to a fifth aspect, a vehicle is provided, including: a vehicle driving module, configured to control various driving operations on the vehicle; a sensor module, configured to detect a signal related to running of the vehicle; a camera, configured to detect whether a user pays attention to a projection interface displayed on the vehicle; a memory, configured to store instructions to be executed by one or more processors of the vehicle; and the processor, where when the processor executes the instructions in the memory, the vehicle may be enabled to perform method according to any one of the possible implementations of the first aspect.

According to a sixth aspect, a first device is provided, including a memory, one or more processors, and one or more programs. The one or more programs are stored in the memory. When the one or more processors execute the one or more programs, the first device is enabled to perform the method according to any one of the possible implementations of the third aspect.

According to a seventh aspect, a projection system is provided. The projection system includes a first device and a second device. The second device is configured to perform the method according to any one of the possible implementations of the first aspect. The first device is configured to perform the method according to any one of the possible implementations of the third aspect.

According to an eighth aspect, a chip system is provided. The chip system includes a processing circuit and a storage medium. The storage medium stores computer program code. When the computer program code is executed by the processing circuit, the method according to any one of the possible implementations of the first aspect, the method according to any one of the possible implementations of the second aspect, and the method according to any one of the possible implementations of the third aspect are implemented.

According to a ninth aspect, a computer-readable storage medium is provided. The computer-readable storage medium is configured to store a computer program. When the computer program is run on a computer, the computer is enabled to perform the method according to any one of the possible implementations of the first aspect, the method according to any one of the possible implementations of the second aspect, and the method according to any one of the possible implementations of the third aspect.

### BRIEF DESCRIPTION OF DRAWINGS

FIG. 1A and FIG. 1B are a diagram 1 of a scenario in which a mobile phone performs projection onto a vehicle according to an embodiment of this application;
FIG. 2A to FIG. 2C are a diagram 1 of a scenario in which a mobile phone performs projection onto a smart television according to an embodiment of this application;
FIG. 3A and FIG. 3B are a diagram 1 of a scenario in which a mobile phone performs projection onto a notebook computer according to an embodiment of this application;
FIG. 4 is a diagram of a hardware structure of a first device according to an embodiment of this application;
FIG. 5(a) is a diagram of a hardware structure of a second device according to an embodiment of this application;
FIG. 5(b) is a diagram of a hardware structure of another second device according to an embodiment of this application;
FIG. 6A to FIG. 6F are a diagram of software interaction performed when a first device performs projection onto a second device according to an embodiment of this application;
FIG. 7(a)-1 to FIG. 7(c)-2 are diagrams of a group of scenarios in which a mobile phone performs projection onto a vehicle according to an embodiment of this application;
FIG. 8(a)-1 to FIG. 8(e)-3 are diagrams of a group of scenarios in which a mobile phone performs projection onto a smart television according to an embodiment of this application;
FIG. 9(a)-1 to FIG. 9(c)-2 are diagrams of a group of scenarios in which a mobile phone performs projection onto a notebook computer according to an embodiment of this application;
FIG. 10 is a flowchart 1 of a projection method according to an embodiment of this application;
FIG. 11(a) and FIG. 11(b) are flowcharts 2 and 3 of a projection method according to an embodiment of this application;
FIG. 12 is a block diagram of a structure of an electronic device according to an embodiment of this application; and
FIG. 13 is a diagram of a structure of an electronic device according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

A projection technology means that a projection sending device (a first device) and a projection receiving device (a second device) implement synchronous display of a display interface of one or more applications of the first device on the second device through an established communication connection.

In embodiments of this application, based on different projection requirements, there may be the following two projection manners.

### 1. Mirror projection mode

The mirror projection mode means that a display of the first device is synchronized with a display of the second device, and the display of the second device also displays what is displayed on the display of the first device. Generally, in the mirror projection mode, the display of the second device is equivalent to another display of the first device, and synchronously displays same content as the display of the first device.

### 2. Streaming media push mode

The streaming media push mode means displaying a multimedia file of the first device on the second device in a streaming media push form. In the streaming media push mode, only the multimedia file can be generally projected. The multimedia file may include an audio, a video, an image, a game, a text, or the like. This is not limited in embodiments of this application. In addition, the multimedia file may be a locally stored multimedia file, or may be a multimedia file on a network. This is not limited in embodiments of this application either.

In this mode, based on different projection requirements, a projection manner may further include same-source projection and different-source projection.

Same-source projection means that a display interface of one or more applications started on the first device are projected onto the second device in a screen expansion manner. In the same-source projection manner, the first device sends, to the second device by using one channel of encoding, standard video streams obtained by encoding display interfaces of all multimedia file applications rendered on a main screen (displaying a default interface) and a virtual screen, to display, on the display of the second device, display interfaces of all applications rendered on the virtual screen.

In the different-source projection manner, the first device uses two channels of encoding. One channel of encoding is used to send the default interface on the main screen for display, and the other channel of encoding is used to send, to the second device, standard video streams corresponding to the display interfaces of all the multimedia file applications rendered on the virtual screen.

It may be understood that the same-source projection manner and the different-source projection manner have respective advantages and disadvantages. For example, the same-source projection manner can ensure application continuity, while the different-source projection manner requires application restart during switching between different screens. However, the different-source projection manner has better isolation. For example, in the different-source projection manner, independent control screens (namely, the display of the first device and the display of the second device) can be provided for the user to process different interfaces.

A projection method provided in embodiments of this application is applicable to any projection manner.

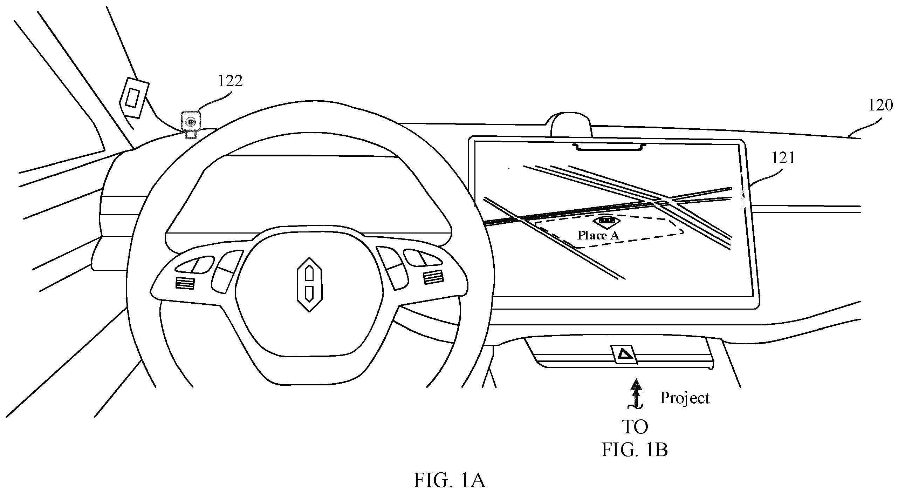

FIG. 1A to FIG. 3B are diagrams of three projection scenarios. The following separately describes the three projection scenarios.

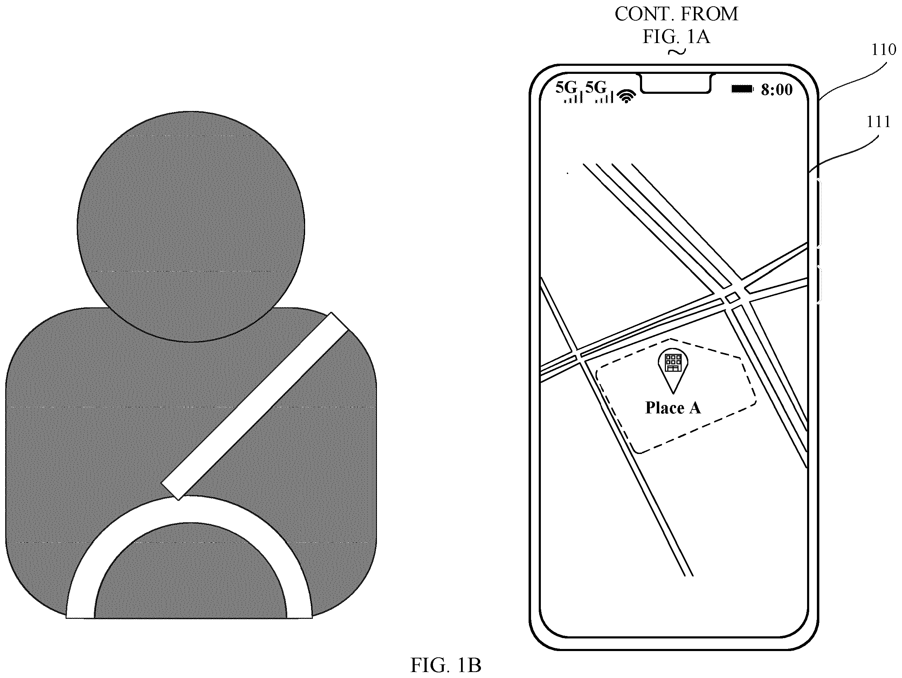

As shown in FIG. 1A and FIG. 1B, a communication connection for projection is established between a smartphone 110 (namely, the first device) and a vehicle 120 (namely, the second device). Generally, in a scenario frequently occurring in a driving scenario, a map navigation application on the smartphone 110 is projected onto a display 121 of the vehicle 120. It is assumed that, when displaying a display interface of the map navigation application on a display 111 of the smartphone, the smartphone 110 sends a projection request to the vehicle 120 in response to a projection operation of a user so that the display interface of the map navigation application is synchronously displayed on the display 121 of the vehicle 120. The display 121 of the vehicle 120 has a size generally greater than a size of the display 111 of the mobile phone 110, and is located at a more convenient and comfortable watching position for the user. Therefore, the user can obtain better visual experience on the display 121 of the vehicle 120. A camera 122 of the vehicle 120 is located on the front left side of a steering wheel, and may be configured to detect an operation of the user. In a driving process, the user does not always view the display 121 of the vehicle 120 for a long time, but the smartphone 110 continuously generates video streams and sends the video streams to the vehicle 120 for decoding, rendering, and display. Consequently, power of the smartphone 110 is continuously consumed, affecting a battery life.

It should be understood that the camera 122 may alternatively be located at a position like a left pillar A of the vehicle 120, a position above the display 121, or the like. This is not limited in embodiments of this application.

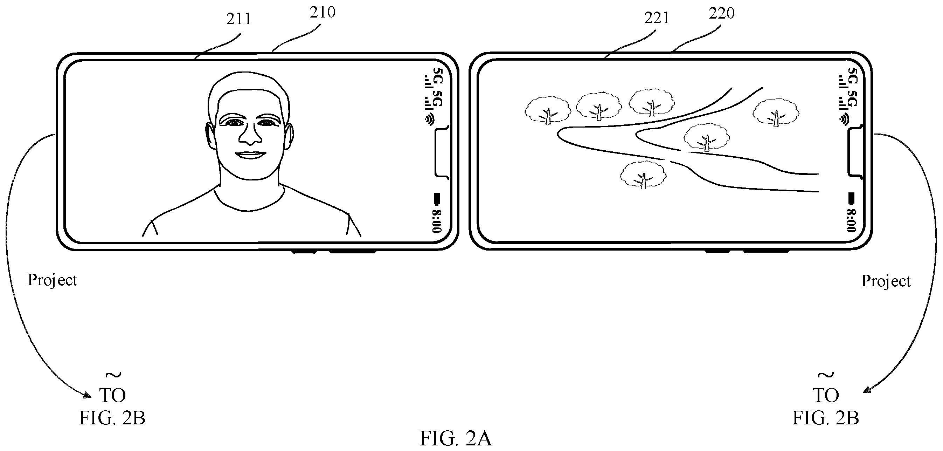

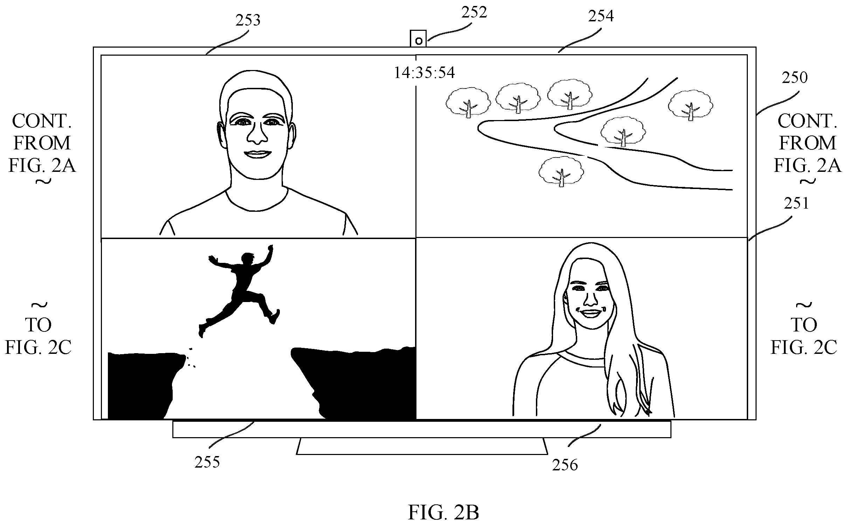

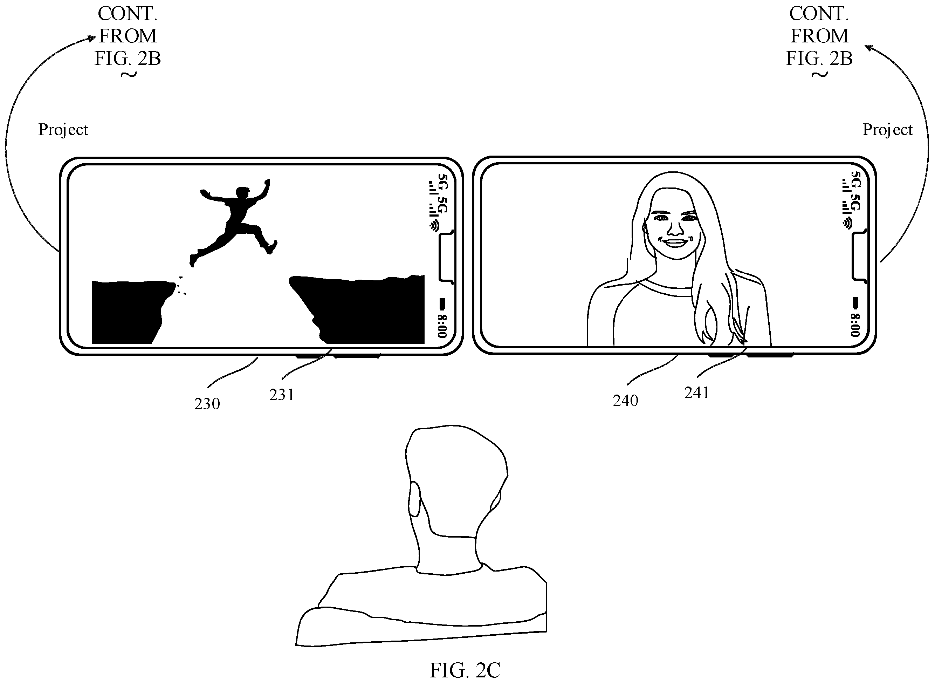

As shown in FIG. 2A to FIG. 2C, a communication connection for projection is established between a smart television 250 (namely, the second device) and each of a smartphone 210, a smartphone 220, a smartphone 230, and a smartphone 240 (namely, a plurality of first devices). The smartphones 210, 220, 230, and 240 separately send a projection request to the smart television 250 in response to a projection operation of a user so that a display 251 of the smart television 250 synchronously displays a video display interface displayed on a display 211 of the smartphone 210, a photograph display interface displayed on a display 221 of the smartphone 220, a game display interface displayed on a display 231 of the smartphone 230, and a video display interface displayed on a display 241 of the smartphone 240. A camera 252 of the smart television 250 is located at an upper part of the smart television 250, and may be configured to detect an operation of the user. When watching the smart television 250, the user usually pays attention to only a display interface of an application on the display 251 at a same time. However, the smartphone 210, the smartphone 220, the smartphone 230, and the smartphone 240 continuously generate video streams and send the video streams to the smart television 250 for decoding, rendering, and display. Consequently, power is continuously consumed, affecting a battery life. In addition, usually, display effects of display interfaces that are of a plurality of applications and that are synchronously displayed on the display 251 of the smart television 250 are the same. As a result, visual experience is poor when the user watches the display interfaces at the same time.

It should be noted that, in FIG. 2A to FIG. 2C, an example in which four smartphones are used as the plurality of first devices to perform projection onto one second device is used for description. There may alternatively be a plurality of first devices such as two or three first devices. This scenario is multi-window projection. In addition, there may alternatively be one first device in FIG. 2A to FIG. 2C. To be specific, the scenario changes to a single-window projection scenario, and is similar to that in FIG. 1A and FIG. 1B in which the smartphone performs projection onto the vehicle.

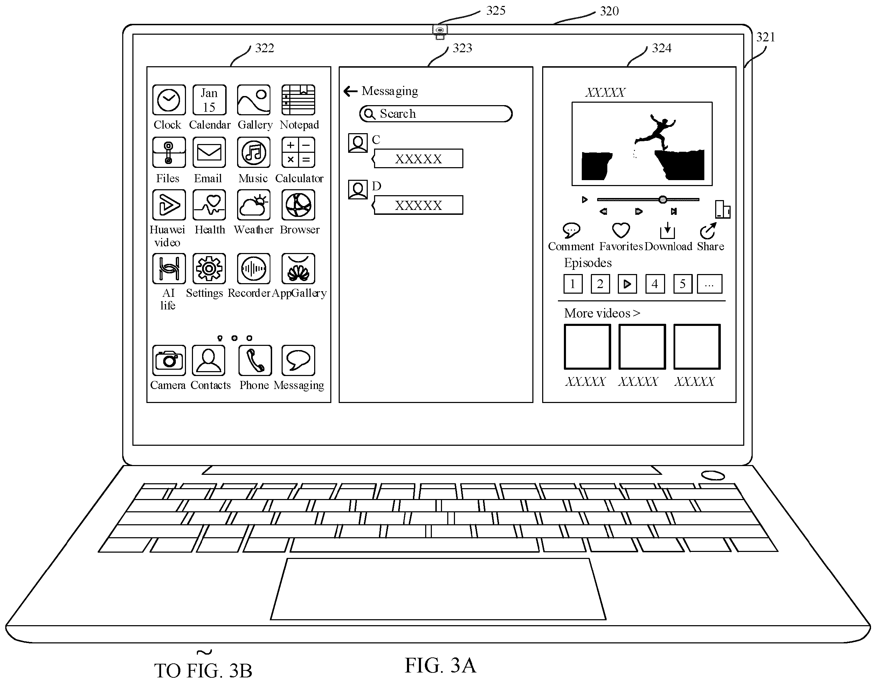

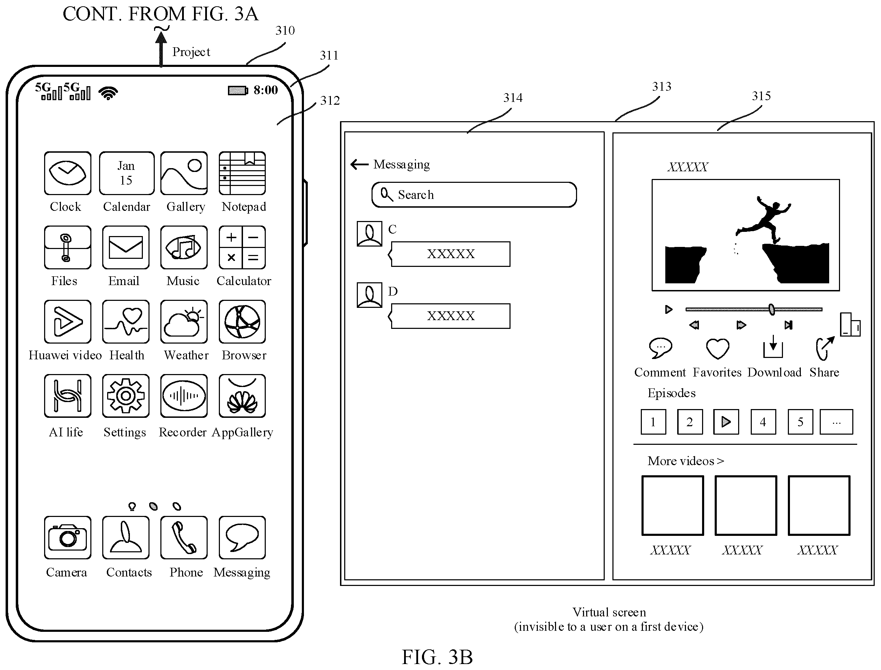

As shown in FIG. 3A and FIG. 3B, a communication connection for projection is established between a smartphone 310 (namely, the first device) and a notebook computer 320 (namely, the second device). When displaying a mobile home screen 312 on a screen 311 of the smartphone 310, the smartphone receives operations of starting a messaging application and a video application on the smartphone 310 by a user. In response to the operations of starting the messaging application and the video application by the user, the smartphone 310 starts projection interfaces in a form of free floating windows, then the smartphone 310 renders the free floating window on a virtual screen 313 of the smartphone 310, and next the smartphone 310 encodes, into standard video streams, a messaging display interface 314 and a video display interface 315 that are rendered on the virtual screen 313 and transmits the standard video streams to the notebook computer 320. The notebook computer 320 synchronously displays a mobile home screen 322, a messaging display interface 323, and a video display interface 324. In this way, a plurality of windows (namely, display interfaces of a plurality of applications) are collaboratively displayed on the smartphone 310 (namely, the first device) and the notebook computer 320 (namely, the second device). The user can obtain better watching experience on a display 321 of the larger notebook computer 320. A camera 325 of the notebook computer 320 is located at an upper part of the notebook computer 320, and may be configured to detect an operation of the user. The smartphone 310 encodes the mobile home screen 312, the messaging display interface 314, and the video display interface 315, continuously generates video streams, and sends the video streams to the notebook computer 320 for decoding, rendering, and display. Consequently, power of the smartphone 310 is continuously consumed, affecting a battery life.

It should be understood that, in FIG. 3A and FIG. 3B, an example in which display interfaces of three applications on the smartphone 310 are projected onto the notebook computer 320 is used. There may alternatively be one application display interface. For example, only the mobile home screen 312 is projected onto the notebook computer 320. There may alternatively be two or four application display interfaces, or the like. This is not limited in embodiments of this application.

In embodiments of this application, a wireless communication connection may be established between the first device and the second device in a manner like "tap", "scan" (for example, scanning a two-dimensional code or a bar code), or "proximity automatic discovery" (for example, by using Bluetooth or wireless fidelity (wireless fidelity, Wi-Fi)). The first device and the second device may comply with a wireless transmission protocol, and transmit information via a wireless connection transceiver. The wireless transmission protocol may include but is not limited to a Bluetooth (Bluetooth, BT) transmission protocol, a wireless fidelity (wireless fidelity, Wi-Fi) transmission protocol, or the like. For example, the Wi-Fi transmission protocol may be a Wi-Fi P2P transmission protocol. The wireless connection transceiver includes but is not limited to a Bluetooth transceiver, a Wi-Fi transceiver, or the like. Information transmission between the first device and the second device is implemented through wireless pairing. The information transmitted between the first device and the second device includes but is not limited to content data (for example, a standard video stream) that needs to be displayed, a control instruction, and the like.

Alternatively, a wired communication connection may be established between the first device and the second device. For example, the wired communication connection is established between the first device and the second device through a video graphics array (video graphics array, VGA), a digital visual interface (digital visual interface, DVI), a high definition multimedia interface (high definition multimedia interface, HDMI), or a data transmission line. Information transmission is implemented between the first device and the second device through the established wired communication connection. A specific connection manner between the first device and the second device is not limited in this application.

In embodiments of this application, both the first device and the second device include displays. The first device and the second device may include but are not limited to a smartphone, a vehicle, a head unit, a smart television, a notebook computer, a netbook, a tablet computer, a smartwatch, a smart band, a phone watch, a smart camera, a palmtop computer, a personal computer (personal computer, PC), a personal digital assistant (personal digital assistant, PDA), a portable multimedia player (portable multimedia player, PMP), an (augmented reality, AR)/virtual reality (virtual reality, VR) device, a television, a projection device, a somatic game console in a human-computer interaction scenario, or the like. The head unit is an abbreviation of an in-vehicle infotainment product installed in a vehicle. The head unit can functionally implement information communication between a person and the vehicle and between the vehicle and the outside (the vehicle and a vehicle, and the vehicle and an electronic device). Alternatively, the first device and the second device may be electronic devices of another type or structure. This is not limited in this application.

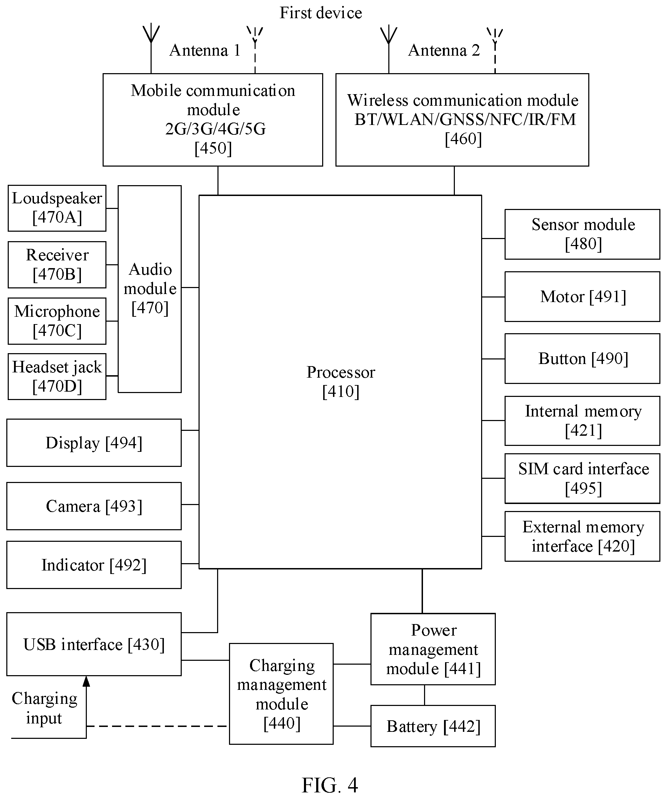

FIG. 4 is a diagram of a hardware structure of the first device according to an embodiment of this application by using the smartphone as an example. As shown in FIG. 4, the first device may include a processor 410, a memory (including an external memory interface 420 and an internal memory 421), a universal serial bus (universal serial bus, USB) interface 430, a charging management module 440, a power management module 441, a battery 442, an antenna 1, an antenna 2, a mobile communication module 450, a wireless communication module 460, an audio module 470, a loudspeaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like.

It may be understood that the structure shown in this embodiment of the present invention constitutes no specific limitation on the first device. In some other embodiments of this application, the first device may include more or fewer components than those shown in the figure, or combine some of the components, or split some of the components, or have different arrangements of the components. The components shown in the figure may be implemented by hardware, software, or a combination of the software and the hardware.

The camera 493 is configured to take a picture. The camera may be a wide-angle camera, a primary camera, a macro camera, a long-focus camera, a time of flight (time of flight, TOF) camera, or the like. A form and a quantity of cameras are not limited in embodiments of this application. It should be understood that the camera of the mobile phone may be a front-facing camera, or may be a rear-facing camera, or may include the front-facing camera and the rear-facing camera. An operation of the user is detected by a combination of the front-facing camera and the rear-facing camera. This is not limited in embodiments of this application.

The processor 410 may include one or more processing units. For example, the processor 410 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or the like. Different processing units may be independent components, or may be integrated into one or more processors. The first device may process, via the processor 410, an instruction sent by the second device, to adjust a projection effect.

A memory may be further disposed in the processor 410, and is configured to store instructions and data. In some embodiments, the memory in the processor 410 is a cache. The memory may store an instruction or data just used or cyclically used by the processor 410. If the processor 410 needs to use the instruction or the data again, the processor may directly invoke the instruction or the data from the memory. This avoids repeated access, and reduces waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The charging management module 440 is configured to receive a charging input from a charger. The charger may be a wireless charger or a wired charger. In some embodiments of wired charging, the charging management module 440 may receive a charging input from a wired charger through the USB interface 430. In some embodiments of wireless charging, the charging management module 440 may receive a wireless charging input through a wireless charging coil of the first device. When charging the battery 442, the charging management module 440 may further supply power to the first device via the power management module 441.

The power management module 441 is configured to connect the battery 442, the charging management module 440, and the processor 410. The power management module 441 receives an input from the battery 442 and/or an input from the charging management module 440, and supplies power to the processor 410, the internal memory 421, the display 494, the camera component 493, the wireless communication module 460, and the like. The power management module 441 may be further configured to monitor parameters such as a battery capacity, a battery cycle count, and a battery health status (electric leakage and impedance). In some other embodiments, the power management module 441 may alternatively be disposed in the processor 410. In some other embodiments, the power management module 441 and the charging management module 440 may alternatively be disposed in a same component.

A wireless communication function of the first device may be implemented via the antenna 1, the antenna 2, the mobile communication module 450, the wireless communication module 460, the modem processor, the baseband processor, and the like.

The antenna 1 and the antenna 2 are configured to: transmit and receive electromagnetic wave signals. Each antenna in the first device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 450 may provide a solution that includes wireless communication such as 2G, 3G, 4G, and 5G and that is applied to the first device. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering and amplification on the received electromagnetic wave, and transmit a processed electromagnetic wave to the modem processor for demodulation. The mobile communication module 450 may further amplify a signal modulated by the modem processor, and convert an amplified signal into an electromagnetic wave for radiation through the antenna 1. In some embodiments, at least some functional modules of the mobile communication module 450 may be disposed in the processor 410. In some embodiments, at least some functional modules of the mobile communication module 450 may be disposed in a same component as at least some modules of the processor 410.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to the loudspeaker 470A, the receiver 470B, or the like), or displays an image or a video through the display 494. In some embodiments, the modem processor may be an independent component. In some other embodiments, the modem processor may be independent of the processor 410, and is disposed in a same component as the mobile communication module 450 or another functional module.

The wireless communication module 460 may provide a solution that includes wireless communication such as a wireless local area network (wireless local area network, WLAN) (for example, a Wi-Fi network), Bluetooth BT, a global navigation satellite system (global navigation satellite system, GNSS), frequency modulation (frequency modulation, FM), a near field communication (near field communication, NFC) technology, and an infrared (infrared, IR) technology and that is applied to the first device. The wireless communication module 460 may be one or more components integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the to-be-sent signal, and convert a processed signal into an electromagnetic wave for radiation through the antenna 2.

In some embodiments, in the first device, the antenna 1 is coupled to the mobile communication module 450, and the antenna 2 is coupled to the wireless communication module 460, so that the first device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), and/or a satellite based augmentation system (satellite based augmentation system, SBAS). The first device may establish a communication connection to another device via the mobile communication module 450, and perform data transmission with the another device through the established communication connection. For example, screen content is projected onto the another device or screen content projected by the another device is received through the established communication connection.

The first device implements a display function via the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute a program instruction to generate or change display information. In embodiments of this application, the GPU may be configured to: perform conversion driving on display information required by a computer system, and provide a row scanning signal for the display, to control correct display of the display.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the first device may include one or N displays 494, where N is a positive integer greater than 1.

The first device may implement a photographing function via the ISP, the camera component 493, the video codec, the GPU, the display 494, the application processor, and the like.

The external memory interface 420 may be configured to connect to an external storage card, for example, a micro SD card, to extend a storage capability of the first device. The external storage card communicates with the processor 410 through the external memory interface 420, to implement a data storage function. For example, files such as music and a video are stored in the external storage card.

The internal memory 421 may be configured to store computer-executable program code, where the executable program code includes instructions. The internal memory 421 may include a program storage area and a data storage area. The program storage area may store an operating system, an application required by at least one function (for example, a sound playing function or an image playing function), and the like. The data storage area may store data (for example, audio data or a phone book) created when the first device is used, and the like. In addition, the internal memory 421 may include a high-speed random access memory, and may further include a non-volatile memory, for example, at least one magnetic disk storage component, a flash memory, or a universal flash storage (universal flash storage, UFS). The processor 410 runs the instructions stored in the internal memory 421 and/or the instructions stored in the memory disposed in the processor, to perform various function applications of the first device and data processing.

The first device may implement an audio function, for example, music playing or recording, via the audio module 470, the loudspeaker 470A, the receiver 470B, the microphone 470C, the application processor, and the like. For specific working principles and functions of the audio module 470, the loudspeaker 470A, the receiver 470B, and the microphone 470C, refer to descriptions in a conventional technology.

The sensor module 480 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 490 includes a power button, a volume button, and the like. The button 490 may be a mechanical button, or may be a touch button. The first device may receive a button input, and generate a button signal input related to a user setting and function control of the first device.

The motor 491 may generate a vibration prompt. The motor 491 may be configured to provide an incoming call vibration prompt and a touch vibration feedback. For example, touch operations performed on different applications (for example, photographing and audio playing) may correspond to different vibration feedback effects. The motor 491 may also correspond to different vibration feedback effects for touch operations performed on different areas of the display 494. Different application scenarios (for example, a time reminder, information receiving, an alarm clock, and a game) may also correspond to different vibration feedback effects. A touch vibration feedback effect may be further customized.

The indicator 492 may be an indicator lamp, and may be configured to indicate a charging status or a power change, or may be configured to indicate a message, a missed call, a notification, or the like.

The SIM card interface 495 is configured to connect to a SIM card. The SIM card may be inserted into the SIM card interface 495 or removed from the SIM card interface 495, to implement contact with or separation from the first device. The first device may support one or N SIM card interfaces, where N is a positive integer greater than 1. The SIM card interface 495 can support a nano-SIM card, a micro-SIM card, a SIM card, and the like. A plurality of cards may be simultaneously inserted into a same SIM card interface 495. The plurality of cards may be of a same type or different types. The SIM card interface 495 may also be compatible with different types of SIM cards. The SIM card interface 495 may also be compatible with an external storage card. The first device interacts with a network through the SIM card, to implement functions such as a call and data communication. In some embodiments, the first device uses an eSIM card, namely, an embedded SIM card. The eSIM card may be embedded into the first device, and cannot be separated from the first device.

It should be noted that the hardware modules included in the first device shown in FIG. 4 are merely described as examples, and do not limit a specific structure of the first device. For example, the first device may further include another functional module.

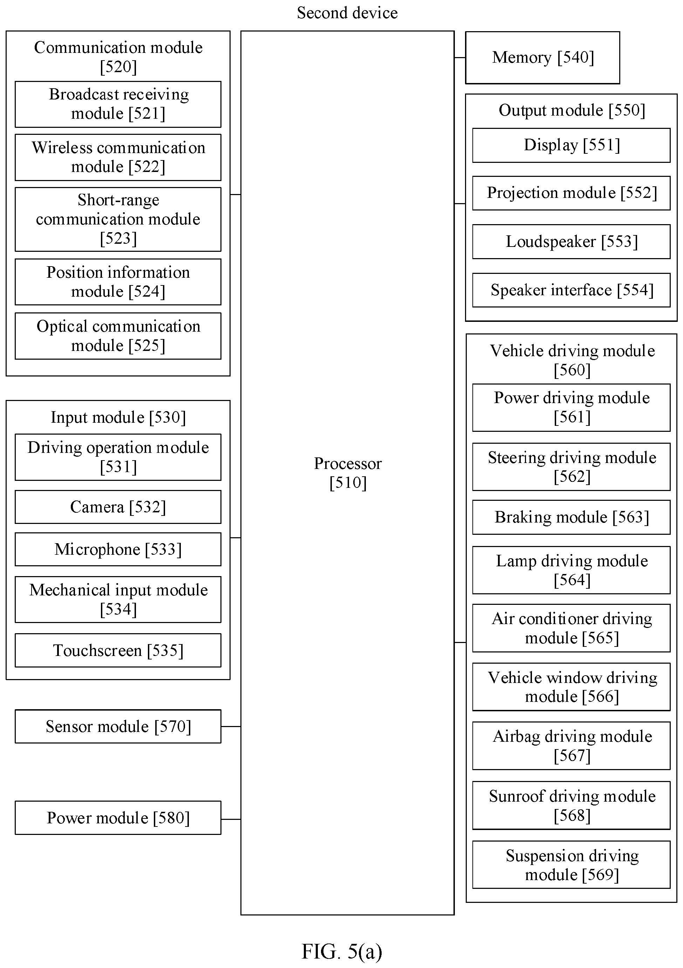

In an example, FIG. 5(a) is a diagram of a hardware structure of the second device by using an example in which the second device is the vehicle. As shown in FIG. 5(a), the vehicle may include a processor 510, a communication module 520, an input module 530, a memory 540, an output module 550, a vehicle driving module 560, a sensor module 570, a power module 580, and the like.

It may be understood that the structure shown in this embodiment constitutes no specific limitation on the vehicle. In some other embodiments, the vehicle may include more or fewer components than those shown in the figure, or combine some of the components, or split some of the components, or have different arrangements of the components. The components shown in the figure may be implemented by hardware, software, or a combination of the software and the hardware.

The processor 510 may include one or more processing units. For example, the processor 510 may include an application processor AP, a modem processor, a graphics processing unit GPU, an ISP, a controller, a memory, a video codec, a DSP, a baseband processor, and/or an NPU. Different processing units may be independent components, or may be integrated into one or more processors. The second device may process, via the processor 510, an image captured by a camera 532 or a user touch operation sensed by a touchscreen 535, to identify whether the user pays attention to an image displayed on a display 551 of the second device.

The controller may be a nerve center and a command center of the vehicle. The controller may complete instruction fetching according to an instruction, and generate an operation control signal, to control instruction execution.

In some embodiments, the processor 510 may include one or more interfaces. The interface may include an inter-integrated circuit I2C interface, an inter-integrated circuit sound I2S interface, a PCM interface, a UART interface, a MIPI, a GPIO interface, a USB interface, and/or the like.

It may be understood that an interface connection relationship between the modules shown in this embodiment is merely an example for description, and constitutes no limitation on the structure of the vehicle. In some other embodiments, the vehicle may alternatively use an interface connection manner different from that in the foregoing embodiment, or a combination of a plurality of interface connection manners.

The communication module 520 may include a broadcast receiving module 521, a wireless communication module 522, a short-range communication module 523, a position information module 524, and an optical communication module 525.

The broadcast receiving module 521 is configured to receive a broadcast signal or broadcast-related information from an external broadcast management server through a broadcast channel. A broadcast includes a radio broadcast or a television broadcast.

The wireless communication module 522 may be internally or externally coupled to the vehicle. The wireless communication module 522 may be one or more components integrating at least one communication processing module, and may send or receive a wireless signal through a communication network based on a wireless internet technology. The wireless internet technology includes a wireless local area network WLAN (for example, a Wi-Fi network), a digital living network alliance (Digital Living Network Alliance, DLNA), wireless broadband (Wireless Broadband, WiBro), worldwide interoperability for microwave access (Worldwide Interoperability for Microwave Access, WiMAX), high speed downlink packet access (High Speed Downlink Packet Access, HSDPA), high speed uplink packet access (High Speed Uplink Packet Access, HSUPA), long term evolution (long term evolution, LTE), 2G/3G/4G/5G, and the like. The communication module 522 may further receive a to-be-sent signal from the processor 510 and transmit the to-be-sent signal.

The short-range communication module 523 may use a technology like Bluetooth, radio frequency identification (RFID), infrared IR technology, ultra-wideband (UWB), ZigBee, a near field communication (NFC) technology, or a wireless USB (wireless universal serial bus). The short-range communication module 523 is used by the vehicle to communicate with an external device like the first device.

The position information module 524 is configured to obtain a vehicle position. For example, when using the position information module 524, the vehicle may receive a signal sent by a satellite of the BeiDou navigation satellite system BDS, to obtain the vehicle position.

The optical communication module 525 may include a light emitting unit and a light receiving unit. The light emitting unit may include at least one light emitting element, and is configured to convert an electrical signal into light. The light emitting element may be a light-emitting diode (LED). The light emitting unit may emit light to the outside through flickering of the light emitting element corresponding to a specified frequency. In some embodiments, the light emitting unit may include an array of a plurality of light emitting elements. In some embodiments, the light emitting unit may be integrated with a lamp disposed in the vehicle. For example, the light emitting unit may be a head lamp, a tail lamp, a stop lamp, a direction indicator lamp, and a side lamp. The light receiving unit may include a photodiode (PDP), and the photodiode may convert light into an electrical signal. For example, the light receiving unit may receive information about a preceding vehicle by using light emitted from a light source included in the preceding vehicle.

The input module 530 includes a driving operation module 531, a camera 532, a microphone 533, a mechanical input module 534, and a touchscreen 535.

The mechanical input module 534 is configured to receive an operation of the user on hardware machinery, including operations such as steering wheel control, throttle stepping, and brake stepping.

The driving operation module 531 is configured to perform reaction control on the operation received by the mechanical input module 534.

The camera 532 may include an image sensor and an image processing module, and may process a stationary image or a moving image obtained by the image sensor (for example, a CMOS or a CCD). The vehicle may implement a photographing function via the ISP, the camera 532, the video codec, the GPU, the display 551, the application processor, and the like, to detect whether the user pays attention to content displayed on the display 551. The ISP is configured to process data fed back by the camera 532. In some embodiments, the ISP may be disposed in the camera 532. A form and a quantity of cameras are not limited in embodiments of this application. It should be understood that a range of scenery that can be covered by one camera is usually represented by an angle, and this angle is referred to as a field angle of view (field angle of view, FOV) of a lens. In other words, the FOV is a range that can be covered by the lens, and an object beyond the range is not captured in the lens. In some embodiments, the FOV of the camera 532 can cover the user, to detect whether the user pays attention to the display 551 of the vehicle, that is, detect whether the user gazes at the display 551 of the vehicle. In some other embodiments, the camera 532 is configured to: detect a specific application display interface that is on the display 551 of the vehicle and that the user pays attention to, and transfer a detection result to the processor 510.

The microphone 533 is configured to: receive a voice input of the user, and process an external voice signal into electronic data. The electronic data obtained through processing may be transmitted to the processor 510.

The touchscreen 535 is also referred to as a "touch screen" or a "touch panel", and is an inductive liquid crystal display apparatus that can receive an input signal like a touch. When a graphic button on the screen is touched, a tactile feedback system on the screen may drive various connected apparatuses according to a pre-programmed program, to replace a mechanical button panel, and produce a vivid audio and video effect by using a liquid crystal display picture. As an input device, the touchscreen is currently a simplest, most convenient, and most natural human-machine interaction mode. In some embodiments, the touchscreen 535 sends a message to the processor 510 for processing in response to an operation of touching a specific position on the touchscreen 535 by the user to indicate attention.

The memory 540 may be configured to store computer-executable program code, where the executable program code includes instructions. The processor 510 runs the instructions stored in the memory 540, to perform various function applications of the vehicle and data processing. The memory 540 may include a program storage area and a data storage area.

The program storage area may store an operating system, an application required by at least one function (for example, a sound playing function or an image playing function), and the like. The data storage area may store data created when the vehicle is used, and the like. In addition, the memory 540 may include a high-speed random access memory, and may further include a non-volatile memory, for example, at least one magnetic disk storage component, a flash memory, or a universal flash storage (universal flash storage, UFS).

The output module 550 includes the display 551, a projection module 552, a loudspeaker 553, and a speaker interface 554.

The vehicle implements a display function via the GPU, the display 551, the application processor, and the like. The GPU is a microprocessor for image processing, and is connected to the display 551 and the application processor. The GPU is configured to: perform mathematical and geometric computation, and render an image. The processor 510 may include one or more GPUs that execute a program instruction to generate or change display information. The display 551 is configured to display an image, a video, and the like. The display 551 includes a display panel. In embodiments of this application, the GPU may be configured to: perform conversion driving on display information required by a vehicle system, and provide a row scanning signal for the display, to control correct display of the display.

The projection module 552 may be an HUD, an AR-HUD, or another device having a projection function. The head-up display (Head-Up Display, HUD) is a display apparatus that projects and displays an image to a front view of a driver. The head-up display mainly uses an optical reflection principle to project and display important related information on the windshield of a vehicle in a manner of a two-dimensional image. A height of the two-dimensional image is approximately horizontal to the eyes of the driver. When the driver looks forward through the windshield, the two-dimensional image projected by the HUD is displayed on a virtual image plane in front of the windshield. In comparison with using a conventional instrument and a central control screen, the driver does not need to lower the head when viewing the image projected and displayed by the HUD. This avoids switching between the image and a road surface, reduces crisis response time, and increases driving safety. An augmented reality (AR) head-up display (AR-HUD) proposed in recent years can fuse an AR effect projected and displayed by the HUD with real road surface information, to enhance obtaining of the road surface information by the driver, and implement functions such as AR navigation and AR warning.

The projection module 552 may be mounted above or inside a central console of a vehicle cockpit. The projection module usually includes a projector, a reflection mirror, a projection mirror, an adjustment motor, and a control unit. The control unit is an electronic device, and specifically, may be a conventional chip processor like a central processing unit (CPU) or a microprocessor (MCU). An imaging model may be preset in the projection module 552, or an imaging model preset in another component of the vehicle may be obtained. A parameter of the imaging model has an association relationship with human-eye position information captured by an internal capture apparatus of the vehicle, and the parameter can be calibrated based on the human-eye position information. Then, a projection image is generated based on environment information captured by an external capture apparatus of the vehicle, and is output on the projector.

The loudspeaker 553 and the speaker interface 554 may implement an audio playing function.

The vehicle driving module 560 is configured to control various operations on the vehicle, and includes a power driving module 561, a steering driving module 562, a braking module 563, a lamp driving module 564, an air conditioner driving module 565, a vehicle window driving module 566, an airbag driving module 567, a sunroof driving module 568, and a suspension driving module 569.

The power driving module 561 may perform electronic control on a power supply inside the vehicle. For example, when an engine based on a fossil fuel is used as a power source, the power driving module 561 may perform electronic control on the engine. When a motor is the power source, the power driving module 561 may control the motor.

The steering driving module 562 includes a steering apparatus, and may perform electronic control on the steering apparatus in the vehicle.

The braking module 563 may perform electronic control on a braking apparatus inside the vehicle. For example, the braking module 563 reduces a vehicle speed by controlling a brake located at a wheel. In another example, the braking module 563 may adjust a driving direction of the vehicle to the left or right via each brake located on a left wheel and a right wheel.

The lamp driving module 564 may control light intensity and a light direction by turning on or off lamps disposed inside and outside the vehicle.

The air conditioner driving module 565 may perform electronic control on an air conditioner in the vehicle. For example, when an internal temperature of the vehicle is high, the air conditioner driving module may control the air conditioner to provide cold air into the vehicle.

The vehicle window driving module 566 may perform electronic control on a vehicle window apparatus in the vehicle. For example, the vehicle window driving module 566 may control opening or closing of left and right vehicle windows of the vehicle.

The airbag driving module 567 may perform electronic control on an airbag apparatus in the vehicle. For example, the airbag driving module 567 may control an airbag to deploy in a dangerous situation.

The sunroof driving module 568 may perform electronic control on a sunroof apparatus in the vehicle. For example, the sunroof driving module 568 may control opening or closing of a sunroof.

The suspension driving module 569 may perform electronic control on a suspension apparatus. For example, when there is a curve on a road surface, the suspension driving module 569 may control the suspension apparatus to reduce vibration of the vehicle.

The sensor module 570 is configured to detect a signal related to running of the vehicle, and may include a crash sensor, a steering sensor, a speed sensor, a gradient sensor, a weight sensor, a heading sensor, a yaw sensor, a gyro sensor, a position module, a vehicle forward/backward motion sensor, a battery sensor, a fuel sensor, a tire sensor, a steering wheel rotation-based steering sensor, an in-vehicle temperature sensor, an in-vehicle humidity sensor, an ultrasonic sensor, an infrared sensor, a radar, and a lidar. The sensor module 570 may obtain sensing signals about, for example, crash information of the vehicle, driving direction information of the vehicle, vehicle position information (GPS information), vehicle angle information, vehicle speed information, vehicle acceleration information, vehicle tilt information, and vehicle forward/reverse motion information, and battery information, fuel information, tire information, vehicle lamp information, temperature information in the vehicle, humidity information in the vehicle, and steering wheel angle information.

The power module 580 is configured to: connect to a power supply, receive an input of the power supply, and supply power to the processor 510, the communication module 520, the input module 530, the memory 540, the output module 550, the vehicle driving module 560, the sensor module 570, and the like. In some embodiments, the power module 580 may alternatively be disposed in the processor 510.

It may be understood that the structure shown in this embodiment of this application constitutes no specific limitation on the vehicle. The vehicle may have more or fewer components than those shown in FIG. 5(a), or may combine two or more components, or may have a different component configuration. The components shown in FIG. 5(a) may be implemented in hardware including one or more signal processing and/or application-specific integrated circuits, software, or a combination of the hardware and the software.

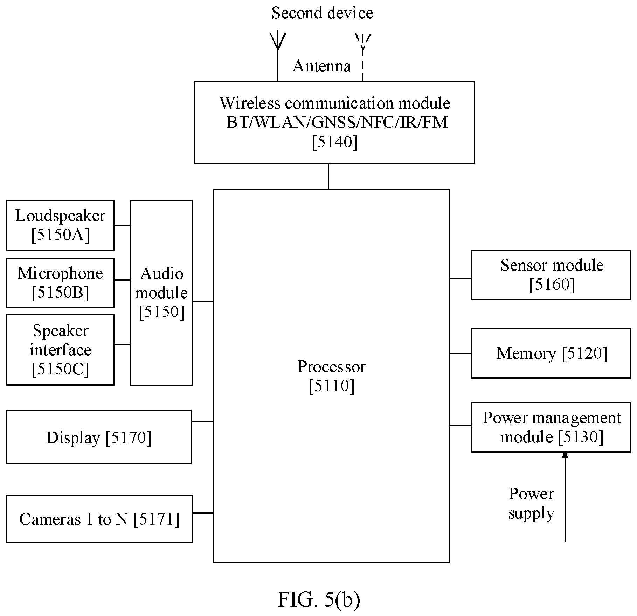

The second device may alternatively be a terminal device like a head unit, a smart television, or a notebook computer. In an example, FIG. 5(b) is a diagram of a hardware structure of the second device by using an example in which the second device is the head unit, the smart television, or the notebook computer. As shown in FIG. 5, the head unit, the smart television, or the notebook computer may include a processor 5110, a memory 5120, a power management module 5130, a wireless communication module 5140, an audio module 5150, a loudspeaker 5150A, a microphone 5150B, a speaker interface 5150C, a sensor module 5160, a display 5170, a camera 5171, and the like.

It may be understood that the structure shown in this embodiment constitutes no specific limitation on the head unit, the smart television, or the notebook computer. In some other embodiments, the head unit, the smart television, or the notebook computer may include more or fewer components than those shown in the figure, or combine some of the components, or split some of the components, or have different arrangements of the components. The components shown in the figure may be implemented by hardware, software, or a combination of the software and the hardware.

The processor 5110 may include one or more processing units. For example, the processor 510 may include an application processor AP, a modem processor, a graphics processing unit GPU, an ISP, a controller, a memory, a video codec, a DSP, a baseband processor, and/or an NPU. Different processing units may be independent components, or may be integrated into one or more processors. The second device may process, via the processor 5110, an image captured by the camera 5171, to identify whether the user pays attention to an image displayed on the display 5170 of the second device.

A memory may be further disposed in the processor 5110, and is configured to store instructions and data. In some embodiments, the memory in the processor 5110 is a cache. The memory may store an instruction or data just used or cyclically used by the processor 5110. If the processor 5110 needs to use the instruction or the data again, the processor may directly invoke the instruction or the data from the memory. This avoids repeated access, and reduces waiting time of the processor 5110, thereby improving system efficiency. In some embodiments, the processor 5110 may include one or more interfaces. The interface may include an inter-integrated circuit I2C interface, an inter-integrated circuit sound I2S interface, a PCM interface, a UART interface, a MIPI, a GPIO interface, a USB interface, and/or the like.

It may be understood that an interface connection relationship between the modules shown in this embodiment is merely an example for description, and constitutes no limitation on the structure of the head unit, the smart television, or the notebook computer. In some other embodiments, the head unit, the smart television, or the notebook computer may alternatively use an interface connection manner different from that in the foregoing embodiment, or a combination of a plurality of interface connection manners.

The memory 5120 may be configured to store computer-executable program code, where the executable program code includes instructions. The processor 5110 runs the instructions stored in the memory 5120, to perform various function applications of the notebook computer and data processing. For example, in embodiments of this application, the processor 5110 may execute the instructions stored in the memory 5120, and the memory 5120 may include a program storage area and a data storage area.

The program storage area may store an operating system, an application required by at least one function (for example, a sound playing function or an image playing function), and the like. The data storage area may store data created in a use process, and the like. In addition, the memory 5120 may include a high-speed random access memory, and may further include a non-volatile memory, for example, at least one magnetic disk storage component, a flash memory, or a universal flash storage (universal flash storage, UFS).

The power management module 5130 is configured to: connect to a power supply, receive an input of the power supply, and supply power to the processor 5110, the memory 5120, the display 5170, the camera 5171, the wireless communication module 5140, and the like. In some embodiments, the power management module 5130 may alternatively be disposed in the processor 5110.

A wireless communication function may be implemented via an antenna, the wireless communication module 5140, and the like. The wireless communication module 5140 may provide a solution including wireless communication such as a wireless local area network WLAN (for example, a Wi-Fi network), Bluetooth BT, a global navigation satellite system GNSS, frequency modulation FM, a near field communication NFC technology, an infrared IR technology, and a mobile cellular network.

The wireless communication module 5140 may be one or more components integrating at least one communication processing module. The wireless communication module 5140 receives an electromagnetic wave through the antenna 2, performs frequency modulation and filtering processing on an electromagnetic wave signal, and sends a processed signal to the processor 5110. The wireless communication module 5140 may further receive a to-be-sent signal from the processor 5110, perform frequency modulation and amplification on the to-be-sent signal, and convert a processed signal into an electromagnetic wave for radiation through the antenna 2. In some embodiments, the antenna is coupled to the wireless communication module 5140, so that the head unit, the smart television, or the notebook computer can communicate with a network and another device by using a wireless communication technology.

The head unit, the smart television, or the notebook computer may implement a display function via the GPU, the display 5170, the application processor, and the like. The GPU is a microprocessor for image processing, and is connected to the display 5170 and the application processor. The GPU is configured to: perform mathematical and geometric computation, and render an image. The processor 5110 may include one or more GPUs that execute a program instruction to generate or change display information. The display 5170 is configured to display an image, a video, and the like. The display 5170 includes a display panel. In embodiments of this application, the GPU may be configured to: perform conversion driving on display information required by a system, and provide a row scanning signal for the display, to control correct display of the display.

In some embodiments, a touchscreen may be integrated with the display 5170 to implement input and output functions. The touchscreen, also referred to as a touch panel, and may collect a touch operation performed by the user on or near the touchscreen (for example, an operation performed by the user on or near the touchscreen by using any appropriate object or accessory like a finger or a stylus), and drive a corresponding connection apparatus according to a preset program. In some embodiments, the touchscreen sends a message to the processor 5110 for processing in response to an operation of touching a specific position on the touchscreen by the user to indicate attention.

The head unit, the smart television, or the notebook computer may implement a photographing function via the ISP, the camera 5171, the video codec, the GPU, the display 5170, the application processor, and the like. The ISP is configured to process data fed back by the camera 5171. In some embodiments, the ISP may be disposed in the camera 5171.

In some embodiments, the camera 5171 is configured to: detect an application display interface that is on the display 5171 of the head unit, the smart television, or the notebook computer and that the user pays attention to, and transfer a detection result to the processor 5110.

The head unit, the smart television, or the notebook computer may implement an audio function, for example, music playing or recording, via the audio module 5150, the loudspeaker 5150A, the microphone 5150B, the speaker interface 5150C, the application processor, and the like.

The sensor module 5160 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application constitutes no specific limitation on the head unit, the smart television, or the notebook computer. The head unit, the smart television, or the notebook computer may have more or fewer components than those shown in FIG. 5(b), or may combine two or more components, or may have a different component configuration. The components shown in FIG. 5(b) may be implemented in hardware including one or more signal processing and/or application-specific integrated circuits, software, or a combination of the hardware and the software.

The following describes software system architectures of the first device and the second device. For example, software systems of the first device and the second device provided in embodiments of this application may use a layered architecture, an event-driven architecture, a microkernel architecture, a microservice architecture, a cloud architecture, or the like. For example, the software system may include but is not limited to operating systems such as Symbian^{®} (Symbian), Android^{®} (Android), Windows^{®}, Apple^{®} (iOS), Blackberry^{®} (Blackberry), and Harmony (Harmony). This is not limited in this application.

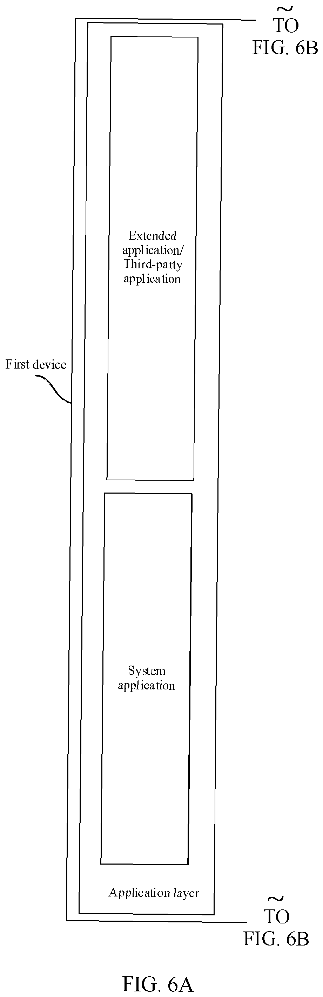

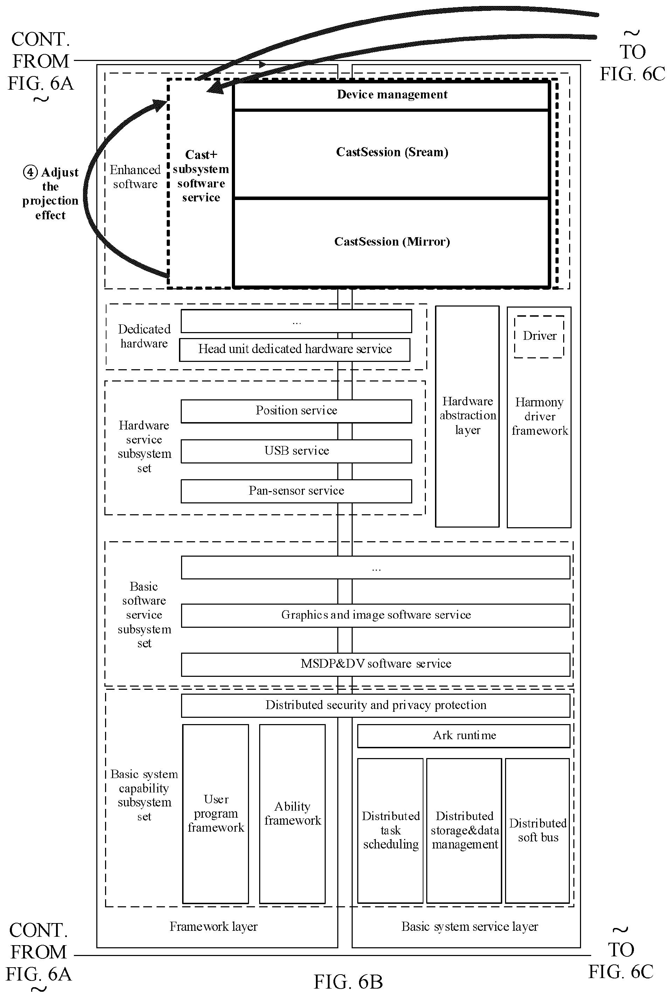

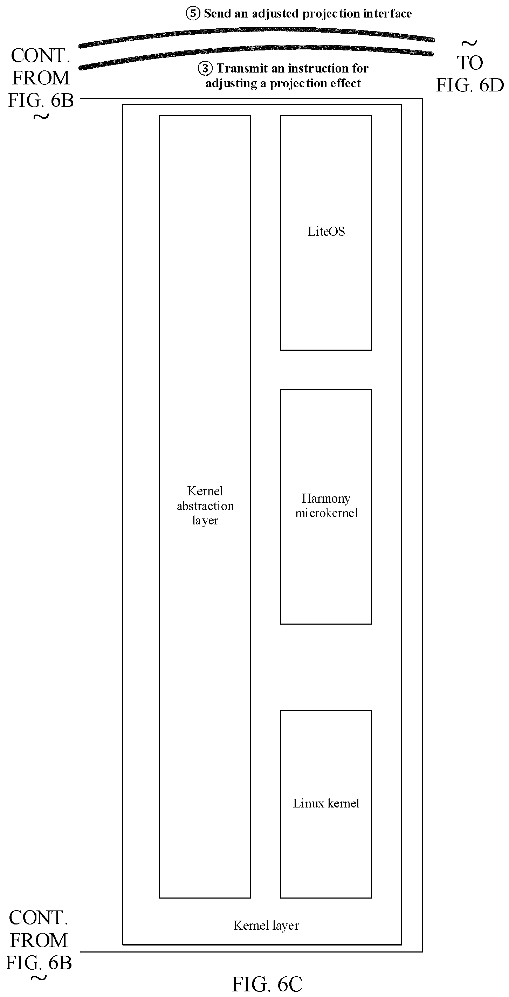

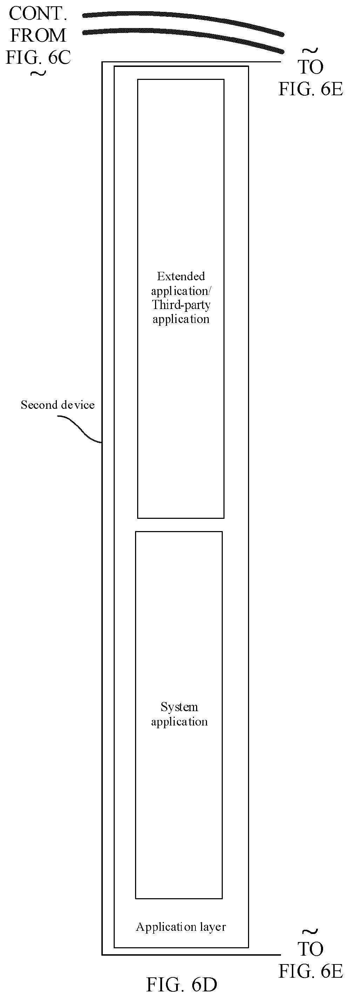

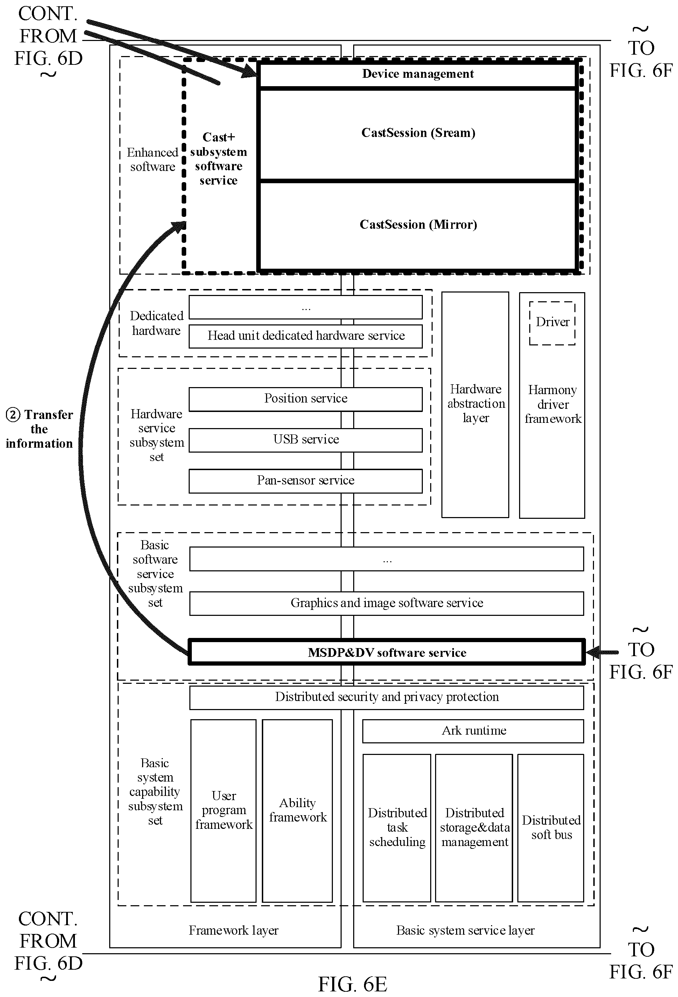

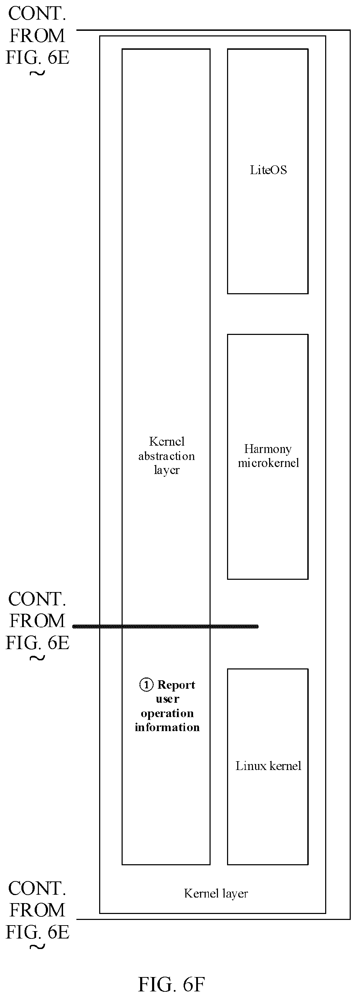

FIG. 6A to FIG. 6F are a specific diagram of software interaction performed when the first device performs projection onto the second device according to an embodiment of this application by using the Harmony (Harmony) operating system with a layered architecture as an example. In the layered architecture, software is divided into several layers. Each layer has a clear role and task. The layers communicate with each other through a software interface. As shown in FIG. 6A to FIG. 6F, software structures of the first device and the second device may be divided into four layers from bottom to top: a kernel layer, a system basic service layer, an application framework layer (a framework layer for short), and an application program layer (the application layer for short).

The Harmony system uses a multi-kernel design, and optionally includes a Linux kernel, a Harmony microkernel, and LiteOS. Through this design, appropriate system kernels can be selected for devices with different device capabilities. The kernel layer further includes a kernel abstraction layer (Kernel Abstraction Layer) that provides basic kernel capabilities for another Harmony layer, such as process management, thread management, memory management, file system management, network management, and peripheral management.

The system basic service layer is a core capability set of the Harmony system, and supports the Harmony system in providing a service for an application service through the framework layer in a multi-device deployment scenario. This layer optionally includes a basic system capability subsystem set, a basic software service subsystem set, a Harmony driver framework (HDF), a hardware abstraction layer (HAL), a hardware service subsystem set, a dedicated hardware service subsystem, and an enhanced software service subsystem set.

The basic system capability subsystem set provides a basic capability for an operation like running, scheduling, or migration of a distributed application on a plurality of devices provided with Harmony systems, and includes a distributed soft bus, distributed data management and file management, distributed task scheduling, Ark runtime, and distributed security and privacy protection. The Ark runtime provides C/C++/JavaScript multi-language runtime and a basic system class library, and also provides runtime for a Java program (namely, a part developed in a Java language in an application or at the framework layer) that is staticized via an Ark compiler.

The basic software service subsystem set provides the Harmony system with a common and universal software service, and includes subsystems such as an MSDP&DV software service, a graphics and image software service, a distributed media software service, a multimodal input software service, and an event notification software service. MSDP&DV (Multimodal Sensor Data Platform&Device Virtualization) is a comprehensive sensor information processing and device virtualization platform, and mainly processes sensor information. For example, in embodiments of this application, user operation information obtained by a sensor like a camera or a touchscreen may be processed through MSDP&DV. In addition, the first device and the second device may complete projection display in a projection process based on the graphics and image software service.

The Harmony driver framework (HDF) and the hardware abstraction layer (HAL) lay a foundation for an open hardware ecosystem of the Harmony system, provide hardware capability abstraction for hardware, and provide development frameworks and running environments for various peripheral drivers.

The hardware service subsystem set provides the Harmony system with a common and adaptive hardware service, and includes hardware service subsystems such as a pan-sensor service, a position service, a power supply service, a USB service, and a biometric recognition service.

The dedicated hardware service subsystem provides the Harmony system with differentiated hardware services for different devices, and optionally includes subsystems such as a tablet dedicated hardware service, a vehicle dedicated hardware service, a wearable dedicated hardware service, and an IoT dedicated hardware service.

The enhanced software service subsystem set provides the Harmony system with differentiated capability-enhanced software services for different devices, and includes subsystems such as a cast+subsystem software service, a tablet business software service, a smart screen business software service, a vehicle business software service, and an IoT business software service. The enhanced software service subsystem set may be tailored at a granularity of a subsystem based on deployment environments of different device forms. Each subsystem may also be tailored at a granularity of a function. The cast+subsystem software service is used for projection, and includes three parts: CastSession (Mirror), CastSession (Stream), and device management. A device management module is mainly configured to: detect a projection request, establish a connection between projection devices, perform authentication management between the projection devices, and perform status management (for example, connection success or disconnection) between the projection devices. CastSession (Stream) is mainly responsible for projection control, and includes a cast-server (a projection server module), a cast-client (a projection client module), cast-control (a projection control module), and a cast-render (a projection rendering module). CastSession (Mirror) is used to manage projected specific content, and includes a real time streaming protocol (Real Time Streaming Protocol, RTSP) module, a reverse control module (reverse control of projection, namely, interchangeable roles between the projection devices), a video module (responsible for video encoding and decoding), and audio module (responsible for audio encoding and decoding).

In embodiments of this application, in a process in which the first device performs projection onto the second device, the second device may detect whether the user pays attention to a display interface (referred to as a projection interface) that is of an application on the first device and that is synchronously displayed on the second device, and send, to the first device, a corresponding instruction for adjusting a projection effect. In this way, the first device adjusts the projection effect of the display interface of the application. An input/output device driver or a sensor driver (for example, the camera or the touchscreen) of the second device may detect whether the user pays attention to the projection interface displayed on the second device. For example, the user does not gaze at the projection interface on the second device, and the camera of the second device detects user operation information and transfers the user operation information to the MSDP&DV software service in the basic software service subsystem set (as shown in step 1 in FIG. 6A to FIG. 6F); the MSDP&DV software service transfers the information to the cast+subsystem software service in the enhanced software subsystem set of the second device (as shown in step 2 in FIG. 6A to FIG. 6F); the cast+subsystem of the second device sends, to the cast+subsystem of the first device, an instruction for adjusting a projection effect (as shown in step 3 in FIG. 6A to FIG. 6F); the cast+subsystem of the first device adjusts the projection effect, that is, adjusts a configuration parameter of the display interface of the application on the first device and refreshes the display interface (as shown in step 4 in FIG. 6A to FIG. 6F); the cast+subsystem of the first device encodes the refreshed display interface of the application into a standard video stream via the video module and the audio module in CastSession (Mirror), and sends the standard video stream to the cast+subsystem of the second device again (as shown in step 5 in FIG. 6A to FIG. 6F); and the second device displays and renders the standard video stream via the cast-render (the projection rendering module), and synchronously displays an effect obtained through adjustment.

It should be noted that FIG. 6A to FIG. 6F are the diagram of software interaction between the devices during projection by using only the Harmony system with the layered architecture as an example. Specific architectures of the software systems of the first device and the second device are not limited in this application, and the first device and the second device may alternatively use a software system with another architecture.

For ease of understanding, the following explains and describes some technical terms in embodiments of this application.

A bitrate (bitrate, BR) is a quantity of data bits transmitted in a unit time, for example, a quantity of bits (bits) transmitted in the unit time, and therefore the bitrate is also referred to as a bit rate. Usually, a unit of the bitrate is bit per second (bps). The bitrate may be understood as a sampling rate. Usually, a larger sampling rate indicates higher precision and more closeness between a processed file and an original file. However, because a file size is directly proportional to the sampling rate, almost all encoding formats focus on how to achieve minimum distortion with a lowest bitrate. Around this core, encoding formats such as a variable bitrate (variable bitrate, VBR), an average bitrate (average bitrate, ABR), and a constant bitrate (constant bitrate, CBR) are derived.

A frame rate (frames per second, FPS) is a quantity of frames of photographs in one second, and may also be understood as a quantity of times that a graphics processing unit can perform refreshing per second. The frame rate usually affects picture smoothness. The frame rate is directly proportional to picture smoothness. Specifically, a higher frame rate indicates smoother pictures, and a lower frame rate indicates more jittering pictures. Due to special physiological structures of human eyes, usually, if a frame rate of pictures is greater than 16 fps, humans consider that the pictures are coherent. This phenomenon is referred to as persistence of vision.

Resolution indicates a quantity of pixels that can be displayed in a unit area. The resolution is used to reflect display precision. Usually, a larger quantity of pixels that can be displayed in the unit area indicates a finer picture, and a smaller quantity of pixels that can be displayed in the unit area indicates a rougher picture. Frequently used resolution includes 1080p (1920×1080), 720p (1280×720), and 360p (600×360).

Generally, when a bitrate is constant, the resolution is inversely proportional to definition. Specifically, higher resolution indicates a less clear image, and lower resolution indicates a clearer image. When the resolution is constant, the bitrate is directly proportional to the definition. Specifically, a higher bitrate indicates a clearer image, and a lower bitrate indicates a less clear image.

Video encoding is a manner of converting a file of a video format into a file of another video format by using a specific compression technology. For example, a standard like H.261, H.263, H.263+, H.263++, H.264, or H.265/HEVC may be used for video encoding. Video decoding is a reverse process of video encoding. For descriptions of different video encoding standards, a specific video encoding process, and a specific video decoding process, refer to explanations and descriptions in a conventional technology. Details are not described in this application.

In an existing projection technology, after the first device projects a display interface of an application on the first device onto the second device for synchronous display, regardless of whether a person pays attention to a projection interface displayed on the second device, the first device continuously encodes and generates a video stream (including a video picture and an audio) and sends the video stream to the second device for decoding, rendering, and display. Consequently, power of the first device is continuously consumed, affecting a battery life of the first device. However, if display interfaces of a plurality of applications on the first device are projected onto the second device for display, when the user pays attention to one of a plurality of projection interfaces displayed on the second device, the second device does not make distinction, and display effects of the plurality of projection interfaces are the same. However, the user usually pays attention to only one of the projection interfaces at a same time, and a display interface that is of an application on the first device and that the user does not pay attention to still continuously generates a video stream. This causes a waste of resources. In addition, a display effect of a display interface that is of an application on the first device and that the user pays attention to is not adjusted. This degrades visual experience of the user.

To resolve the foregoing problems, embodiments of this application provide a projection method. According to the method, when the first device performs projection onto the second device, the first device adaptively adjusts a projection effect based on whether the user pays attention to the projection interface displayed on the second device. This reduces power consumption of the first device, and increases a battery life and visual experience of the user.

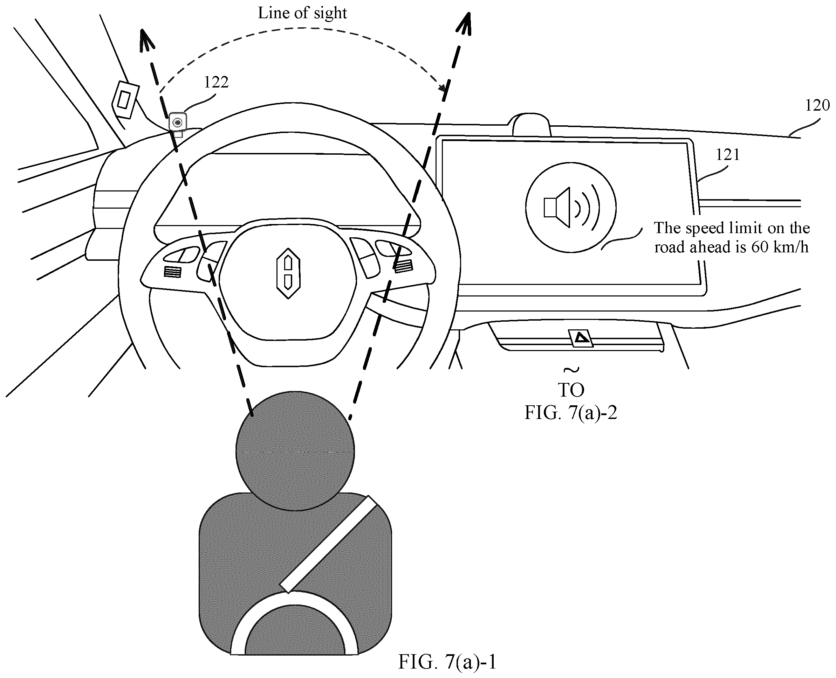

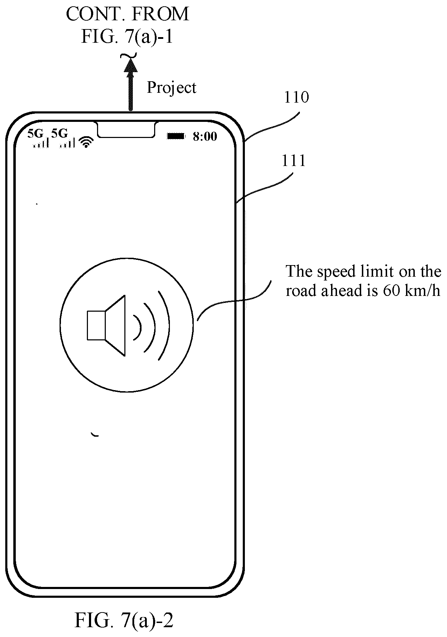

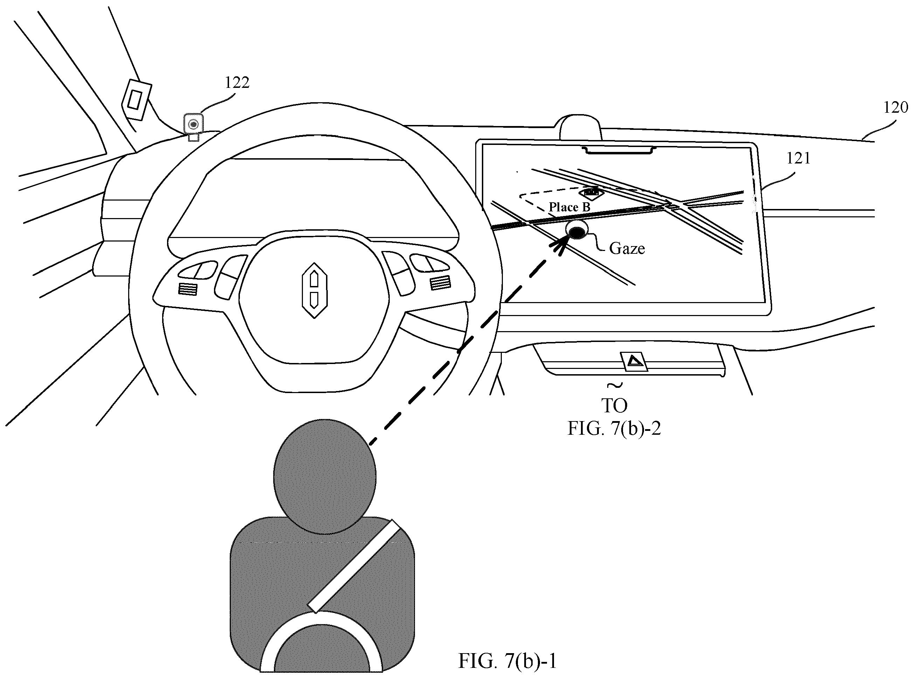

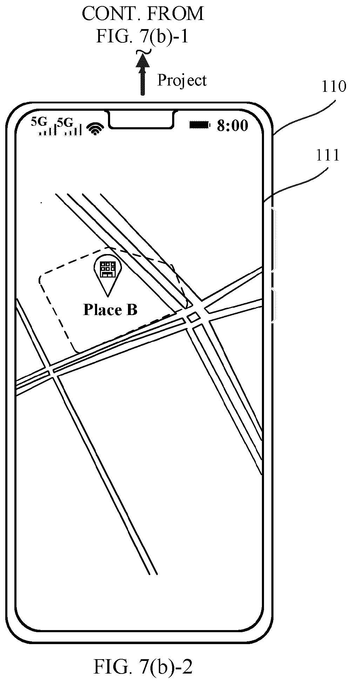

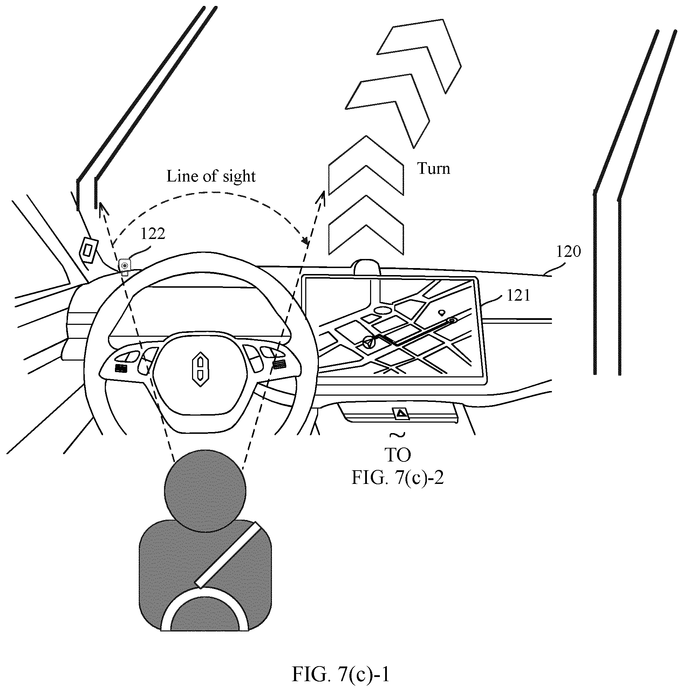

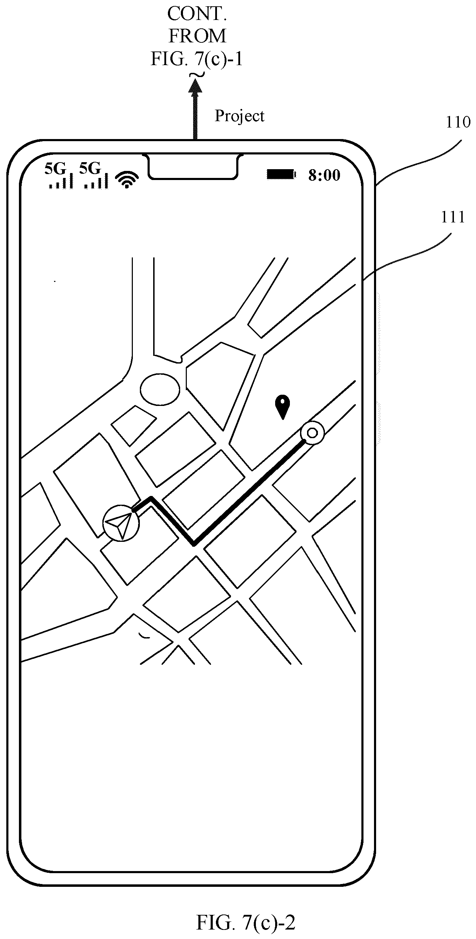

FIG. 7(a)-1 to FIG. 7(c)-2 are diagrams of several scenarios in which a smartphone performs projection onto a vehicle according to an embodiment of this application. In an initial situation, as shown in FIG. 1A and FIG. 1B, after a projection communication connection is successfully established between the smartphone 110 and the vehicle 120, the display 111 of the smartphone 110 displays a display interface of a map navigation application, and the display 121 of the vehicle 120 synchronously displays the display interface that is of the map navigation application and that is displayed on the display 111 of the smartphone 110, namely, a projection interface.

Refer to FIG. 7(a)-1 and FIG. 7(a)-2. A user usually pays attention to a road condition ahead for a long time in a process of focused driving. When the camera 122 detects that the user does not gaze at the projection interface on the display 121 of the vehicle 120, the vehicle 120 sends, to the smartphone 110, an instruction for adjusting a projection effect, the smartphone 110 stops encoding of a video picture on the display interface of the map navigation application according to the instruction, the display 111 does not display the video picture (that is, is screen-off), and the display 121 does not synchronously display the video picture either. An audio is still normally encoded and a bitstream is sent to the vehicle 120 for broadcasting, that is, voice navigation continues. For example, the vehicle 120 still synchronously broadcasts an audio "The speed limit on the road ahead is 60 km/h" sent by the smartphone 110.

In a possible implementation, after the vehicle 120 sends, to the smartphone 110, the instruction for adjusting the projection effect, the smartphone 110 does not immediately stop encoding of the video picture on the display interface of the map navigation application, but continues to encode a specific quantity of frames of video pictures, for example, 10 frames, and then stops encoding of the video picture on the display interface of the map navigation application, to avoid excessive abruptness. The quantity of frames that continue to be encoded is not limited in this application.

It should be understood that FIG. 7(a)-1 and FIG. 7(a)-2 show only that the smartphone 110 stops encoding of the video picture on the display interface of the map navigation application. In a possible implementation, the smartphone 110 may alternatively stop encoding of the video picture and the audio on the display interface of the map navigation application, to further reduce power consumption of the smartphone 110.

To avoid excessively stiff picture screen off, the display 111 in FIG. 7(a)-1 and FIG. 7(a)-2 may be screen-off gradually from bright to dark, and correspondingly the display 121 is also synchronously screen-off gradually from bright to dark. The display 111 may alternatively be quickly screen-off and the display 121 is synchronously screen-off. This is not limited in this application.

It should be noted that, if the display 121 of the vehicle 120 performs display in blocks, that is, a part of the display 121 synchronously displays the display interface of the map navigation application on the display 111 of the smartphone 110, and another part of the display displays an application display interface like music playing, the display 121 does not need to be screen-off, and needs only to asynchronously display the display interface of the map navigation application. This is not limited in this application.

In a possible implementation, the instruction that is for adjusting the projection effect and that is sent by the vehicle 120 is not necessarily for stopping encoding of the video picture, but may be for reducing at least one of a bitrate, a frame rate, or resolution of the video picture corresponding to the display interface of the map navigation application, and specifically, may be for reducing, according to a specified preset scenario rule, at least one of the bitrate, the frame rate, or the resolution of the video picture corresponding to the display interface of the map navigation application.

The preset scenario rule may be a bitrate, frame rate, and resolution reduction rule formulated based on application categories to which different application display interfaces belong. For example, for an application of a video music category, fineness of a display picture needs to be first ensured, then picture smoothness needs to be ensured, and finally encoding and sampling precision and a distortion degree need to be considered. Therefore, in consideration of all influencing factors, encoding importance is: bitrate<frame rate<resolution. For another example, for an application of an office photograph category, because most pictures are stationary pictures and do not need to be frequently refreshed, a frame rate is relatively not so important, but fineness of a display picture still needs to be ensured, and then a distortion degree cannot be excessively high. In this case, encoding importance is: frame rate<bitrate<resolution. For still another example, for a game video, a picture scene changes and needs to be frequently refreshed. If a frame rate is excessively low, the user perceives obvious frame freezing. Therefore, the frame rate needs to be first ensured, and fineness of a game picture also needs to be ensured. In this case, encoding importance is: bitrate<resolution<frame rate.

For example, the map navigation application shown in FIG. 7(a)-1 and FIG. 7(a)-2 belongs to the video music category. The smartphone 110 may first reduce a bitrate of the display interface of the map navigation application to a lowest-level bitrate, then reduce a frame rate of the display interface to a lowest-level frame rate, and finally reduce resolution of the display interface to lowest-level resolution. In a reduction process, the display 121 synchronously displays a picture display effect of the display interface of the map navigation application on the display 111 in real time or synchronously displays a final effect after the smartphone 110 completes reduction. Generally, with reduction of the bitrate, the frame rate, and the resolution, the user can clearly perceive that definition of the video picture is reduced. In addition, the smartphone 110 may reduce only the bitrate of the display interface of the map navigation application to the lowest-level bitrate, or reduce only the frame rate of the display interface of the map navigation application to the lowest-level frame rate, or reduce only the resolution of the display interface of the map navigation application to the lowest-level resolution, or reduce any two of the bitrate, the frame rate, and the resolution. This is not limited in this application.

Refer to a change from FIG. 7(a)-1 to FIG. 7(b)-2. The user wants to view the projection interface of the map navigation application on the display 121 of the vehicle 120. When the camera 122 detects that the user gazes at the projection interface of the map navigation application on the display 121 of the vehicle 120, the vehicle 120 sends, to the smartphone 110, an instruction for adjusting a projection effect, the smartphone 110 performs video encoding and audio encoding on the display interface of the map navigation application according to the instruction and transmits a bitstream to the vehicle 120, the display 111 of the smartphone 110 displays the display interface of the map navigation application and synchronizes the display interface to the display 121 of the vehicle 120 for display.

It should be understood that, to avoid a misjudgment caused by a random change of a line of sight of the user, the camera 122 generally requires specific duration for detecting that the user gazes at the projection interface of the map navigation application on the display 121 of the vehicle 120. However, in a driving scenario, gaze duration cannot be set to be excessively long for safety. For example, the duration may be set to 0.5 seconds. This is not limited in embodiments of this application.

It should be noted that, if the vehicle 120 shown in FIG. 7(a)-1 and FIG. 7(a)-2 stops only encoding of the video picture on the display interface of the map navigation application, in FIG. 7(b)-1 and FIG. 7(b)-2, only encoding of the video picture needs to be restarted, and the audio is still continuously encoded. If the vehicle 120 previously stops encoding of the video picture and the audio on the display interface of the map navigation application, encoding of the video picture and the audio needs to be restarted.

For another example, the vehicle 120 previously reduces one or more of the bitrate, the frame rate, and the resolution of the display interface of the map navigation application according to the specified preset scenario rule. In this case, correspondingly, the vehicle 120 may also increase the one or more of the bitrate, the frame rate, and the resolution of the display interface of the map navigation application according to the specified preset scenario rule. For example, the map navigation application belongs to the video music category, and encoding importance is: bitrate<frame rate<resolution. The smartphone 110 may first increase the resolution of the display interface of the map navigation application to highest-level resolution, then increase the frame rate of the display interface to a highest-level frame rate, and finally increase the bitrate of the display interface to a highest-level bitrate. In an increase process, the display 121 synchronously displays the picture display effect of the display interface of the map navigation application on the display 111 in real time or synchronously displays the final effect after the smartphone 110 completes reduction. Usually, with increase of the bitrate, the frame rate, and the resolution, the user clearly perceives that the definition of the video picture is increased.

In addition, the smartphone 110 may increase only the bitrate of the display interface of the map navigation application to the highest-level bitrate, or increase only the frame rate of the display interface of the map navigation application to the highest-level frame rate, or increase only the resolution of the display interface of the map navigation application to the highest-level resolution, or may increase any two of the bitrate, the frame rate, and the resolution.

It should be understood that power consumption required by the smartphone 110 to increase only one of the bitrate, the frame rate, or the resolution of the display interface of the map navigation application to a highest level is lower than power consumption required by the smartphone to increase all of the bitrate, the frame rate, and the resolution to highest levels shown in FIG. 7(b)-1 and FIG. 7(b)-2. A trade-off can be made between reduction of power consumption and increase of the definition of the video picture subjectively perceived by the user. Adjustment of the one or more of the bitrate, the frame rate, and the resolution is dynamically set. This is not limited in this application.

Refer to a comparison change among FIG. 7(a)-1 to FIG. 7(c)-2. An initial scenario is shown in FIG. 7(a)-1 and FIG. 7(a)-2. The user does not pay attention to the projection interface that is of the map navigation application and that is displayed on the display 121. The map navigation application on the smartphone 110 learns, through calculation in a background, that a right turn needs to be performed at a close distance ahead. The smartphone 110 restarts encoding of the video picture for the display interface of the map navigation application, and transmits a bitstream of the video picture and a bitstream of the audio to the vehicle 120. The display 111 of the smartphone 110 displays the display interface of the map navigation application and synchronizes the display interface to the display 121 of the vehicle 120 for display (FIG. 7(c)-1 and FIG. 7(c)-2). This facilitates view by the user with convenience, and ensures safety during a turn.

It should be noted that the right turn is merely an example of the emergency event in FIG. 7(c)-1 and FIG. 7(c)-2, and the emergency event may alternatively be another road condition navigation event, for example, any emergency situation encountered in a driving process, for example, emergency braking, an emergency stop, emergency acceleration, or emergency avoidance. This is not limited in embodiments of this application.

In the scenario shown in FIG. 7(c)-1 and FIG. 7(c)-2, alternatively, the vehicle 120 may respond to the emergency event, namely, the right turn, and the vehicle 120 sends, to the smartphone 110, an instruction for restoring a projection effect. The smartphone 110 restarts encoding of the video picture for the display interface of the map navigation application according to the instruction, and transmits the bitstream of the video picture and the bitstream of the audio to the vehicle 120. The display 111 of the smartphone 110 displays the display interface of the map navigation application and synchronizes the display interface to the display 121 of the vehicle 120 for display. This is not limited in embodiments of this application.

Optionally, after the emergency event is responded to, if the user still does not pay attention to the projection interface synchronously displayed on the display 121, a projection scenario may be restored to the scenario shown in FIG. 7(a)-1 and FIG. 7(a)-2; or if the user pays attention to the projection interface synchronously displayed on the display 121, the projection scenario may be restored to the scenario shown in FIG. 7(b)-1 and FIG. 7(b)-2.

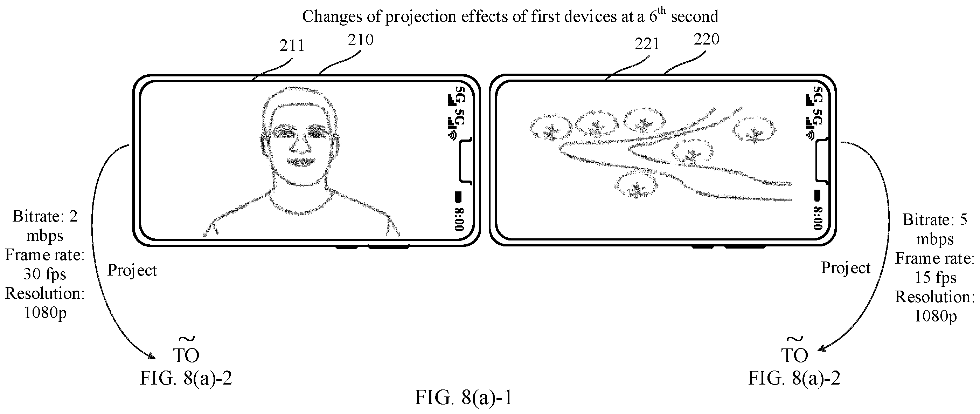

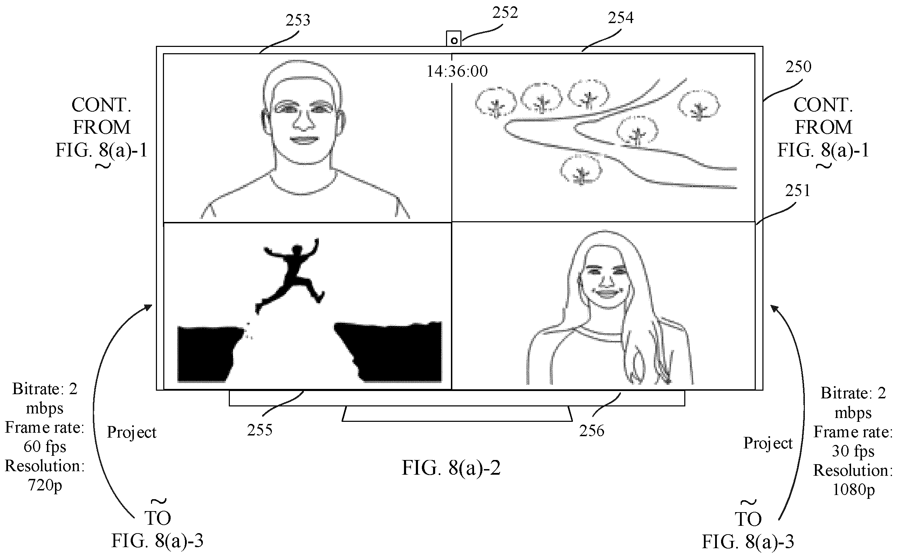

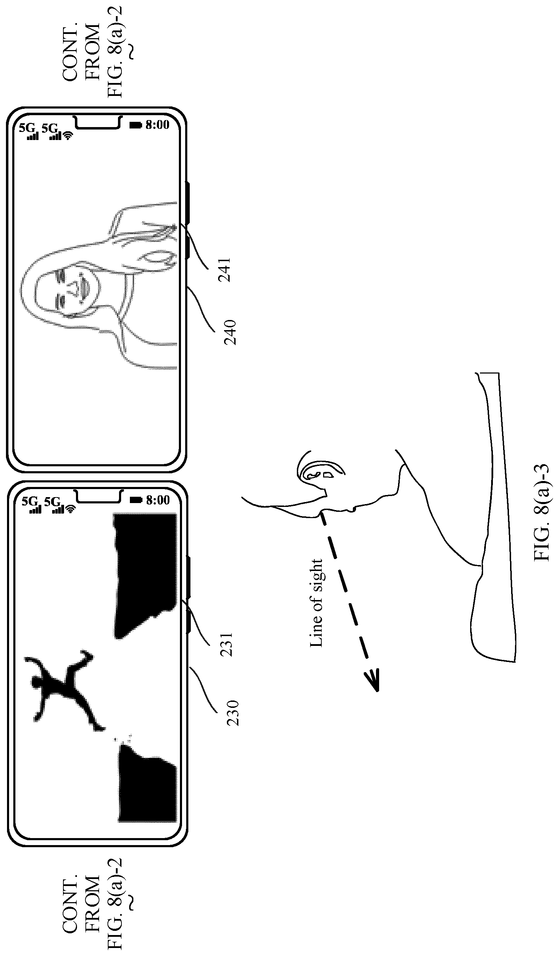

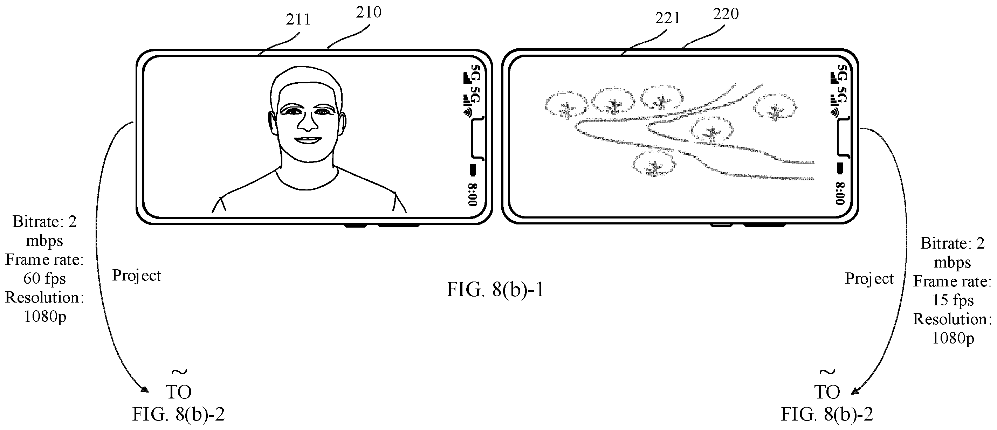

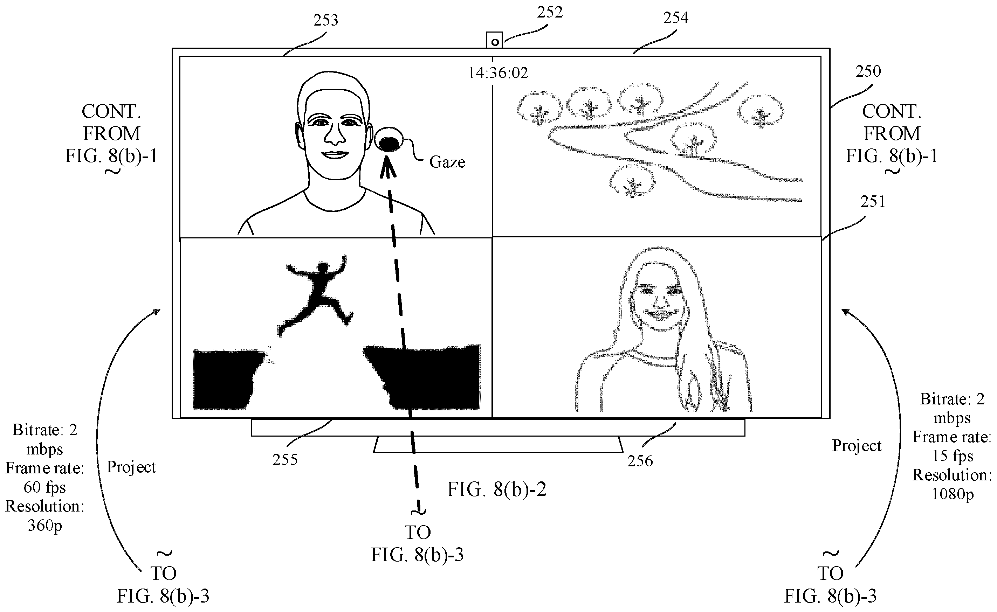

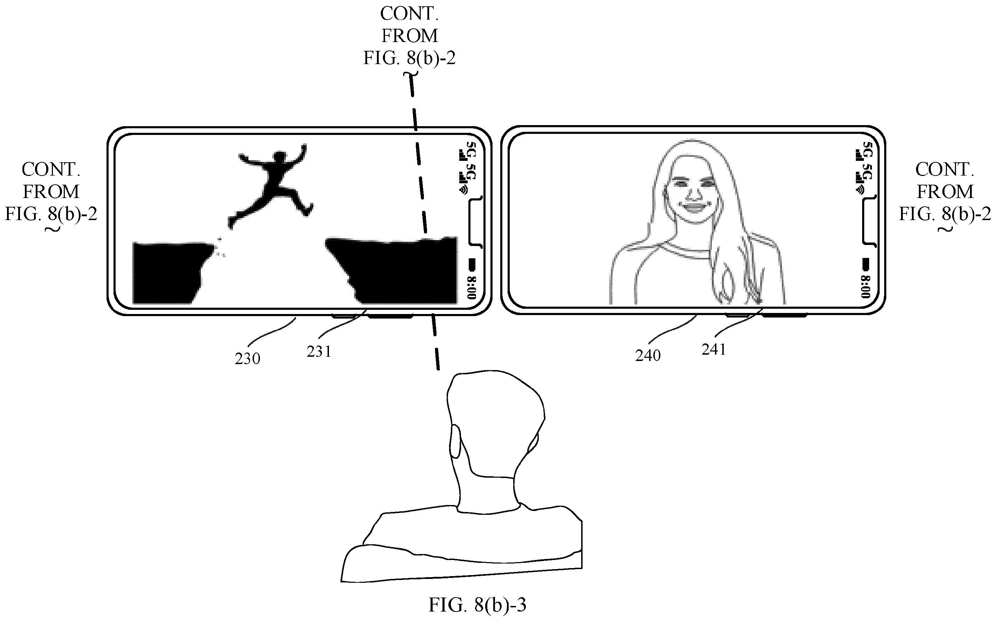

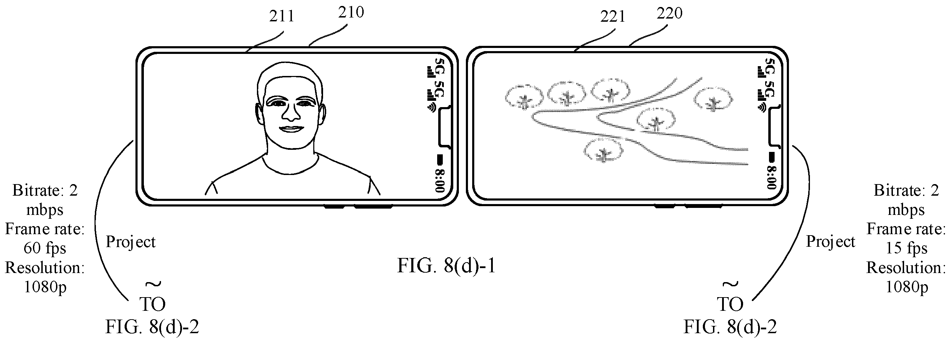

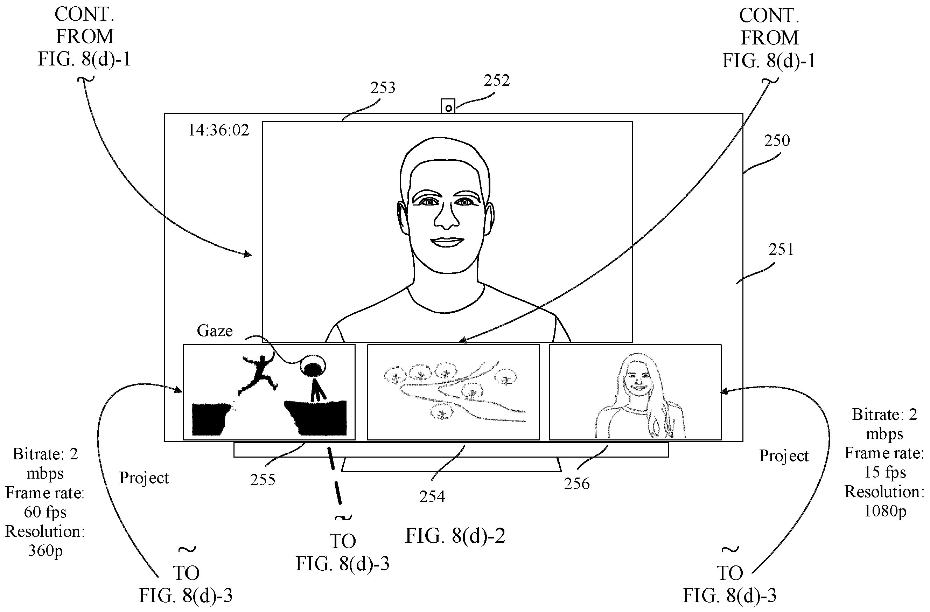

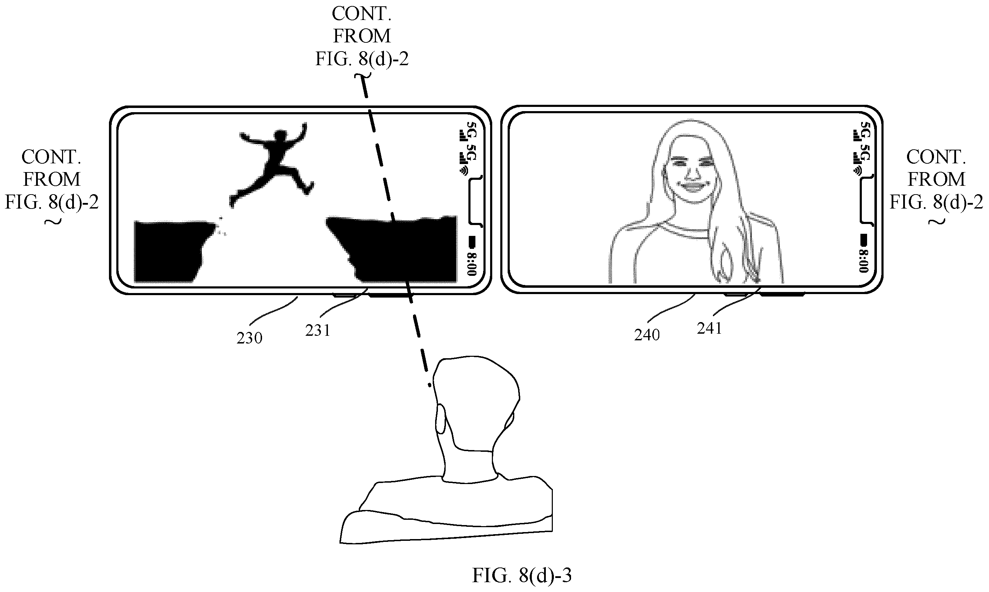

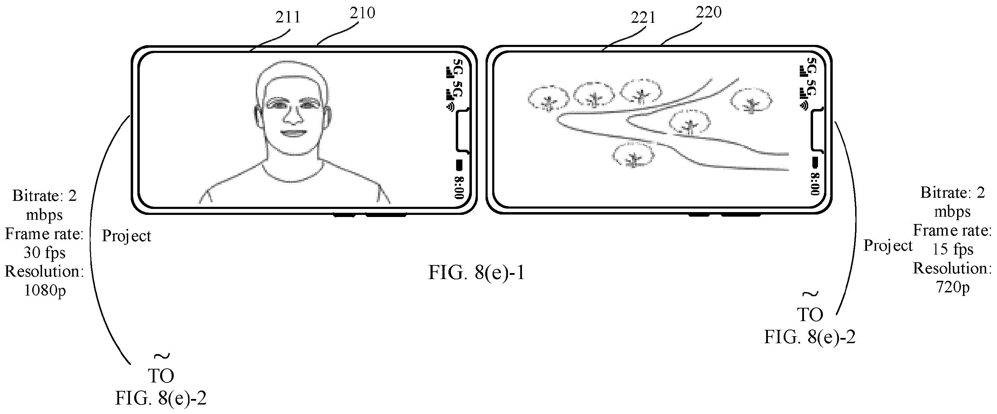

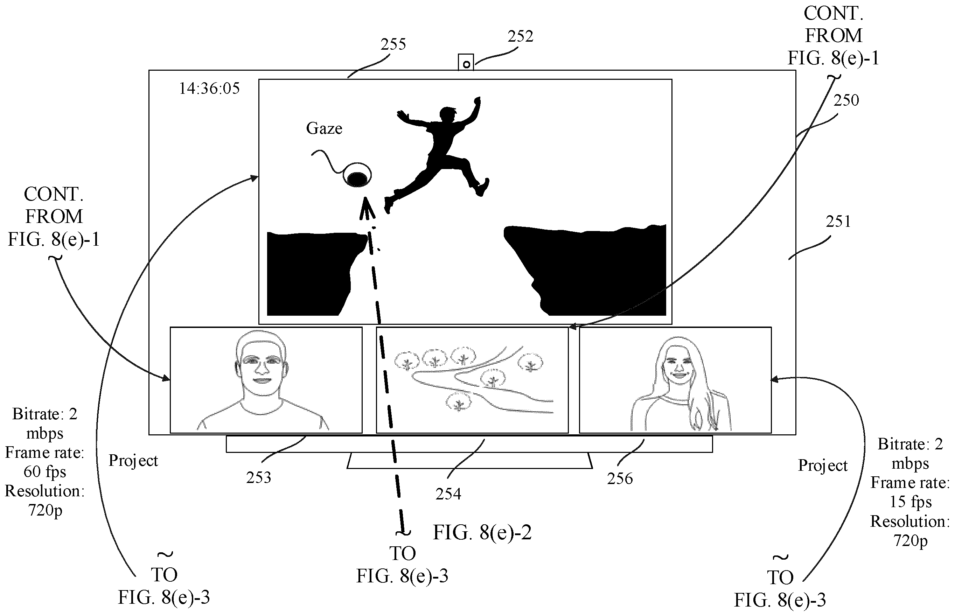

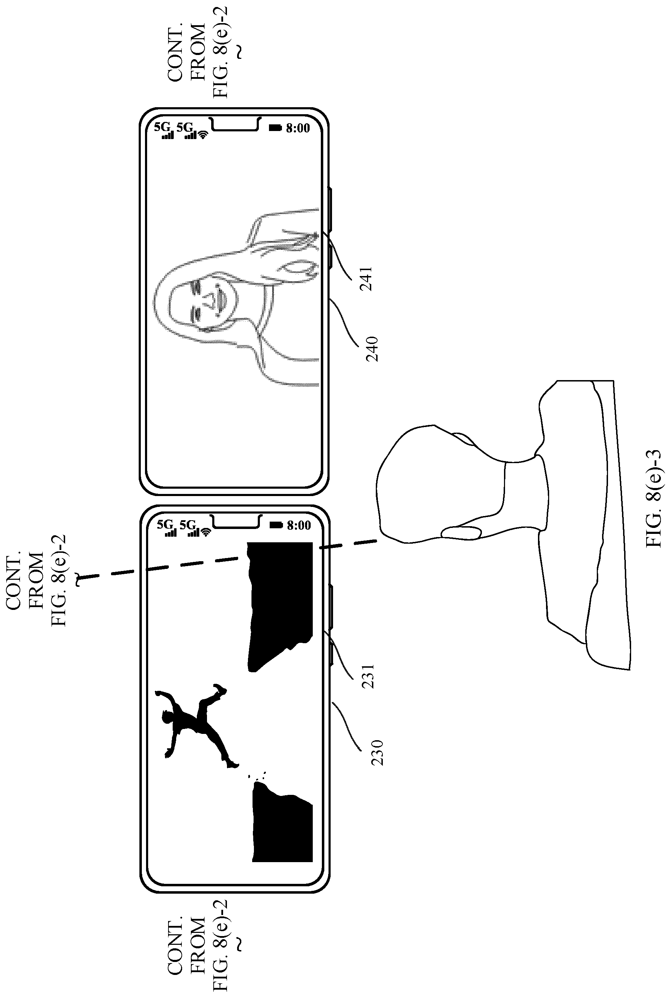

FIG. 8(a)-1 to FIG. 8(e)-3 are diagrams of several scenarios in which smartphones perform projection onto a smart television according to an embodiment of this application. In an initial situation, after a projection communication connection is successfully established between the smart television 250 and each of the smartphones 210, 220, 230, and 240 at 14:35:54, as shown in FIG. 2A to FIG. 2C, and the display 251 of the smart television 250 synchronously displays a video display interface displayed on the display 211 of the smartphone 210, a photograph display interface displayed on the display 221 of the smartphone 220, a game display interface displayed on the display 231 of the smartphone 230, and a video display interface displayed on the display 241 of the smartphone 240.

As shown in FIG. 8(a)-1 to FIG. 8(a)-3, when the camera 252 detects that a user does not gaze at the display 251, the smart television 250 sends, to the smartphones 210, 220, 230, and 240, an instruction for adjusting a projection effect. The smartphone 210 reduces at least one of a bitrate, a frame rate, or resolution of a video picture corresponding to the video display interface on the display 211, and specifically, may separately reduce, according to a preset scenario rule of a video music category, at least one of a bitrate, a frame rate, or resolution of the video display interface that is being projected. The smartphone 220 reduces at least one of a bitrate, a frame rate, or resolution of a video picture corresponding to the photograph display interface on the display 221, and specifically, may reduce, according to a preset scenario rule of an office photograph category, at least one of a bitrate, a frame rate, or resolution of the photograph display interface that is being projected. The smartphone 230 reduces at least one of a bitrate, a frame rate, or resolution of a video picture corresponding to the game display interface on the display 231, and specifically, may reduce, according to a preset scenario rule of a game and other category, at least one of a bitrate, a frame rate, or resolution of the game display interface that is being projected. The smartphone 240 may reduce at least one of a bitrate, a frame rate, or resolution of a video picture corresponding to the video display interface on the display 241, and specifically, may separately reduce, according to the preset scenario rule of the video music category, at least one of a bitrate, a frame rate, or resolution of the video display interface that is being projected.

Because categories of application display interfaces are different, preset scenario rules are also different, that is, priorities of adjusting bitrates, frame rates, and resolution are also different. Reducing, according to a preset scenario rule, at least one of a bitrate, a frame rate, or resolution of a video picture corresponding to an application display interface includes: when the application display interface belongs to the video music category, at a specific time interval, first reducing the encoding bitrate until a lowest-level bitrate, then reducing the frame rate until a lowest-level frame rate, and finally reducing the resolution until lowest-level resolution; when the application display interface belongs to the office photograph category, at a specific time interval, first reducing the frame rate until a lowest-level frame rate, then reducing an encoding bitrate until a lowest-level bitrate, and finally reducing the resolution until lowest-level resolution; or when the application display interface belongs to the game and other category, at a specific time interval, first reducing the encoding bitrate until a lowest-level bitrate, then reducing the resolution until lowest-level resolution, and finally reducing the frame rate until a lowest-level frame rate.

It is assumed that a time interval (a time cycle) is 2 seconds. Initially, as shown in FIG. 2A to FIG. 2C, time is 14:35:54. After three time intervals, namely, 6 seconds, time is 14:36:00. In this case, for encoding adjustment results and display effects of the respective application display interfaces on the smartphones 210, 220, 230, and 240, refer to FIG. 8(a)-1 to FIG. 8(a)-3.

It should be noted that the time interval herein may also be understood as the time cycle, that is, the bitrate, the frame rate, or the resolution of the application display interface is adjusted to a target value within one time cycle. The video display interface displayed on the display 211 of the smartphone 210 is used as an example. The video display interface belongs to the video music category. Fineness of a display picture on the video display interface needs to be first ensured, then smoothness of pictures on the video display interface needs to be ensured, and finally encoding and sampling precision and a distortion degree of the video display interface need to be considered. Therefore, in consideration of all influencing factors, encoding importance is: bitrate<frame rate<resolution. It is assumed that the video display interface has three levels of bitrates, three levels of frame rates, and three levels of resolution, respectively as shown in Table 1 to Table 3.

**Table 1 Encoding bitrate level table**

| Highest-level bitrate | Medium-level bitrate | Lowest-level bitrate |
|---|---|---|
| 10 mbps | 5 mbps | 2 mbps |

**Table 2 Encoding frame rate level table**

| Highest-level frame rate | Medium-level frame rate | Lowest-level frame rate |
|---|---|---|
| 60 fps | 30 fps | 15 fps |

**Table 3 Encoding resolution level table**

| Highest-level resolution | Medium-level resolution | Lowest-level resolution |
|---|---|---|
| 1080p | 720p | 360p |

It is assumed that the video display interface initially has the encoding bitrate being the highest-level bitrate of 10 mbps, the frame rate being the highest-level frame rate of 60 fps, and the resolution being the highest-level resolution of 1080p. At the time interval of 2 seconds, the smartphone 210 first reduces the encoding bitrate of the video display interface until the lowest-level bitrate, then reduces the frame rate until the lowest-level frame rate, and finally reduces the resolution until the lowest-level resolution. More specifically, for the video display interface, after 2 seconds, the encoding bitrate is 5 mbps, the frame rate is 60 fps, and the resolution is 1080p; after 4 seconds, the bitrate is 2 mbps (the lowest-level bitrate remains unchanged later), the frame rate is 60 fps, and the resolution is 1080p; after 6 seconds, the bitrate is 2 mbps, the frame rate is 30 fps, and the resolution is 1080p; after 8 seconds, the bitrate is 2 mbps, the frame rate is 15 fps (the lowest-level frame rate remains unchanged later), and the resolution is 1080p; after 10 seconds, the bitrate is 2 mbps, the frame rate is 15 fps, and the resolution is 720p; and after 12 seconds and later, the bitrate is 2 mbps, the frame rate is 15 fps, and the resolution is 360p and remains unchanged. Power consumption is low.

The application display interfaces on the smartphones 220, 230, and 240 are also similarly adjusted according to the preset scenario rules of the categories to which the application display interfaces belong.

Display definition of the application display interfaces in FIG. 8(a)-1 to FIG. 8(a)-3 is reduced, and the application display interfaces are separately projected onto the display 251 of the smart television 250 for synchronous display. Because the user does not gaze at the display 251, visual experience is not lost, and encoding power consumption of the smartphones 210, 220, 230, and 240 is reduced.

It should be noted that, in the foregoing scenario, only an example in which the smartphones 210, 220, 230, and 240 respectively reduce all the bitrates, the frame rates, and the resolution of the respective application display interfaces according to the specified preset scenario rules is used. In a possible implementation, the smartphones 210, 220, 230, and 240 may alternatively respectively reduce one or any two of the bitrates, the frame rates, and the resolution of the respective application display interfaces. This is not limited in this application.

It should be understood that, with reduction of one or more of the bitrate, the frame rate, and the resolution of the application display interface, the display definition of each application display interface is reduced. InFIG. 8(a)-1 to FIG. 8(a)-3 , the display 251 still synchronously displays each application display interface whose resolution is reduced.

In another possible implementation, the smartphones 210, 220, 230, and 240 may stop at least one of encoding of the video pictures and encoding of audios that correspond to the respective application display interfaces. This is not limited in this application.

In the scenario shown in FIG. 8(a)-1 to FIG. 8(a)-3 , when the camera 252 detects that the user gazes at a video display interface 253 (a projection interface) on the upper left of the display 251, the scenario changes to that shown in FIG. 8(b)-1 to FIG. 8(b)-3. The smart television 250 sends, to the smartphone 210, an instruction for adjusting a projection effect. The smartphone 210 increases at least one of the bitrate, the frame rate, or the resolution of the video picture corresponding to the video display interface that is being projected, and specifically, may increase, according to the preset scenario rule of the video music category, at least one of the bitrate, the frame rate, or the resolution of the video display interface that is being projected. More specifically, at a specific time interval, the smartphone 210 first increases, until the highest-level resolution, the resolution of the video display interface that is being projected, then increases the frame rate until the highest-level frame rate, and finally increases the bitrate until the highest-level bitrate.

For remaining three application display interfaces at which the user does not gaze, at least one of a bitrate, a frame rate, or resolution of a corresponding video picture may be reduced, and specifically, at least one of the bitrate, the frame rate, or the resolution of the video picture corresponding to an application display interface may be reduced according to a preset scenario rule of a category to which the application display interface belongs. More specifically, at the specific time interval, the smartphone 220 first reduces, until a lowest-level frame rate, the frame rate of the photograph display interface that is being projected, then reduces the encoding bitrate until a lowest-level bitrate, and finally reduces the resolution until lowest-level resolution. At the specific time interval, the smartphone 230 first reduces, until a lowest-level bitrate, the bitrate of the game display window that is being projected, then reduces the resolution until lowest-level resolution, and finally reduces the frame rate until a lowest-level frame rate. At the specific time interval, the smartphone 240 first reduces, until a lowest-level bitrate, the bitrate of the video display interface that is being projected, then reduces the frame rate until a lowest-level frame rate, and finally reduces the resolution until lowest-level resolution.

It is assumed that a time interval is still 2 seconds the same as that shown in FIG. 8(a)-1 to FIG. 8(a)-3 . The time shown in FIG. 8(a)-1 to FIG. 8(a)-3 is 14:36:00. In this case, after one time interval, FIG. 8(b)-1 to FIG. 8(b)-3 show the encoding adjustment results and the display effects of the respective application display interfaces on the smartphones 210, 220, 230, and 240 when time is 14:36:02. The display definition of the video display interface that is being projected by the smartphone 210 is increased, and the video display interface is projected onto the display 251 of the smart television 250 for synchronous display. The display definition of the application display interfaces on the smartphones 220, 230, and 240 is reduced, and the application display interfaces are separately projected onto the display 251 of the smart television 250 for synchronous display.

It should be understood that, to avoid a misjudgment caused by a random change of a line of sight of the user, the camera 252 generally requires specific duration for detecting that the user gazes at a projection interface displayed on the display 251. For example, the user changes the line of sight on the display 251 of the smart television 250 to determine a projection interface that the user wants to watch. The duration may be set to 1 second. This is not limited in embodiments of this application.

It should be noted that, in FIG. 8(b)-1 to FIG. 8(b)-3, the camera 252 detects that the user gazes at the video display interface 253 on the upper left of the display 251, and the video display interface 253 belongs to the video music category. For the video music category, fineness of a display picture needs to be first ensured, then picture smoothness needs to be ensured, and finally encoding and sampling precision and a distortion degree need to be considered. Therefore, in consideration of all influencing factors, encoding importance is: bitrate<frame rate<resolution. Therefore, according to the preset scenario rule of the video music category, the smartphone 210 increases the resolution of the video display interface that is being projected to the highest-level resolution, then increases the frame rate to the highest-level frame rate, and finally increases the bitrate to the highest-level bitrate.

In another possible implementation, if the smartphone 210 previously reduces the one or any two of the bitrate, the frame rate, and the resolution of the video display interface according to the specified preset scenario rule, correspondingly, the smartphone 210 may also increase the one or any two of the bitrate, the frame rate, and the resolution of the video display interface according to the specified preset scenario rule. This is not limited in embodiments of this application.

Because the user does not pay attention to the application display interfaces on the smartphones 220, 230, and 240, the bitrates, the frame rates, and the resolution of the video display interfaces that are being projected are still reduced, until the lowest-level bitrates, the lowest-level frame rates, and the lowest-level resolution, according to the preset scenario rules of the categories to which the application display interfaces belong, and then the lowest-level bitrates, the lowest-level frame rates, and the lowest-level resolution remain unchanged. For example, the lowest-level bitrate, the lowest-level frame rate, and the lowest-level resolution may be respectively shown in Table 1 to Table 3. The one or any two of the bitrate, the frame rate, and the resolution of the application display interface may alternatively be reduced. This is not limited in this application.

In another possible implementation, if the video display interface on the smartphone 210 does not refresh the picture in FIG. 8(a)-1 to FIG. 8(a)-3 , in FIG. 8(b)-1 to FIG. 8(b)-3, after the camera 252 detects that the user gazes at the video display interface 253 on the upper left of the display 251, the video display interface on the display 211 of the smartphone 210 refreshes the picture anew and is synchronized to the display 251.

In the scenario shown in FIG. 8(a)-1 to FIG. 8(a)-3 , when the camera 252 detects that the user gazes at the video display interface 253 on the upper left of the display 251, the scenario may alternatively change to that shown in FIG. 8(c)-1 to FIG. 8(c)-3. The smart television 250 sends, to the smartphone 210, an instruction for adjusting a projection effect. The smartphone 210 increases, according to the preset scenario rule of the video music category, the bitrate, the frame rate, and the resolution of the video display interface that is being projected. The smart television 250 scales up the video display interface 253 and displays the video display interface in the middle. For remaining three application display interfaces at which the user does not gaze, bitrates, frame rates, and resolution of the video display interfaces that are being projected are still reduced according to preset scenario rules of categories to which the application display interfaces belong. The smart television 250 scales down a photograph display interface 254, a game display interface 255, and a video display interface 256 and arranges the photograph display interface, the game display interface, and the video display interface on the lower edge of the display for display. The time shown in FIG. 8(a)-1 to FIG. 8(a)-3 is 14:36:00. It is assumed that a time interval is still 2 seconds the same as that inFIG. 8(a)-1 to FIG. 8(a)-3 . FIG. 8(c)-1 to FIG. 8(c)-3 show the encoding adjustment results and the display effects of the respective application display interfaces on the smartphones 210, 220, 230, and 240 when time is 14:36:02. The display definition of the video display interface that is being projected by the smartphone 210 is increased, and the video display interface is projected onto the display 251 of the smart television 250 for synchronous display. The display definition of the application display interfaces on the smartphones 220, 230, and 240 is reduced, and the application display interfaces are separately projected onto the display 251 of the smart television 250 for synchronous display. The video display interface 253 synchronously displayed on the display 251 is scaled up and centered. The photograph display interface 254, the game display interface 255, and the video display interface 256 are scaled down and arranged on the lower edge of the display 251.

It should be understood that, that the video display interface 253 is scaled up and displayed in the middle and the photograph display interface 254, the game display interface 255, and the video display interface 256 are scaled down and arranged on the lower edge of the display for display, which is shown in FIG. 8(c)-1 to FIG. 8(c)-3, is merely an example. The photograph display interface 254, the game display interface 255, and the video display interface 256 may alternatively be scaled down and arranged at an edge position like a left side, an upper side, or a right side of the display. This is not limited in this application. In addition, a ratio in which the video display interface 253 is scaled up relative to the photograph display interface 254, the game display interface 255, and the video display interface 256 is not limited in embodiments of this application either.

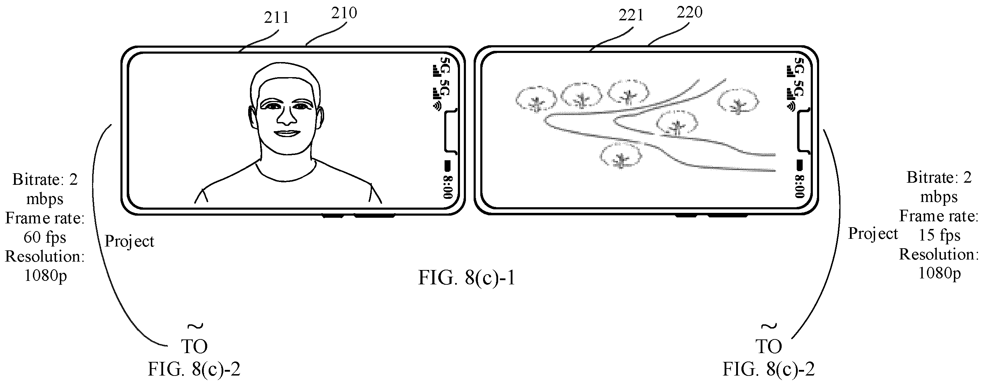

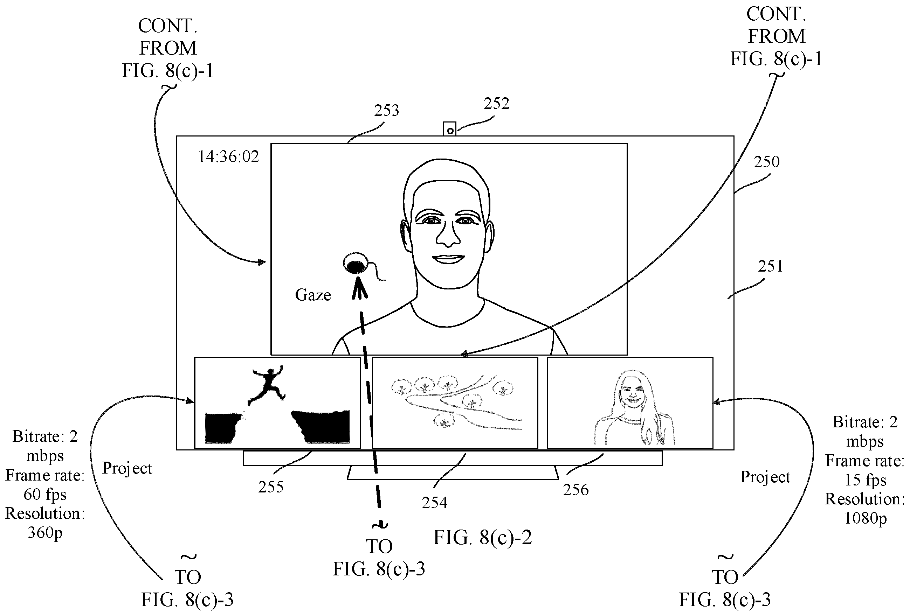

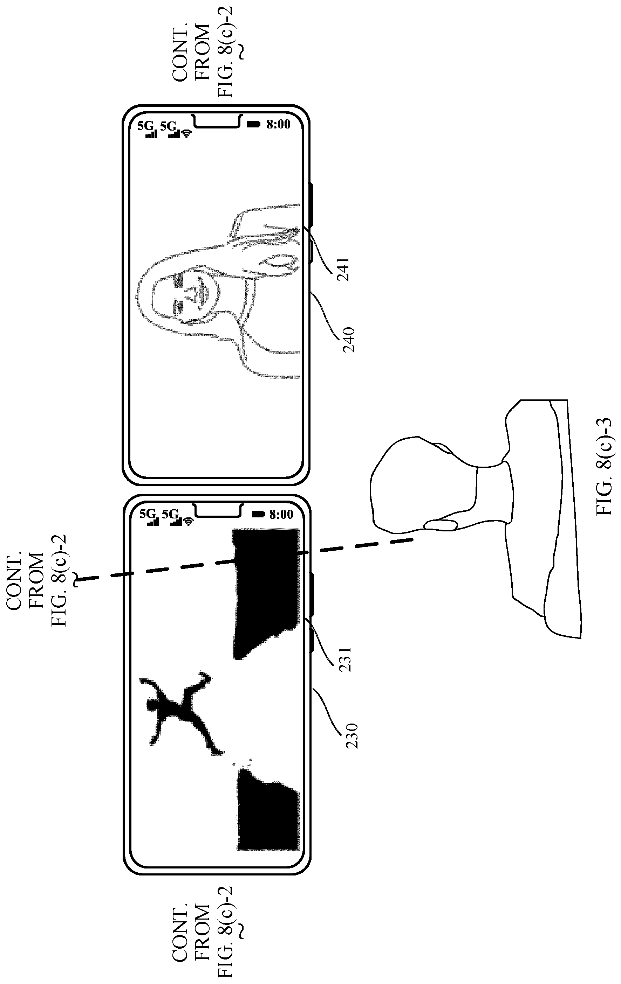

Refer to a change from FIG. 8(c)-1 to FIG. 8(e)-3. In the scenario shown in FIG. 8(c)-1 to FIG. 8(c)-3, the camera 252 detects that the user gazes at the game display interface 255 on the lower edge of the display 251, as shown in FIG. 8(d)-1 to FIG. 8(d)-3. The smart television 250 separately sends, to the smartphones 230 and 210, different instructions for adjusting projection effects. The smartphone 230 increases, according to the preset scenario rule of the game and other category, the bitrate, the frame rate, and the resolution of the video display interface that is being projected. The smartphone 210 reduces, according to the preset scenario rule of the video music category, the bitrate, the frame rate, and the resolution of the video display interface that is being projected on the display 211. The time shown in FIG. 8(c)-1 to FIG. 8(c)-3 is 14:36:02. It is assumed that a time interval is still 2 seconds the same as that in FIG. 8(c)-1 to FIG. 8(c)-3. After the camera 252 detects that the user gazes at the game display interface 255 on the lower edge of the display 251 (detecting gaze duration of the user takes 1 second), as shown in FIG. 8(d)-1 to FIG. 8(d)-3, FIG. 8(e)-1 to FIG. 8(e)-3 show the encoding adjustment results and the display effects of the respective application display interfaces on the smartphones 210, 220, 230, and 240 when time is 14:36:05. The display definition of the game display interface that is being projected by the smartphone 230 is increased, and the game display interface is projected onto the display 251 of the smart television 250 for synchronous display. The display definition of the video display interface that is being projected by the smartphone 210 is reduced, and the video display interface is projected onto the display 251 of the smart television 250 for synchronous display. The game display interface 255 synchronously displayed on the display 251 is scaled up and centered. The video display interface 253, the photograph display interface 254, and the video display interface 256 are scaled down and arranged on the lower edge of the display 251.

It should be noted that a line of sight of the user on the display 251 of the smart television 250 may change randomly. To avoid a misjudgment caused by random switching, the camera 252 generally requires specific duration for detecting that the user changes to gaze at a projection interface on the display 251. For example, the user switches from gazing at a projection interface to gazing at another projection interface on the display 251 of the smart television 250. The duration may be set to 1 second. This is not limited in embodiments of this application.

It should be understood that FIG. 8(d)-1 to FIG. 8(d)-3 and FIG. 8(e)-1 to FIG. 8(e)-3 show only a scenario change generated when the user changes to gaze at the game display interface 255 on the display 251. When the user changes to gaze at the photograph display interface 254 or the video display interface 256 on the display 251, the corresponding gazed projection interface may also have a same adjustment change.

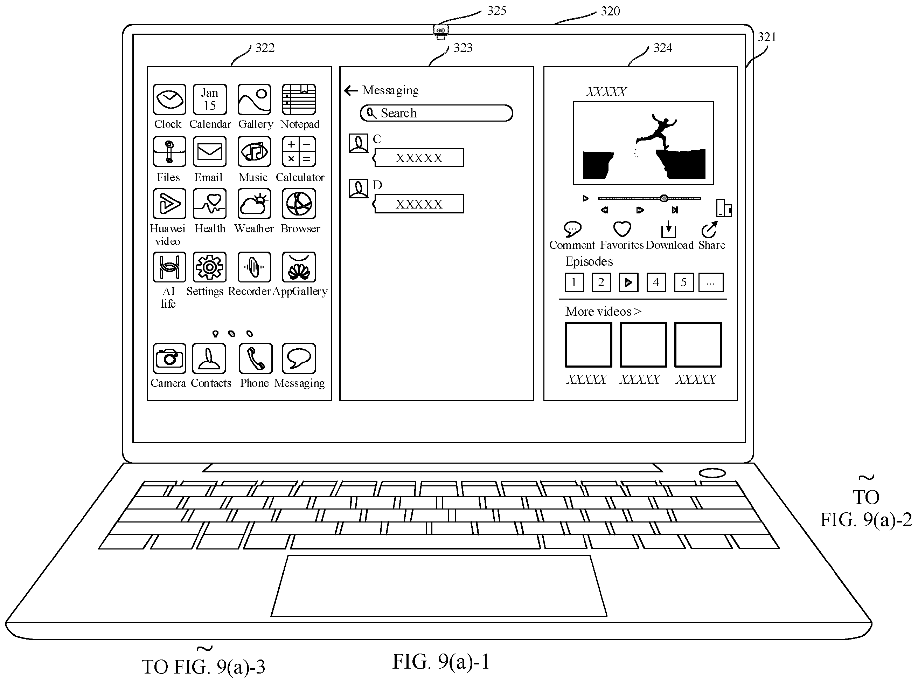

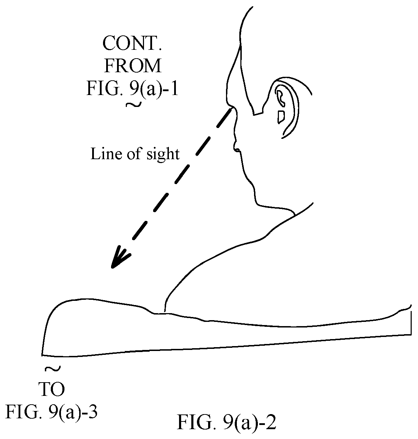

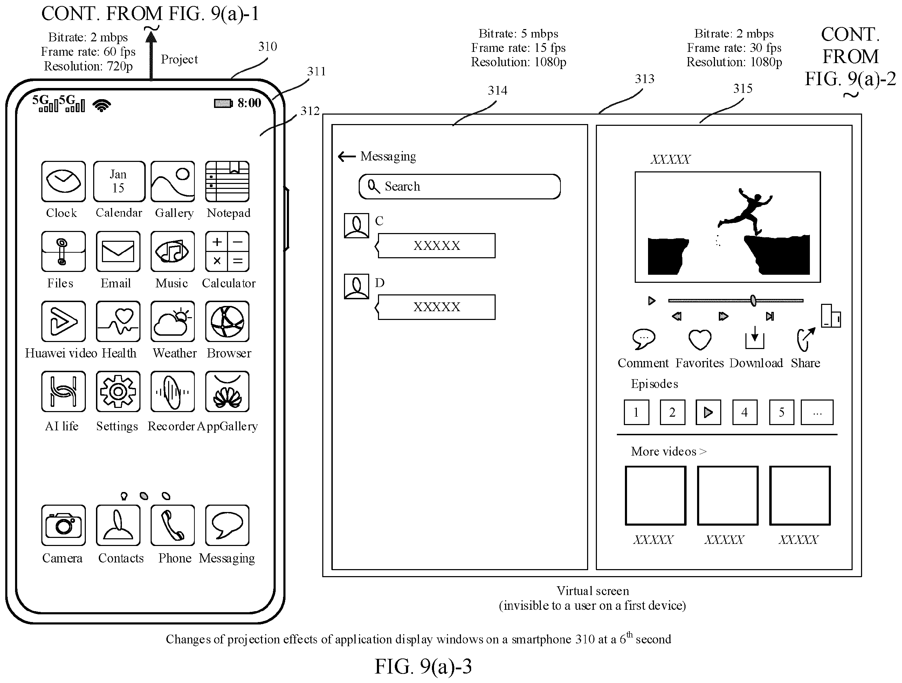

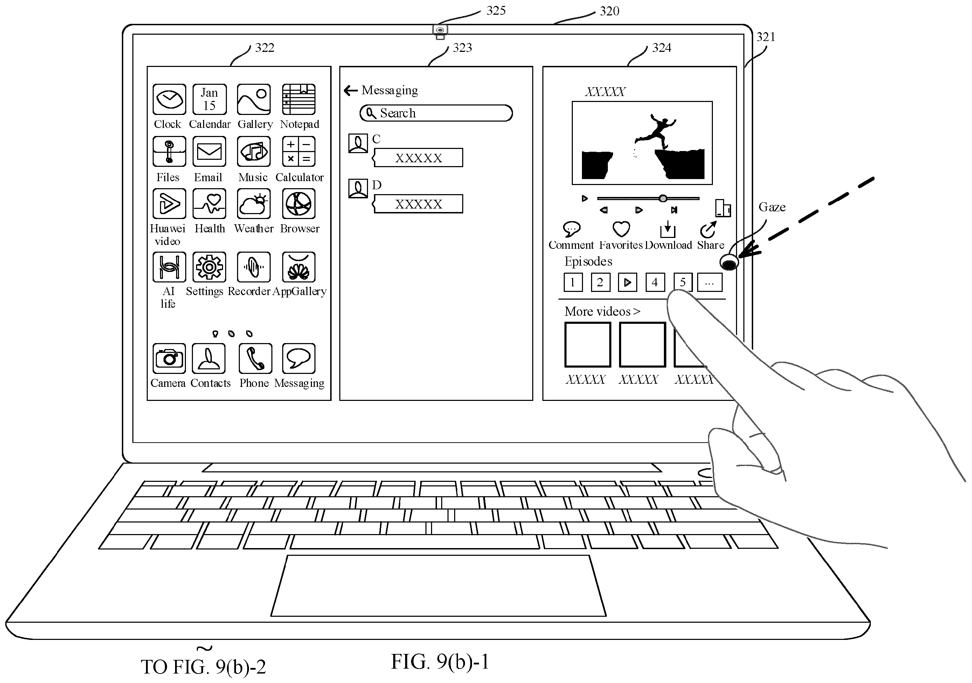

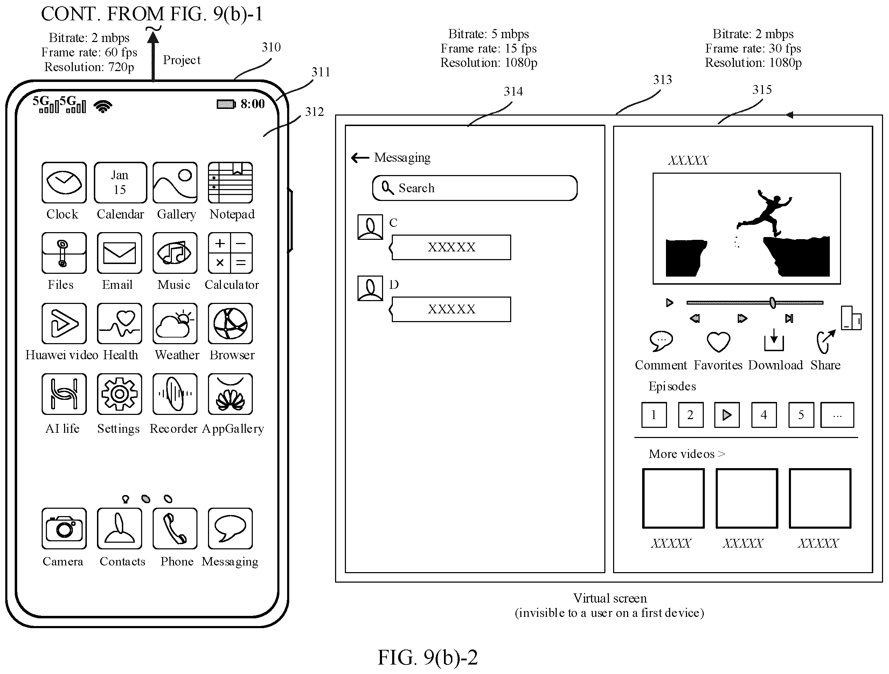

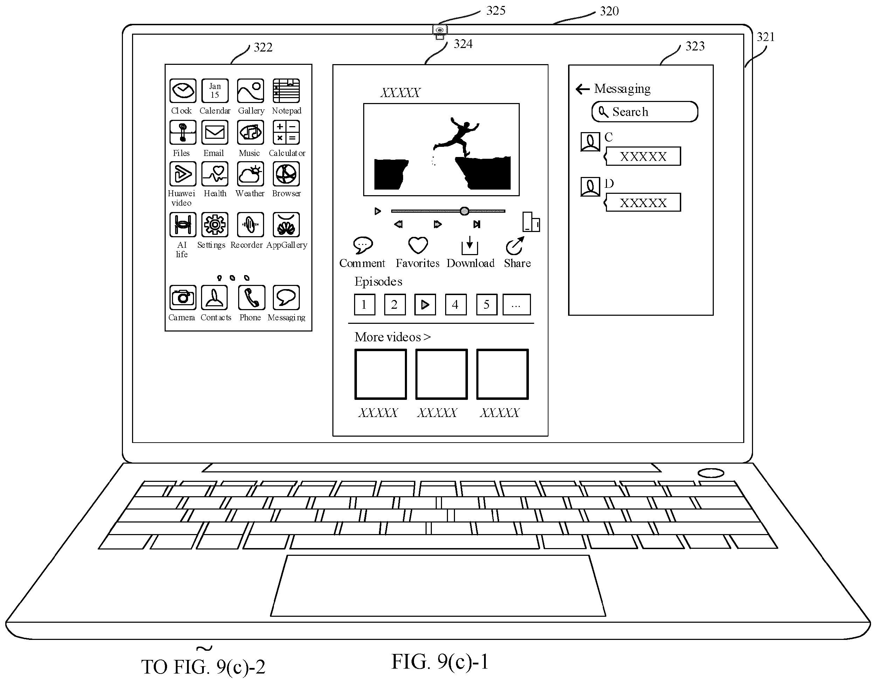

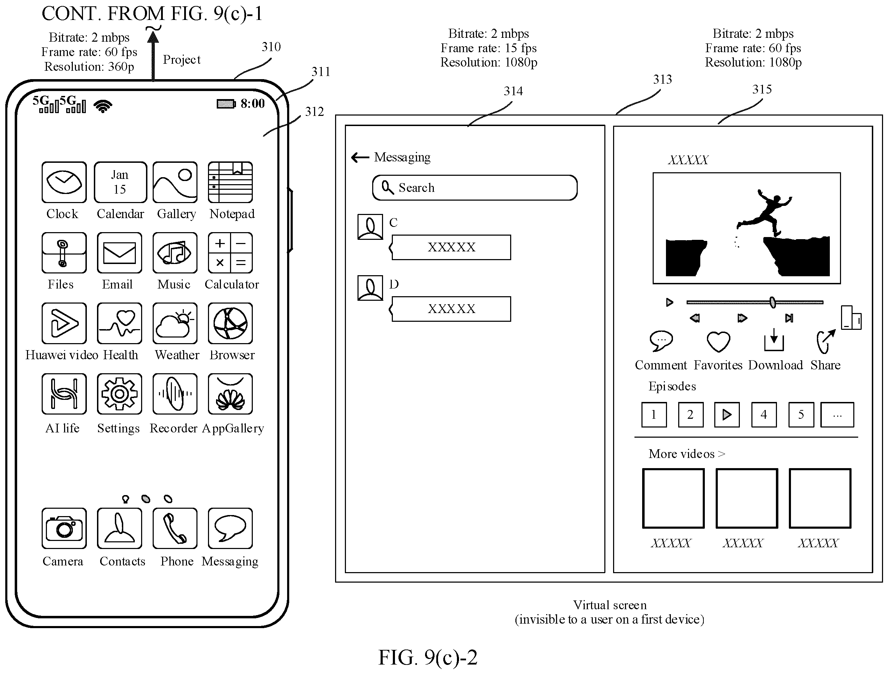

FIG. 9(a)-1 to FIG. 9(c)-2 are diagrams of several scenarios in which a smartphone performs projection onto a notebook computer according to an embodiment of this application. In an initial situation, after a projection communication connection is successfully established between the smartphone 310 and the notebook computer 320, as shown in FIG. 3A and FIG. 3B, the display 321 of the notebook computer 320 synchronously displays a default mobile home screen 322 (a projection interface) displayed on the display 311 of the smartphone 310, and the virtual screen 313 of the smartphone 310 displays the messaging display interface 323 (a projection interface) and the video display interface 324 (a projection interface). As shown in FIG. 9(a)-1 to FIG. 9(a)-3, when the camera 325 detects that a user does not gaze at the display 321, the notebook computer 320 sends, to the smartphone 310, an instruction for adjusting a projection effect. The smartphone 310 reduces at least one of a bitrate, a frame rate, or resolution of a default mobile home screen 312 that is being projected, and specifically, may reduce, according to a preset scenario rule of a game and other category, at least one of the bitrate, the frame rate, or the resolution of the default mobile home screen 312 that is being projected. The smartphone 310 reduces at least one of a bitrate, a frame rate, or resolution of a messaging display interface 313 that is being projected, and specifically, may reduce, according to a preset scenario rule of an office photograph category, at least one of the bitrate, the frame rate, or the resolution of the messaging display interface 313 that is being projected. The smartphone 310 reduces at least one of a bitrate, a frame rate, or resolution of the video display interface 315 that is being projected, and specifically, may reduce, according to a preset scenario rule of a video music category, at least one of the bitrate, the frame rate, or the resolution of the video display interface 315 that is being projected. Because categories of application display interfaces are different, preset scenario rules are also different, that is, priorities of adjusting bitrates, frame rates, and resolution are also different.

More specifically, reducing, according to a preset scenario rule, at least one of a bitrate, a frame rate, or resolution of a video picture corresponding to an application display interface specifically includes: when the application display interface belongs to the video music category, at a specific time interval, first reducing the bitrate until a lowest-level bitrate, then reducing the frame rate until a lowest-level frame rate, and finally reducing the resolution until lowest-level resolution; when the application display interface belongs to the office photograph category, at a specific time interval, first reducing the frame rate until a lowest-level frame rate, then reducing the bitrate until a lowest-level bitrate, and finally reducing the resolution until lowest-level resolution; or when the application display interface belongs to the game and other category, at a specific time interval, first reducing the bitrate until a lowest-level bitrate, then reducing the resolution until lowest-level resolution, and finally reducing the frame rate until a lowest-level frame rate.

FIG. 9(a)-1 to FIG. 9(a)-3 show encoding adjustment results and display effects that are of three application display interfaces on the smartphone 310 and that are obtained at a 6^{th} second when it is assumed that a time interval is 2 seconds. Display definition of the three application display interfaces is reduced. Because the user does not gaze at the display 321, visual experience is not lost, and encoding power consumption of the smartphone 310 is reduced.

It should be noted that the time interval herein may also be understood as a time cycle, that is, the bitrate, the frame rate, or the resolution of the application display interface is adjusted to a target value within one time cycle. The messaging display interface 314 displayed on the display 311 of the smartphone 310 is used as an example. The messaging display interface belongs to the office photograph category. Most pictures on the messaging display interface are stationary pictures and do not need to be frequently refreshed. Therefore, a frame rate is relatively not quite important, but fineness of a display picture still needs to be ensured, and a distortion degree cannot be excessively high. Therefore, in consideration of all influencing factors, encoding importance is: frame rate<bitrate<resolution. It is assumed that the messaging display interface 314 has three levels of bitrates, three levels of frame rates, and three levels of resolution, respectively as shown in Table 1 to Table 3.

It is assumed that the messaging display interface 314 initially has the encoding bitrate being the highest-level bitrate of 10 mbps, the frame rate being the highest-level frame rate of 60 fps, and the resolution being the highest-level resolution of 1080p. At the time interval of 2 seconds, the smartphone 310 first reduces the encoding frame rate of the messaging display interface 314 until the lowest-level frame rate, then reduces the bitrate until the lowest-level bitrate, and finally reduces the resolution until the lowest-level resolution. More specifically, for the video display interface, after 2 seconds, the encoding bitrate is 10 mbps, the frame rate is 30 fps, and the resolution is 1080p; after 4 seconds, the bitrate is 10 mbps, the frame rate is 15 fps (the lowest-level frame rate remains unchanged later), and the resolution is 1080p; after 6 seconds, the bitrate is 5 mbps, the frame rate is 15 fps, and the resolution is 1080p; after 8 seconds, the bitrate is 2 mbps (the lowest-level bitrate remains unchanged later), the frame rate is 15 fps, and the resolution is 1080p; after 10 seconds, the bitrate is 2 mbps, the frame rate is 15 fps, and the resolution is 720p; and after 12 seconds and later, the bitrate is 2 mbps, the frame rate is 15 fps, and the resolution is 360p and remains unchanged. Power consumption is low.

Application display interfaces of the messaging display interface 314 and the video display interface 315 that are displayed on the virtual screen 313 of the smartphone 310 are also similarly adjusted according to preset scenario rules of categories to which the application display interfaces belong.

It should be noted that, in the foregoing scenario, only an example in which the smartphone 310 separately reduces the bitrates, the frame rates, and the resolution of the default mobile home screen 312, the messaging display interface 314, and the video display interface 315 according to the preset scenario rules is used. In a possible implementation, the smartphone 310 may alternatively separately reduce one or any two of the bitrates, the frame rates, and the resolution of the default mobile home screen 312, the messaging display interface 314, and the video display interface 315. This is not limited in this application.

It should be understood that, with reduction of one or more of the bitrate, the frame rate, and the resolution of the application display interface, the display definition of each application display interface is reduced. In FIG. 9(a)-1 to FIG. 9(a)-3, the display 321 of the notebook computer 320 still synchronously displays each application display interface whose resolution is reduced. In another possible implementation, the smartphone 310 may not refresh pictures of the default mobile home screen 312, the messaging display interface 314, and the video display interface 315 but synchronizes the default mobile home screen, the messaging display interface, and the video display interface to the display 321. This is not limited in this application.

Refer to a scenario change from FIG. 9(a)-1 to FIG. 9(c)-2. When the display 321 (with a touch function) of the notebook computer 320 receives a tap of the user on the video display interface 324 or the camera 325 detects that the user gazes at the video display interface 324 or when the display 321 (with the touch function) receives the tap of the user on the video display interface 324 and the camera 325 detects that the user gazes at the video display interface 324 (as shown in FIG. 9(b)-1 and FIG. 9(b)-2), the notebook computer 320 sends, to the smartphone 310, an instruction for adjusting a projection effect.

The smartphone 310 increases at least one of a bitrate, a frame rate, or resolution of a video picture corresponding to the video display interface 315 that is being projected, and specifically, may increase, according to the preset scenario rule of the video music category, at least one of the bitrate, the frame rate, or the resolution of the video picture corresponding to the video display interface 315. More specifically, at a specific time interval, the resolution of the video display interface 315 is first increased until highest-level resolution, then the frame rate is increased until a highest-level frame rate, and finally the bitrate is increased until a highest-level bitrate, which is in the scenario shown in FIG. 9(c)-1 and FIG. 9(c)-2.

The smartphone 310 continues to reduce at least one of the bitrate, the frame rate, or the resolution of the default mobile home screen 312 that is being projected, and specifically, may reduce at least one of the bitrate, the frame rate, or the resolution of the default mobile home screen 312 according to the preset scenario rule of the game and other category, until a lowest bitrate, a lowest frame rate, or lowest resolution is reached and remains unchanged. More specifically, at the specific time interval, the bitrate of the default mobile home screen 312 is first reduced until the lowest-level bitrate, then the resolution is reduced until the lowest-level resolution, and finally the frame rate is reduced until the lowest-level frame rate, which is in the scenario shown in FIG. 9(c)-1 and FIG. 9(c)-2.

The smartphone 310 continues to reduce at least one of the bitrate, the frame rate, or the resolution of the messaging display interface 313 that is being projected, and specifically, may reduce at least one of the bitrate, the frame rate, or the resolution of the messaging display interface 313 according to the preset scenario rule of the office photograph category, until a lowest bitrate, a lowest frame rate, or lowest resolution is reached and remains unchanged. More specifically, at the specific time interval, the frame rate of the messaging display interface 313 is first reduced until a lowest-level frame rate, then the bitrate is reduced until a lowest-level bitrate, and finally the resolution is reduced until lowest-level resolution, which is in the scenario shown in FIG. 9(c)-1 and FIG. 9(c)-2.

FIG. 9(c)-1 and FIG. 9(c)-2 show the encoding adjustment results and the display effects that are of the application display interfaces on the smartphone 310 and that are obtained when it is assumed that a time interval is 2 seconds the same as that in FIG. 9(a)-1 to FIG. 9(a)-3 and when one time interval of 2 seconds elapses after the display 321 detects the tap of the user on the video display interface 324 that is being synchronously displayed. The display definition of the video display interface 315 is increased, and the video display interface is projected onto the display 321 of the notebook computer 320 for synchronous display. The display definition of the default mobile home screen 312 and the messaging display interface 314 is reduced, and the default mobile home screen and the messaging display interface are projected onto the display 321 of the notebook computer 320 for synchronous display. The video display interface 324 synchronously displayed on the display 321 is scaled up and centered. The default mobile home screen 322 is scaled down and displayed on the left edge of the display 321. The messaging display interface 323 is scaled down and displayed on the right edge of the display 321.

It should be understood that FIG. 9(b)-1 and FIG. 9(b)-2 are merely an example for showing that the user taps the video display interface 324 to indicate attention. On the display 321 with the touch function, an operation like a double tap or sliding may alternatively indicate that the user pays attention to the video display interface 324. This is not limited in this application.

It should be noted that the video display interface 324 that the user pays attention to in FIG. 9(c)-1 and FIG. 9(c)-2 belongs to the video music category. Fineness of a display picture on the video display interface needs to be first ensured, then smoothness of pictures on the video display interface needs to be ensured, and finally encoding and sampling precision and a distortion degree of the video display interface need to be considered. Therefore, in consideration of all influencing factors, encoding importance is: bitrate<frame rate<resolution. According to the preset scenario rule of the video music category, the smartphone 310 increases the resolution of the video display interface 315 that is being projected to the highest-level resolution, then increases the frame rate to the highest-level frame rate, and finally increases the bitrate to the highest-level bitrate. In another possible implementation, if the smartphone 310 previously reduces the one or any two of the bitrate, the frame rate, and the resolution of the video display interface 315 according to the specified preset scenario rule, correspondingly, the smartphone 310 may also increase the one or any two of the bitrate, the frame rate, and the resolution of the video display interface 315 according to the specified preset scenario rule. This is not limited in embodiments of this application. Because the user does not pay attention to the default mobile home screen 312 and the messaging display interface 314, the bitrates, the frame rates, and the resolution of the video display interfaces that are being projected are still reduced according to the scenario preset rules of the categories to which the video display interfaces belong. The one or any two of the bitrate, the frame rate, and the resolution of the application display interface may alternatively be reduced. This is not limited in this application.

It should be understood that, that the video display interface 324 is scaled up and displayed in the middle, the default mobile home screen 322 is scaled down and displayed on the left edge of the display 321, and the messaging display interface 323 is scaled down and displayed on the right edge of the display 321, which is shown in FIG. 9(c)-1 and FIG. 9(c)-2, is merely an example. Alternatively, both the default mobile home screen 322 and the messaging display interface 323 may be scaled down and arranged at an edge position like the left side, the upper side, or the right side of the display, or the default mobile home screen 322 and the messaging display interface 323 may be interchanged for display. This is not limited in this application. In addition, a ratio in which the video display interface 324 is scaled up relative to the default mobile home screen 322 and the messaging display interface 323 is not limited in embodiments of this application either.

A projection method provided in the following embodiments of this application is applicable to any projection manner. With reference to specific embodiments, the following specifically describes the technical solutions provided in embodiments of this application by using an example in which the first device and the second device comply with a wireless projection protocol.

In embodiments of this application, the second device can detect whether a user pays attention to a first projection interface that is projected by the first device and that is displayed on the second device, and send, to the first device, an instruction for adjusting a projection effect. The first device adjusts the projection effect of a corresponding application display interface according to the received instruction for adjusting the projection effect. This reduces power consumption of a smartphone, increases a battery life, and improves visual experience of a user.

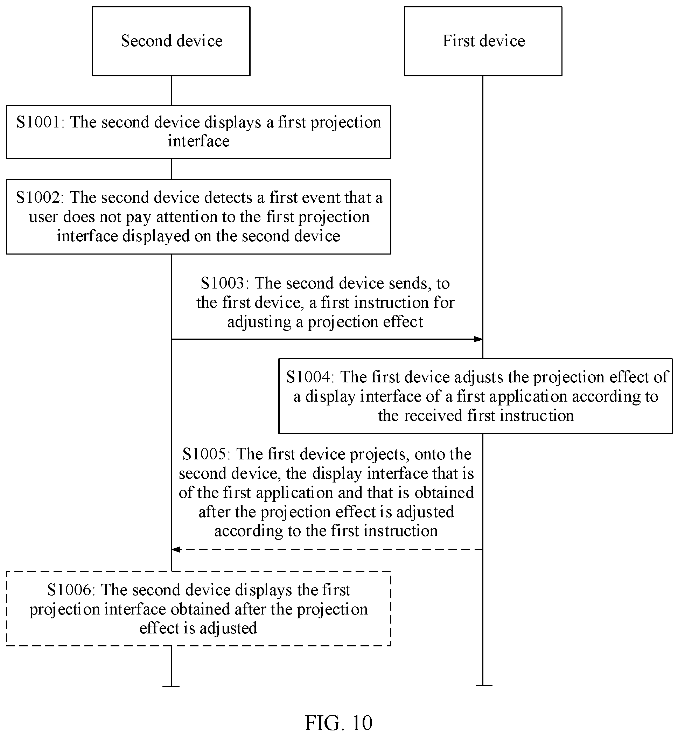

FIG. 10 is a schematic flowchart 1 of a projection method when the second device detects that a user does not pay attention to a display interface that is of a first application and that is projected by the first device and synchronously displayed on the second device according to an embodiment of this application. As shown in FIG. 10, the projection method provided in this embodiment of this application may include the following steps S1001 to S1006.

S1001: The second device displays a first projection interface.

In this embodiment of this application, the first projection interface corresponds to the display interface of the first application on the first device, and the display interface of the first application is a part or all of all display interfaces on the first device. That the second device displays the first projection interface means that the second device synchronously displays the display interface that is of the first application and that is projected by the first device onto the second device.

It should be noted that, in embodiments of this application, there may be one or more first devices.

It should be understood that, due to a limitation like a shape or a size, sizes and forms of display interfaces of the second device and the first device are different, content on the first projection interface is at least the same as that on the corresponding display interface of the first application on the first device, and display sizes and forms may be different.

For example, as shown in FIG. 1A and FIG. 1B, the first device is the smartphone 110, and the second device is the vehicle 120. The smartphone 110 projects, onto the display 121 of the vehicle 120, a display interface that is of a map navigation application and that is being displayed on the display 111. The first projection interface displayed on the vehicle 120, namely, the display interface that is of the map navigation application and that is displayed on the display 121, corresponds to the display interface that is of the map navigation application and that is displayed on the display 111 of the smartphone 110.

When there are a plurality of first devices and a plurality of projection interfaces, for a projection scenario, refer to FIG. 2A to FIG. 2C. The first devices are the smartphone 210, the smartphone 220, the smartphone 230, and the smartphone 240 (namely, the plurality of first devices), and the second device is the smart television 250. The smartphone 210 projects, onto the display 251 of the smart television 250, a video display interface that is being displayed on the display 211. The smartphone 220 projects, onto the display 251 of the smart television 250, a photograph display interface that is being displayed on the display 221. The smartphone 230 projects, onto the display 251 of the smart television 250, a game display interface that is being displayed on the display 231. The smartphone 240 projects, onto the display 251 of the smart television 250, a video display interface that is being displayed on the display 241. In this case, as shown in FIG. 2A to FIG. 2C, the display 251 of the smart television 250 displays four projection interfaces in total. A video display interface 253 (a projection interface) corresponds to the video display interface on the display 211 of the smartphone 210. A photograph display interface 254 (a projection interface) corresponds to the photograph display interface on the display 221 of the smartphone 220. A game display interface 255 (a projection interface) corresponds to the game display interface on the display 231 of the smartphone 230. A video display interface 256 (a projection interface) corresponds to the video display interface on the display 241 of the smartphone 240.

When there is one first device but there are a plurality of projection interfaces, for a projection scenario, refer to FIG. 3A and FIG. 3B. The first device is the smartphone 310, and the second device is the notebook computer 320. When displaying a default mobile home screen 312 on a screen 311 of the smartphone 310, the smartphone receives operations of starting a messaging application and a video application by the user. In response to the operations of starting the messaging application and the video application by the user, the smartphone 310 renders the messaging display interface 314 and the video display interface 315 on the virtual screen 313. It should be noted that, in this scenario, there are display interfaces of three applications on the smartphone 310: the mobile home screen 312, the messaging display interface 314, and the video display interface 315. Then, the smartphone 310 projects the default mobile home screen 312, the messaging display interface 314, and the video display interface 315 onto the display 321 of the notebook computer 320 for synchronous display. The notebook computer 320 displays three projection interfaces. The default mobile home screen 322 (a projection interface) corresponds to the default mobile home screen 312 on the smartphone 310. The messaging display interface 323 (a projection interface) corresponds to the messaging display interface 314 on the smartphone 310. The video display interface 324 (a projection interface) corresponds to the video display interface 315 on the smartphone 310.

S1002: The second device detects a first event that the user does not pay attention to the first projection interface displayed on the second device.

In this embodiment of this application, the first event that the user does not pay attention to the first projection interface displayed on the second device may include but is not limited to at least one of the following events: The user does not gaze at the first projection interface, the head of the user turns to an area other than the first projection interface, or the user does not touch the first projection interface.

For example, the second device may detect, via a camera, that a line-of-sight direction of the eyes of the user does not fall on the first projection interface displayed on the second device. In a possible implementation, the second device may shoot an image or a video of the eyes of the user via the camera, and perform calculation by using a machine learning algorithm like a deep neural network algorithm, to determine that the line-of-sight direction of the eyes of the user does not fall on the first projection interface displayed on the second device.

When there is one projection interface, FIG. 7(a)-1 and FIG. 7(a)-2 are used as an example. The camera 122 of the vehicle 120 detects that the user pays attention to a road condition ahead in a process of focused driving, with a line of sight falling in front of the vehicle, and does not gaze at the display interface of the map navigation application on the display 121 of the vehicle 120, namely, a projection interface.

When there are a plurality of first devices and a plurality of projection interfaces, FIG. 8(a)-1 to FIG. 8(a)-3 are used as an example. The camera 252 of the smart television 250 detects that the user does not gaze at four projection interfaces that are being displayed on the display 250, but turns the head to look at another place.

When there is one first device, but there are a plurality of projection interfaces, FIG. 9(a)-1 to FIG. 9(a)-3 are used as an example. The camera 325 of the notebook computer 320 detects that the user does not gaze at three projection interfaces displayed on the display 321 of the notebook computer 320.

It should be noted that, that the user does not pay attention to the first projection interface displayed on the second device may be a combination of a plurality of operations. This is not limited in embodiments of this application. The scenario shown in FIG. 7(a)-1 and FIG. 7(a)-2 is used as an example. The camera 122 of the vehicle 120 may detect actions that the user does not gaze at the display 121 and the head of the user turns to an area other than the display 121, that is, detect both a head action and an eye gaze, to determine that the user really does not pay attention to the display interface that is of the map navigation application and that is synchronously displayed on the display 121.

In a possible implementation, the second device may first detect that the head of the user turns to the area other than the first projection interface displayed on the second device, and then detect that the user does not gaze at the first projection interface displayed on the second device. When a turn of the head is detected, a preparation for projection picture adjustment may be made, and a projection picture adjustment strategy is executed after the line of sight of the user is stable. This helps increase a processing speed.

In some embodiments, the second device needs to detect that the user does not gaze at, for specific duration, the first projection interface displayed on the second device, to determine that the user really does not pay attention to the first projection interface. The specific duration may be adaptively set based on different scenarios. For example, in the driving scenario shown in FIG. 7(a)-1 and FIG. 7(a)-2, the duration may be set to 1 second to ensure a quick response. For example, in the scenario of watching the smart television shown in FIG. 8(a)-1 to FIG. 8(a)-3, the duration may be set to 2 seconds. This helps fully confirm that the user really does not pay attention to the display of the smart television, thereby avoiding a misjudgment.

In some embodiments, that the user does not pay attention to the first projection interface displayed on the second device may alternatively be that the user makes a specific gesture to indicate no attention, or the user directly speaks, by voice, a control instruction indicating no attention. This is not limited in embodiments of this application, and details are not listed one by one herein.

In some embodiments, the second device may cyclically and circularly detect, based on a preset time cycle, the first event that the user does not pay attention to the first projection interface displayed on the second device. This helps reduce power consumption of the second device. For example, the preset cycle may be preset on the second device. For example, the preset cycle may be 2 seconds. This is not limited in embodiments of this application.

S1003: The second device sends, to the first device, a first instruction for adjusting a projection effect.

In response to detecting the first event that the user does not pay attention to the first projection interface displayed on the second device, the second device sends, to the first device, the first instruction for adjusting the projection effect.

S1004: The first device adjusts the projection effect of the display interface of the first application according to the received first instruction.

In this embodiment of this application, adjusting the projection effect of the display interface of the first application includes but is not limited to at least one of the following: stopping encoding of a video picture corresponding to the display interface of the first application, stopping encoding of an audio corresponding to the display interface of the first application, or reducing at least one of a bitrate, a frame rate, or resolution of the video picture corresponding to the display interface of the first application.

FIG. 7(a)-1 and FIG. 7(a)-2 are used as an example. After receiving the first instruction sent by the vehicle 120, the smartphone 110 stops encoding of a video picture on the display interface that is of the map navigation application and that is displayed on the display 111, still normally encodes an audio, and sends a bitstream. This reduces power consumption of the smartphone 110 to some extent, thereby increases a battery life. Optionally, the smartphone 110 may alternatively stop both encoding of the video picture and encoding of the audio on the display interface of the map navigation application, and do not send any bitstream. This greatly reduces power consumption of the smartphone 110, thereby improving the battery life.

It should be noted that, when the first device includes display interfaces of a plurality of applications, in consideration of reduction of power consumption, encoding of video pictures on the display interfaces of all the plurality of applications may be stopped, and audios are normally encoded; or encoding of the video pictures and the audios on the display interfaces of all the plurality of applications may be stopped. Alternatively, encoding of a video picture on a display interface of a part of the applications may be stopped, and an audio is normally encoded; or encoding of the video picture and the audio on the display interface of the part of the applications may be stopped. This can also reduce power consumption of the first device. This is not limited in embodiments of this application.

In some other embodiments, the reducing at least one of a bitrate, a frame rate, or resolution of the video picture corresponding to the display interface of the first application includes but is not limited to: reducing, according to a first preset scenario rule, at least one of the bitrate, the frame rate, or the resolution of the video picture corresponding to the display interface of the first application on the first device. The first preset scenario rule includes a bitrate, frame rate, and resolution reduction rule formulated based on application categories to which different application display interfaces belong. The application categories include a video music category, an office photograph category, and a game and other category.

In some embodiments, the reducing, according to a first preset scenario rule, at least one of the bitrate, the frame rate, or the resolution of the video picture corresponding to the display interface of the first application on the first device specifically includes: when the display interface of the first application belongs to the video music category, at a specific time interval, first reducing the encoding bitrate until a lowest-level bitrate, then reducing the frame rate until a lowest-level frame rate, and finally reducing the resolution until lowest-level resolution; when the display interface of the first application belongs to the office photograph category, at a specific time interval, first reducing the frame rate until a lowest-level frame rate, then reducing an encoding bitrate until a lowest-level bitrate, and finally reducing the resolution until lowest-level resolution; or when the display interface of the first application belongs to the game and other category, at a specific time interval, first reducing the encoding bitrate until a lowest-level bitrate, then reducing the resolution until lowest-level resolution, and finally reducing the frame rate until a lowest-level frame rate.

It may be understood that the user has different experience requirements for different categories of application display interfaces. Therefore, importance of bitrates, frame rates, and resolution in encoding strategies corresponding to different categories of application display interfaces is different, and adjustment priorities are also different. For example, an importance sequence of the video music category is: bitrate<frame rate<resolution. Therefore, the bitrate is first reduced, then the frame rate is reduced, and finally the resolution is reduced.

FIG. 8(a)-1 to FIG. 8(a)-3 are used as an example. The smartphones 210, 220, 230, and 240 all receive the first instruction sent by the smart television 250, and respectively adjust bitrates, frame rates, and resolution according to preset scenario rules of categories to which projected application display interfaces belong.

It is assumed that all categories of applications have three levels of encoding bitrates, three levels of frame rates, and three levels of resolution, respectively as shown in Table 1 to Table 3.

It is assumed that encoding bitrates, frame rates, and resolution of four application display interfaces respectively projected by the smartphones 210, 220, 230, and 240 are all shown in Table 1 to Table 3. It is assumed that a time interval cycle is 2 seconds, and the four application display interfaces initially have the encoding bitrates being the highest-level bitrates of 10 mbps, the frame rates being the highest-level frame rates of 60 fps, and the resolution being the highest-level resolution of 1080p. Because a video display interface belongs to the video music category, an encoding importance sequence of the video display interface is: bitrate<frame rate<resolution. Therefore, at the interval of 2 seconds, the smartphones 210 and 240 first reduce, until the lowest-level bitrates, encoding bitrates of video display interfaces projected by the smartphones, then reduce frame rates until the lowest-level frame rates, and finally reduce resolution until the lowest-level resolution. An encoding importance sequence of a photograph display interface is: frame rate<bitrate<resolution. Therefore, at the interval of 2 seconds, the smartphone 220 first reduces, until the lowest-level frame rate, an encoding frame rate of a photograph display interface displayed on the display 221, then reduces a bitrate until the lowest-level bitrate, and finally reduces resolution until the lowest-level resolution. An encoding importance sequence of a game display interface is: bitrate<resolution<frame rate. Therefore, at an interval of 2 seconds, the smartphone 230 first reduces, until the lowest-level bitrate, an encoding bitrate of a game display interface displayed on the display 231, then reduces resolution until the lowest-level resolution, and finally reduces a frame rate until the lowest-level frame rate.

More specifically, changes, with time, of the bitrates, the frame rates, and the resolution of the video display interfaces projected by the smartphones 210 and 240 are shown in Table 4.

**Table 4 Table of the changes, with the time, of the bitrate, the frame rate, and the resolution of the video display interface**

| Time | 2s | 4s | 6s | 8s | 10s | 12s |
|---|---|---|---|---|---|---|
| Bitrate | 5 mbps | 2 mbps | 2 mbps | 2 mbps | 2 mbps | 2 mbps |
| Frame rate | 60 fps | 60 fps | 30 fps | 15 fps | 15 fps | 15 fps |
| Resolution | 1080p | 1080p | 1080p | 1080p | 720p | 360p |

After 12 seconds, the bitrates, the frame rates, and the resolution of the video display interfaces projected by the smartphones 210 and 240 respectively remain unchanged at 2 mbps, 15 fps, and 360p.

Changes, with time, of the bitrate, the frame rate, and the resolution of the photograph display interface displayed on the display 221 of the smartphone 220 are shown in Table 5.

**Table 5 Table of the changes, with the time, of the bitrate, the frame rate, and the resolution of the photograph display interface**

| Time | 2s | 4s | 6s | 8s | 10s | 12s |
|---|---|---|---|---|---|---|
| Bitrate | 10 mbps | 10 mbps | 5 mbps | 2 mbps | 2 mbps | 2 mbps |
| Frame rate | 30 fps | 15 fps | 15 fps | 15 fps | 15 fps | 15 fps |
| Resolution | 1080p | 1080p | 1080p | 1080p | 720p | 360p |

After 12 seconds, the bitrate, the frame rate, and the resolution of the photograph display interface displayed on the display 221 of the smartphone 220 respectively remain unchanged at 2 mbps, 15 fps, and 360p.

Changes, with time, of the bitrate, the frame rate, and the resolution of the game display interface displayed on the display 231 of the smartphone 230 are shown in Table 6.

**Table 6 Table of the changes, with the time, of the bitrate, the frame rate, and the resolution of the game display interface**

| Time | 2s | 4s | 6s | 8s | 10s | 12s |
|---|---|---|---|---|---|---|
| Bitrate | 5 mbps | 2 mbps | 2 mbps | 2 mbps | 2 mbps | 2 mbps |
| Frame rate | 60 fps | 60 fps | 60 fps | 60 fps | 30 fps | 15 fps |
| Resolution | 1080p | 1080p | 720p | 360p | 360p | 360p |

After 12 seconds, the bitrate, the frame rate, and the resolution of the game display interface displayed on the display 231 of the smartphone 230 respectively remain unchanged at 2 mbps, 15 fps, and 360p.

FIG. 9(a)-1 to FIG. 9(a)-3 are used as another example. The smartphone 310 receives the first instruction sent by the notebook computer 320, and adjusts a bitrate, a frame rate, and resolution according to a preset scenario rule of a category to which a projected application belongs. Same as the assumption in FIG. 8(a)-1 to FIG. 8(a)-3 : It is assumed that all categories of applications have three levels of encoding bitrates, three levels of frame rates, and three levels of resolution, respectively as shown in Table 1 to Table 3, a time interval cycle is also 2 seconds, and the default mobile home screen 312, the messaging display interface 314, and the video display interface 315 initially have encoding bitrates being the highest-level bitrates of 10 mbps, the frame rates being the highest-level frame rates of 60 fps, and the resolution being the highest-level resolution of 1080p.

Changes, with time, of the bitrate, the frame rate, and resolution of the default mobile home screen 312 projected by the smartphone 310 are shown in Table 7.

**Table 7 Table of the changes, with the time, of the bitrate, the frame rate, and the resolution of the default mobile home screen 312**

| Time | 2s | 4s | 6s | 8s | 10s | 12s |
|---|---|---|---|---|---|---|
| Bitrate | 5 mbps | 2 mbps | 2 mbps | 2 mbps | 2 mbps | 2 mbps |
| Frame rate | 60 fps | 60 fps | 60 fps | 60 fps | 30 fps | 15 fps |
| Resolution | 1080p | 1080p | 720p | 360p | 360p | 360p |

After 12 seconds, the bitrate, the frame rate, and the resolution of the default mobile home screen 312 displayed on the smartphone 310 respectively remain unchanged at 2 mbps, 15 fps, and 360p.

Changes, with time, of the bitrate, the frame rate, and resolution of the messaging display interface 314 projected by the smartphone 310 are shown in Table 8.

**Table 8 Table of the changes, with the time, of the bitrate, the frame rate, and the resolution of the messaging display interface 314**

| Time | 2s | 4s | 6s | 8s | 10s | 12s |
|---|---|---|---|---|---|---|
| Bitrate | 10 mbps | 10 mbps | 5 mbps | 2 mbps | 2 mbps | 2 mbps |
| Frame rate | 30 fps | 15 fps | 15 fps | 15 fps | 15 fps | 15 fps |
| Resolution | 1080p | 1080p | 1080p | 1080p | 720p | 360p |

After 12 seconds, the bitrate, the frame rate, and the resolution of the messaging display interface 314 projected by the smartphone 310 respectively remain unchanged at 2 mbps, 15 fps, and 360p.

Changes, with time, of the bitrate, the frame rate, and resolution of the video display interface 315 projected by the smartphone 310 are shown in Table 9.

**Table 9 Table of the changes, with the time, of the bitrate, the frame rate, and the resolution of the video display interface 315**

| Time | 2s | 4s | 6s | 8s | 10s | 12s |
|---|---|---|---|---|---|---|
| Bitrate | 5 mbps | 2 mbps | 2 mbps | 2 mbps | 2 mbps | 2 mbps |
| Frame rate | 60 fps | 60 fps | 30 fps | 15 fps | 15 fps | 15 fps |
| Resolution | 1080p | 1080p | 1080p | 1080p | 720p | 360p |

After 12 seconds, the bitrate, the frame rate, and the resolution of the video display interface 315 projected by the smartphone 310 respectively remain unchanged at 2 mbps, 15 fps, and 360p.

In FIG. 8(a)-1 to FIG. 8(a)-3 and FIG. 9(a)-1 to FIG. 9(a)-3, an example in which the encoding bitrate, the frame rate, and the resolution of the video picture corresponding to the display interface of the first application on the first device are reduced is used. It should be noted that, when the first device includes the display interfaces of the plurality of applications, in consideration of reduction of power consumption, bitrates, frame rates, and resolution of the video pictures corresponding to the display interfaces of all the plurality of applications may be reduced according to the first preset scenario rule, or a bitrate, a frame rate, and resolution of the video picture corresponding to the display interface of the part of the applications may be reduced according to the first preset scenario rule. This is not limited in embodiments of this application.

It should be noted that, in FIG. 8(a)-1 to FIG. 8(a)-3 and FIG. 9(a)-1 to FIG. 9(a)-3, an example in which the bitrates, the frame rates, and the resolution of the video pictures corresponding to the display interfaces of the applications on the respective first devices (there are a plurality of first devices in FIG. 8(a)-1 to FIG. 8(a)-3) are respectively reduced according to the specified preset scenario rule is used. In a possible implementation, in FIG. 8(a)-1 to FIG. 8(a)-3 and FIG. 9(a)-1 to FIG. 9(a)-3, one or any two of the bitrates, the frame rates, and the resolution of the video pictures corresponding to the display interfaces of the applications on the respective first devices may alternatively be respectively reduced according to the specified preset scenario rule. This is not limited in this application.

In this embodiment of this application, that the first device adjusts the projection effect of the display interface of the first application according to the first instruction further includes: skipping displaying the display interface of the first application on the first device or skipping refreshing the display interface of the first application on the first device.

It should be noted that, when the first device includes the display interfaces of the plurality of applications, in consideration of reduction of power consumption, the display interfaces of all the applications may not be displayed or not refreshed, or the display interface of the part of the applications may not be displayed or not refreshed. This can also reduce power consumption of the first device. This is not limited in embodiments of this application.

FIG. 7(a)-1 and FIG. 7(a)-2 are used as an example. The display 111 of the smartphone 110 is adjusted from displaying the display interface of the map navigation application in FIG. 1A and FIG. 1B to no longer displaying the display interface of the map navigation application. Because the audio is still encoded, the smartphone 110 still sends the audio to the vehicle 120.

In some other embodiments, the first device reduces the bitrate, the frame rate, and the resolution of the display interface of the first application on the first device according to the first preset scenario rule. Therefore, display definition of the display interface of the first application is naturally reduced, and a display effect does not need to be additionally adjusted.

FIG. 8(a)-1 to FIG. 8(a)-3 are used as an example. As the smartphones (the plurality of first devices) reduce according to the first preset scenario rule, the bitrates, the frame rates, and the resolution of the video pictures corresponding to the respective application display interfaces, display definition of the application display interfaces on the smartphones is naturally reduced, that is, becomes blurred.

FIG. 9(a)-1 to FIG. 9(a)-3 are used as another example. As the smartphone 310 reduces the bitrates, the frame rates, and the resolution of the default mobile home screen 312, the messaging display interface 314, and the video display interface 315 according to the first preset scenario rule, display definition of the foregoing three application display interfaces is naturally reduced.

After step S1004 is performed, in a possible implementation, the first device stops displaying the display interface of the first application, and does not need to project, onto the second device for synchronous display, the display interface that is of the first application and that is obtained after the projection effect is adjusted, that is, the second device stops displaying the first projection interface.

FIG. 7(a)-1 and FIG. 7(a)-2 are used as an example. The display 111 of the smartphone 110 is screen-off, and the display 121 of the vehicle 120 no longer synchronously displays the display interface of the map navigation application. Audio data on the smartphone 110 is still synchronously broadcast, for example, "The speed limit on the road ahead is 60 km/h".

Optionally, after step S1004, the method further includes optional steps S1005 and S1006.

S1005: The first device projects, onto the second device, the display interface that is of the first application and that is obtained after the projection effect is adjusted according to the first instruction.

S1006: The second device displays the first projection interface obtained after the projection effect is adjusted.

In this embodiment of this application, the first projection interface obtained after the projection effect is adjusted corresponds to the display interface that is of the first application on the first device and that is obtained after the projection effect is adjusted.

FIG. 8(a)-1 to FIG. 8(a)-3 are used as an example. The display 251 of the smart television 250 synchronously displays the application display interfaces that are obtained after projection effects are adjusted and that are respectively projected by the smartphones 210, 220, 230, and 240.

FIG. 9(a)-1 to FIG. 9(a)-3 are used as an example. The default mobile home screen 312, the messaging display interface 314, and the video display interface 315 that are obtained after projection effects are adjusted and that are on the smartphone 310 are projected onto the display 321 of the notebook computer 320 and synchronously displayed as the default mobile home screen 322, the messaging display interface 323, and the video display interface 324.

In some embodiments, the first projection interface that is obtained after the projection effect is adjusted and that is displayed on the second device may alternatively include at least one of the following: the first projection interface that is scaled down and displayed, the first projection interface that is displayed on an edge of a screen, or the first projection interface for which at least one of a bitrate, a frame rate, and resolution is reduced.

For example, the video display interface 253 displayed on the display 251 of the smart television 250 in FIG. 8(a)-1 to FIG. 8(a)-3 may be scaled down and displayed, displayed on an edge of the screen 251, or scaled down and displayed on the edge of the screen 251. In addition, the video display interface 253 corresponds to the video display interface on the display 211 of the mobile phone 210. Definition of the video display interface on the display 211 is reduced by reducing at least one of a bitrate, a frame rate, and resolution of the video display interface in step S1004. Correspondingly, definition of the video display interface 253 is also reduced.

For another example, the messaging display interface 323 displayed on the display 321 of the notebook computer 320 in FIG. 9(a)-1 to FIG. 9(a)-3 may be scaled down and displayed, displayed on an edge of the screen 321, or scaled down and displayed on the edge of the screen 321. In addition, the messaging display interface 323 corresponds to the messaging display interface 314 on the virtual screen 313 of the mobile phone 310. Definition of the messaging display interface 314 is reduced by reducing at least one of a bitrate, a frame rate, and resolution in step S1004. Correspondingly, definition of the messaging display interface 323 is also reduced.

In some embodiments, in response to an emergency event, the first device may restore, to the projection effect obtained before the projection effect is adjusted according to the first instruction, the projection effect of the display interface that is of the first application and that is obtained after the projection effect is adjusted. The second device may also restore display of the first projection interface.

For example, the scenario in FIG. 7(a)-1 and FIG. 7(a)-2 changes to the scenario in FIG. 7(c)-1 and FIG. 7(c)-2. Initially, the camera 122 detects that the user always pays attention to the road condition ahead, and adjustment shown in FIG. 7(a)-1 and FIG. 7(a)-2 is performed: The smartphone 110 stops encoding of the video picture, and encodes only the audio; and the display 111 is screen-off. The map navigation application on the smartphone 110 learns, through calculation in a background, that a right turn needs to be performed at a close distance ahead. For safety, the smartphone 110 restarts encoding of the video picture for the display interface of the map navigation application, and transmits an encoded bitstream of the video picture and an encoded bitstream of the audio to the vehicle 120. The display 111 of the smartphone 110 re-displays the display interface of the map navigation application and synchronizes the display interface to the display 121 of the vehicle 120 for display, as shown in FIG. 7(c)-1 and FIG. 7(c)-2.

It should be noted that the right turn is merely an example of the emergency event in FIG. 7(c)-1 and FIG. 7(c)-2, and the emergency event may alternatively be any emergency situation encountered in a driving process, for example, emergency braking, an emergency stop, emergency acceleration, or emergency avoidance. This is not limited in embodiments of this application.

In the scenario shown in FIG. 7(c)-1 and FIG. 7(c)-2, alternatively, the vehicle 120 may respond to the emergency event, namely, the right turn, and the vehicle 120 sends, to the smartphone 110, an instruction for restoring a projection effect. The smartphone 110 restarts encoding of the video picture for the display interface of the map navigation application according to the instruction, and transmits the bitstream of the video picture and the bitstream of the audio to the vehicle 120. The display 111 of the smartphone 110 displays the display interface of the map navigation application and synchronizes the display interface to the display 121 of the vehicle 120 for display. This is not limited in embodiments of this application.

After steps S1005 and S1006 are performed, in this embodiment of this application, the first device is in a low-power-consumption operating state without affecting subjective visual experience of the user. This saves power, and increases the battery life.

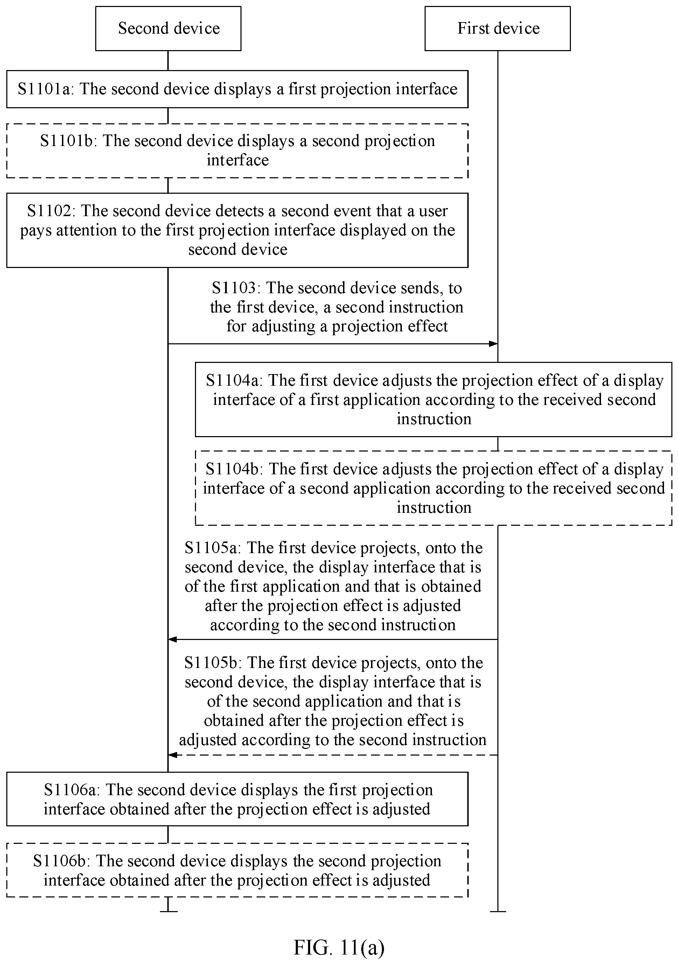

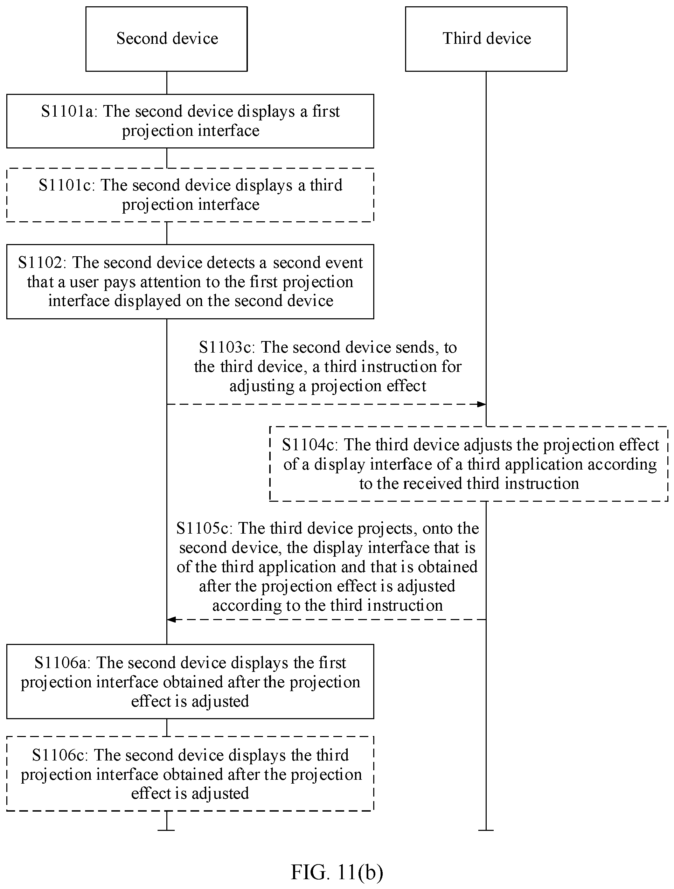

When the user pays attention to the first projection interface displayed on the second device, the projection method provided in this embodiment of this application may include the following steps S1101a to S1106b shown in FIG. 11(a) and the following steps S 1101a to S1106c shown in FIG. 11(b).

It should be noted that steps S1102 to S1106b may be performed before or after steps S1002 to S1006, or may be performed in parallel with steps S1002 to S1006. This is not limited in embodiments of this application. It should be understood that the specific order of the steps described in FIG. 11(a) and FIG. 11(b) is merely an example, and is not intended to indicate that the order is a unique order in which these steps may be performed. A person of ordinary skill in the art may learn a plurality of manners of permutating the steps described in this application.

S1101a: The second device displays the first projection interface.

For step S1101a, refer to the descriptions of S1001 in the foregoing embodiment. Details are not described again.

Optionally, when the second device further displays a second projection interface, the projection method provided in this embodiment of this application may include step S1101b.

S1101b: The second device displays the second projection interface.

In this embodiment of this application, the second projection interface corresponds to a display interface of a second application on the first device, and the display interface of the second application is a part or all of all display interfaces on the first device. That the second device displays the second projection interface means that the second device synchronously displays the display interface that is of the second application and that is projected by the first device onto the second device.

It should be understood that, due to the limitation like the shape or the size, the sizes and the forms of the display interfaces of the second device and the first device are different, content on the second projection interface is at least the same as that on the corresponding display interface of the second application on the first device, and display sizes and forms may be different.

FIG. 3A and FIG. 3B are used as an example. The second device is the notebook computer 320. The notebook computer displays the three projection interfaces. The default mobile home screen 322 (the projection interface) corresponds to the default mobile home screen 312 on the smartphone 310. The messaging display interface 323 (the projection interface) corresponds to the messaging display interface 314 on the smartphone 310. The video display interface 324 (the projection interface) corresponds to the video display interface 315 on the smartphone 310. It is assumed that the video display interface 324 is selected as the first projection interface, the corresponding display interface of the first application is the video display interface 315 on the smartphone 310. The messaging display interface 323 is the second projection interface, and the corresponding messaging display interface 314 on the smartphone 310 is the display interface of the second application. The second projection interface may alternatively be the default mobile home screen 322, and the corresponding default mobile home screen 312 on the smartphone 310 is the display interface of the second application.

S1102: The second device detects a second event that the user pays attention to the first projection interface displayed on the second device.

In this embodiment of this application, the second event that the user pays attention to the first projection interface displayed on the second device may include but is not limited to at least one of the following events: The user gazes at the first projection interface, the head of the user turns to the first projection interface, or the user touches the first projection interface.

When there is one projection interface, FIG. 7(b)-1 and FIG. 7(b)-2 are used as an example. When the user needs to view the display interface of the map navigation application, the camera 122 of the vehicle 120 detects that the user gazes at the display interface of the map navigation application displayed on the display 121.

When there are a plurality of first devices and a plurality of projection interfaces, FIG. 8(b)-1 to FIG. 8(b)-3 are used as an example. The camera 252 of the smart television 250 detects that the user gazes at the video display interface 253 on the upper left in the four application display interfaces that are being synchronously displayed on the display 250.

When there is one first device but there are a plurality of projection interfaces, refer to the scenario shown in FIG. 9(b)-1 and FIG. 9(b)-2. At least one of the following events may indicate that the user pays attention to the video display interface 324.
1. The display 321 of the notebook computer 320 detects that the user taps the display 321 (with the touch function) to choose to pay attention to the video display interface 324.
2. The camera 325 of the notebook computer 320 detects that the user gazes at the video display interface 324.

In FIG. 9(b)-1 and FIG. 9(b)-2, the first device is the smartphone 310, and the second device is the notebook computer 320. The smartphone 310 projects the default mobile home screen 312, the messaging display interface 314, and the video display interface 315 onto the display 321 of the notebook computer 320 for synchronous display. The notebook computer 320 displays the three projection interfaces. The default mobile home screen 322 (the projection interface) corresponds to the default mobile home screen 312 on the smartphone 310. The messaging display interface 323 (the projection interface) corresponds to the messaging display interface 314 on the smartphone 310. The video display interface 324 (the projection interface) corresponds to the video display interface 315 on the smartphone 310. In step S1102, if the user pays attention to the video display interface 324, the video display interface 324 is the first projection interface. In this case, the corresponding display interface of the first application is the video display interface 315 on the smartphone 310. The messaging display interface 323 is the second projection interface in step S1101b, and the corresponding messaging display interface 314 on the smartphone 310 is the display interface of the second application. The default mobile home screen 322 is also the second projection interface in step S1101b, and the corresponding default mobile home screen 312 on the smartphone 310 is the display interface of the second application.

It should be noted that, that the user pays attention to the first projection interface displayed on the second device may be a combination of a plurality of operations. This is not limited in embodiments of this application. The scenario shown in FIG. 7(b)-1 and FIG. 7(b)-2 is used as an example. The camera 122 of the vehicle 120 may detect actions that the user gazes at the display 121 and the head of the user turns to the display 121, to determine that a focus of the user is really on the display interface that is of the map navigation application and that is displayed on the display 121.

In some embodiments, the second device needs to detect that the user gazes at, for specific duration, the first projection interface displayed on the second device, to determine that the focus of the user is really on the first projection interface. The specific duration may be adaptively set based on different scenarios. For example, in the driving scenario shown in FIG. 7(b)-1 and FIG. 7(b)-2, the duration may be set to 1 second to ensure the quick response. For example, in the scenario of watching the smart television shown in FIG. 8(b)-1 to FIG. 8(b)-3, the duration may be set to 2 seconds. This helps fully confirm that the user really does not pay attention to the display of the smart television, thereby avoiding a misjudgment.

In some embodiments, that the user pays attention to the first projection interface displayed on the second device may alternatively be that the user makes a specific gesture to indicate paying attention to the first projection interface, or the user directly speaks, by voice, a control instruction indicating paying attention to the first projection interface. This is not limited in embodiments of this application, and details are not listed one by one herein.

In some embodiments, the second device may cyclically and circularly detect, based on a preset time cycle, the second event that the user pays attention to the first projection interface displayed on the second device. This helps reduce power consumption of the second device. For example, the preset cycle may be preset on the second device. For example, the preset cycle may be 2 seconds. This is not limited in embodiments of this application.

S1103: The second device sends, to the first device, a second instruction for adjusting a projection effect.

In response to detecting the second event that the user pays attention to the first projection interface displayed on the second device, the second device sends, to the first device, the second instruction for adjusting the projection effect.

S1104a: The first device adjusts the projection effect of the display interface of the first application according to the received second instruction.

In this embodiment of this application, that the first device adjusts the projection effect of the display interface of the first application according to the second instruction includes at least one of the following: starting encoding of the video picture corresponding to the display interface of the first application, starting encoding of the audio corresponding to the display interface of the first application, or increasing at least one of the bitrate, the frame rate, or the resolution of the video picture corresponding to the display interface of the first application.

For example, FIG. 7(a)-1 and FIG. 7(a)-2 change to FIG. 7(b)-1 and FIG. 7(b)-2. After receiving the second instruction sent by the vehicle 120, the smartphone 110 restarts encoding of the video picture on the display interface that is of the map navigation application and that is displayed on the display 111. Therefore, the display 111 re-displays the video picture on the display interface of the map navigation application, as shown in FIG. 7(b)-1 and FIG. 7(b)-2. In FIG. 7(a)-1 and FIG. 7(a)-2, encoding of the audio is normal, and therefore does not need to be restarted. Optionally, if the smartphone 110 previously stops encoding of the video picture and the audio on the display interface of the map navigation application, encoding of the video picture and the audio needs to be restarted in FIG. 7(b)-1 and FIG. 7(b)-2.

It should be noted that, when the first device displays the display interfaces of the plurality of applications, if encoding of the video pictures on the display interfaces of all the plurality of applications is previously stopped (the audios are normally encoded), or encoding of the video pictures and the audios on the display interfaces of all the plurality of applications is previously stopped, in this step, encoding of the video picture on the display interface of the part or all of the applications may be restarted (the audios are normally encoded), or encoding of the video picture and the audio on the display interface of the part or all of the applications may be restarted. This is not limited in embodiments of this application.

In some other embodiments, increasing at least one of the bitrate, the frame rate, or the resolution of the video picture corresponding to the display interface of the first application includes but is not limited to: increasing, according to a second preset scenario rule, the bitrate, the frame rate, and the resolution of the video picture corresponding to the display interface of the first application. The second preset scenario rule includes a bitrate, frame rate, and resolution increase or reduction rule formulated based on application categories to which different application display interfaces belong. The application categories include the video music category, the office photograph category, and the game and other category.

In a possible embodiment, the increasing, according to a second preset scenario rule, the bitrate, the frame rate, and the resolution of the video picture corresponding to the display interface of the first application includes but is not limited to: when the display interface of the first application belongs to the video music category, at a specific time interval, first increasing the encoding resolution until highest-level resolution, then increasing the frame rate until a highest-level frame rate, and finally increasing the bitrate until a highest-level bitrate; when the display interface of the first application belongs to the office photograph category, at a specific time intervals, first increasing the resolution until highest-level resolution, then increasing the encoding bitrate until a highest-level bitrate, and finally increasing the frame rate until a highest-level frame rate; or when the display interface of the first application belongs to the game and other category, at a specific time interval, first increasing the encoding frame rate until a highest-level frame rate, then increasing the resolution until highest-level resolution, and finally increasing the bitrate until a highest-level bitrate.

For example, the scenario shown in FIG. 8(a)-1 to FIG. 8(a)-3 ) changes to the scenario shown in FIG. 8(b)-1 to FIG. 8(b)-3. After receiving the second instruction sent by the smart television 250, the smartphone 210 increases the bitrate, the frame rate, and the resolution of the video display interface displayed on the display 211. The video display interface belongs to the video music category. The resolution, the frame rate, and the bitrate are increased in sequence based on importance. It is still assumed that a time interval is 2 seconds, and the encoding bitrate, the frame rate, and the resolution of the video display interface separately have three levels, as shown in Table 1 to Table 3. In this case, after 2 seconds, the video display interface on the display 211 changes from (the bitrate of 2 mbps, the frame rate of 30 fps, and the resolution of 1080p) shown in FIG. 8(a)-1 to FIG. 8(a)-3 to (the bitrate of 2 mbps, the frame rate of 60 fps, and the resolution of 1080p) shown in FIG. 8(b)-1 to FIG. 8(b)-3. Changes, with time, of the bitrate, the frame rate, and the resolution of the video display interface are shown in Table 10.

**Table 10 Table of the changes, with the time, of the bitrate, the frame rate, and the resolution of the video display interface displayed on the display 211**

| Time | 2s | 4s | 6s |
|---|---|---|---|
| Bitrate | 2 mbps | 5 mbps | 10 mbps |
| Frame rate | 60 fps | 60 fps | 60 fps |
| Resolution | 1080p | 1080p | 1080p |

The resolution of the video display interface reaches the highest-level resolution. Therefore, the frame rate is increased after 2 seconds based on priorities. After 6 seconds, the bitrate, the frame rate, and the resolution of the video display interface respectively remain unchanged at 10 mbps, 60 fps, and 1080p. According to the foregoing steps, the smartphone 210 may restore from a state of low power consumption to a state of normal encoding, without affecting visual experience of the user.

In another possible implementation, if the smartphone 210 previously reduces the one or any two of the bitrate, the frame rate, and the resolution of the video display interface according to the specified preset scenario rule, correspondingly, the smartphone 210 may also increase the one or any two of the bitrate, the frame rate, and the resolution of the video display interface according to the specified preset scenario rule. This is not limited in embodiments of this application.

For another example, the scenario shown in FIG. 9(a)-1 to FIG. 9(a)-3 changes to the scenario shown in FIG. 9(c)-1 and FIG. 9(c)-2. After receiving the second instruction sent by the notebook computer 320, the smartphone 310 increases the bitrate, the frame rate, and the resolution of the video display interface 315 displayed on the virtual screen 313. The video display interface 315 belongs to the video music category. The resolution, the frame rate, and the bitrate are increased in sequence based on importance. It is still assumed that a time interval is 2 seconds, and the encoding bitrate, the frame rate, and the resolution of the video display interface separately have three levels, as shown in Table 1 to Table 3. In this case, after 2 seconds, the video display interface 315 changes from (the bitrate of 2 mbps, the frame rate of 30 fps, and the resolution of 1080p) shown in FIG. 9(a)-1 to FIG. 9(a)-3 to (the bitrate of 2 mbps, the frame rate of 60 fps, and the resolution of 1080p) shown in FIG. 9(c)-1 and FIG. 9(c)-2. Changes, with time, of the bitrate, the frame rate, and the resolution of the video display interface are shown in Table 11.

**Table 11 Table of the changes, with the time, of the bitrate, the frame rate, and the resolution of the video display interface 315**

| Time | 2s | 4s | 6s |
|---|---|---|---|
| Bitrate | 2 mbps | 5 mbps | 10 mbps |
| Frame rate | 60 fps | 60 fps | 60 fps |
| Resolution | 1080p | 1080p | 1080p |

The resolution of the video display interface reaches the highest-level resolution. Therefore, the frame rate is increased after 2 seconds based on priorities. After 6 seconds, the bitrate, the frame rate, and the resolution of the video display interface 315 respectively remain unchanged at 10 mbps, 60 fps, and 1080p.

In another possible implementation, if the smartphone 310 previously reduces the one or any two of the bitrate, the frame rate, and the resolution of the video display interface 315 according to the specified preset scenario rule, correspondingly, the smartphone 310 may also increase the one or any two of the bitrate, the frame rate, and the resolution of the video display interface 315 according to the specified preset scenario rule. This is not limited in embodiments of this application.

In some embodiments, that the first device adjusts the projection effect of the display interface of the first application according to the second instruction further includes: The first device displays the display interface of the first application or refreshes the display interface of the first application.

For example, the scenario in FIG. 7(a)-1 and FIG. 7(a)-2 changes to the scenario in FIG. 7(b)-1 and FIG. 7(b)-2. The display 111 of the smartphone 110 re-displays the display interface of the map navigation application.

For another example, the scenario in FIG. 8(a)-1 to FIG. 8(a)-3 changes to the scenario in FIG. 8(b)-1 to FIG. 8(b)-3. If the video display interface on the smartphone 210 does not refresh the picture in FIG. 8(a)-1 to FIG. 8(a)-3, in FIG. 8(b)-1 to FIG. 8(b)-3, after the camera 252 detects that the user gazes at the video display interface 253 on the upper left of the display 251, the video display interface on the display 211 of the smartphone 210 refreshes the picture anew.

For still another example, the scenario in FIG. 9(a)-1 to FIG. 9(a)-3 changes to the scenario in FIG. 9(c)-1 and FIG. 9(c)-2. If the video display interface 315 on the smartphone 310 does not refresh the picture in FIG. 9(a)-1 to FIG. 9(a)-3, after the user touches the video display interface 324 synchronously displayed on the display 321 of the notebook computer 320, the video display interface 315 on the smartphone 310 refreshes the picture anew in FIG. 9(c)-1 and FIG. 9(c)-2.

Optionally, when the second device further displays the second projection interface, the projection method provided in this embodiment of this application may include step S1104b.

S1104b: The first device adjusts a projection effect of the display interface of the second application according to the received second instruction.

In this embodiment of this application, that the first device adjusts a projection effect of the display interface of the second application according to the received second instruction includes but is not limited to: stopping encoding of a video picture corresponding to the display interface of the second application, stopping encoding of an audio corresponding to the display interface of the second application, or reducing at least one of a bitrate, a frame rate, or resolution of the video picture corresponding to the display interface of the second application.

In some embodiments, the reducing at least one of a bitrate, a frame rate, or resolution of the video picture corresponding to the display interface of the second application includes: when the display interface of the second application belongs to the video music category, at a specific time interval, first reducing the encoding bitrate until a lowest-level bitrate, then reducing the frame rate until a lowest-level frame rate, and finally reducing the resolution until lowest-level resolution; when the display interface of the second application belongs to the office photograph category, at a specific time interval, first reducing the frame rate until a lowest-level frame rate, then reducing an encoding bitrate until a lowest-level bitrate, and finally reducing the resolution until lowest-level resolution; or when the display interface of the second application belongs to the game and other category, at a specific time interval, first reducing the encoding bitrate until a lowest-level bitrate, then reducing the resolution until lowest-level resolution, and finally reducing the frame rate until a lowest-level frame rate.

For example, the scenario shown in FIG. 9(a)-1 to FIG. 9(a)-3 changes to the scenario shown in FIG. 9(c)-1 and FIG. 9(c)-2. The default mobile home screen 322 and the messaging display interface 323 that are synchronously displayed on the display 321 are application display interfaces that the user does not pay attention to. The default mobile home screen 312 displayed on the display 311 of the smartphone 310 belongs to the game and other category, and the bitrate, the resolution, and the frame rate are reduced in sequence based on importance. The messaging display interface 314 displayed on the virtual screen 313 of the smartphone 310 belongs to the office photograph category, and the frame rate, the bitrate, and the resolution are reduced in sequence based on importance. It is still assumed that a time interval is 2 seconds, and the bitrates, the frame rates, and the resolution of the foregoing two application display interfaces separately have three levels, as shown in Table 1 to Table 3. In this case, after 2 seconds, the foregoing three application display interfaces change from the bitrates, the frame rates, and the resolution shown in FIG. 9(a)-1 to FIG9(a)-3 to bitrates, frame rates, and resolution shown in FIG. 9(c)-1 and FIG. 9(c)-2. More specifically, changes, with time, of the bitrates, the frame rates, and the resolution of the foregoing two application display interfaces are respectively shown in Table 12 and Table 13.

**Table 12 Table of the changes, with the time, of the bitrate, the frame rate, and the resolution of the default mobile home screen 312**

| Time | 2s | 4s | 6s |
|---|---|---|---|
| Bitrate | 2 mbps | 2 mbps | 2 mbps |
| Frame rate | 60 fps | 30 fps | 15 fps |
| Resolution | 360p | 360p | 360p |

**Table 13 Table of the changes, with the time, of the bitrate, the frame rate, and the resolution of the messaging display interface 314**

| Time | 2s | 4s | 6s |
|---|---|---|---|
| Bitrate | 2 mbps | 2 mbps | 2 mbps |
| Frame rate | 15 fps | 15 fps | 15 fps |
| Resolution | 1080p | 720p | 360p |

After 6 seconds, the bitrates, the frame rates, and the resolution of the foregoing two application display interfaces respectively remain unchanged at lowest levels of 2 mbps, lowest levels of 15 fps, and lowest levels of 360p.

In another possible implementation, the one or any two of the bitrates, the frame rates, and the resolution of the default mobile home screen 312 displayed on the display 311 of the smartphone 310 and the messaging display interface 314 displayed on the virtual screen 313 may alternatively be reduced. This is not limited in this application.

S1105a: The first device projects, onto the second device, the display interface that is of the first application and that is obtained after the projection effect is adjusted according to the second instruction.

Optionally, when the second device further displays the second projection interface, the projection method provided in this embodiment of this application may include step S1105b.

S1105b: The first device projects, onto the second device, the display interface that is of the second application and that is obtained after a projection effect is adjusted according to the second instruction.

S1106a: The second device displays the first projection interface obtained after the projection effect is adjusted.

In this embodiment of this application, the first projection interface obtained after the projection effect is adjusted corresponds to the display interface that is of the first application on the first device and that is obtained after the projection effect is adjusted according to the second instruction.

For example, the scenario in FIG. 7(a)-1 and FIG. 7(a)-2 changes to the scenario in FIG. 7(b)-1 and FIG. 7(b)-2. The smartphone 110 projects, onto the display 121 of the vehicle 120 for synchronous display, the display interface that is of the map navigation application and that is redisplayed on the display 111.

For another example, the scenario in FIG. 8(a)-1 to FIG. 8(a)-3 changes to the scenario in FIG. 8(b)-1 to FIG. 8(b)-3. If the video display interface on the smartphone 210 does not previously refresh the picture in FIG. 8(a)-1 to FIG. 8(a)-3, the video display interface on the display 211 of the smartphone 210 refreshes the picture anew, and is projected onto the display 251 of the smart television 250 for synchronous display.

For still another example, the scenario in FIG. 9(a)-1 to FIG. 9(a)-3 changes to the scenario in FIG. 9(c)-1 and FIG. 9(c)-2. If the video display interface 315 on the smartphone 310 does not previously refresh the picture in FIG. 9(a)-1 to FIG. 9(a)-3, the video display interface 315 refreshes the picture anew, is projected onto the display 321 of the notebook computer 320, and is synchronously displayed as the video display interface 324.

In a possible implementation, the first projection interface obtained after the projection effect is adjusted includes at least one of the following:
the first projection interface that is scaled up and displayed, the first projection interface that is displayed in a middle, or the first projection interface for which at least one of the bitrate, the frame rate, and the resolution is increased.

For example, the first projection interface obtained after the projection effect is adjusted may be the first projection interface that is scaled up and displayed in the middle.

Scenarios changing from FIG. 8(a)-1 to FIG. 8(c)-3 are used as an example. An initial scenario is shown in FIG. 8(a)-1 to FIG. 8(a)-3. When the camera 252 detects that the user gazes at the video display interface 253 on the upper left of the display 251, the scenario changes to that in FIG. 8(b)-1 to FIG. 8(b)-3, and then may also quickly change to that in FIG. 8(c)-1 to FIG. 8(c)-3. In FIG. 8(c)-1 to FIG. 8(c)-3, the smartphone 210 sends, to the smart television 250, an instruction for scaling up the video display interface 253 synchronously displayed on the smart television 250 and displaying the video display interface in the middle. The smart television 250 scales up the video display interface 253 and displays the video display interface in the middle.

Scenarios changing from FIG. 9(a)-1 to FIG. 9(c)-2 are used as another example. An initial scenario is shown in FIG. 9(a)-1 to FIG. 9(a)-3. After the display 321 responds to the tap operation shown in FIG. 9(b)-1 and FIG. 9(b)-2 to indicate paying attention to the video display interface 324, the scenario changes to that in FIG. 9(c)-1 and FIG. 9(c)-2. The smartphone 310 sends, to the notebook computer 320, an instruction for scaling up the video display interface 324 synchronously displayed on the notebook computer 320 and displaying the video display interface in the middle. The notebook computer 320 scales up the video display interface 324 and displays the video display interface in the middle.

In a possible implementation, a specific process of scaling up the first projection interface includes:
calculating a scale-up ratio, where if a size of the first projection interface displayed on the second device is a₁×b₁, and a size of a display area of the second device is a₂×b₂, the scale-up ratio is a smaller value in a₂/a₁ and b₂/b₁, where a₁ is a length of the first projection interface, b₁ is a width of the first projection interface, a₂ is a length of the display area of the second device, and b₂ is a width of the display area of the second device; and multiplying the scale-up ratio by the size a₁×b₁ of the first projection interface, to scale up the first projection interface.

Optionally, when the second device further displays the second projection interface, the projection method provided in this embodiment of this application may include step S1106b.

In this embodiment of this application, the second projection interface obtained after the projection effect is adjusted corresponds to the display interface that is of the second application on the first device and that is obtained after the projection effect is adjusted according to the second instruction.

In a possible implementation, the second projection interface obtained after the projection effect is adjusted includes at least one of the following: the second projection interface that is scaled down and displayed, the second projection interface that is displayed on the edge of the screen, or the second projection interface for which at least one of a bitrate, a frame rate, and resolution is reduced.

For example, the second projection interface obtained after the projection effect is adjusted may be the second projection interface that is scaled down and displayed on the edge of the screen.

The scenarios changing from FIG. 9(a)-1 to FIG. 9(c)-2 are used as an example. The initial scenario is shown in FIG. 9(a)-1 to FIG. 9(a)-3. After the display 321 responds to the tap operation shown in FIG. 9(b)-1 and FIG. 9(b)-2 to indicate paying attention to the video display interface 324, the scenario changes to that in FIG. 9(c)-1 and FIG. 9(c)-2. The smartphone 310 sends, to the notebook computer 320, an instruction for scaling down the default mobile home screen 312 synchronously displayed on the notebook computer and placing the default mobile home screen on the left edge of the display 321 for display. The notebook computer 320 scales down the default mobile home screen 312 and places the default mobile home screen on the left edge of the display 321. The smartphone 310 sends, to the notebook computer 320, an instruction for scaling down the messaging display interface 313 synchronously displayed on the notebook computer and placing the messaging display interface on the right edge of the display 321 for display. The notebook computer 320 scales down the messaging display interface 313 and places the messaging display interface on the right edge of the display 321.

In some embodiments, scaling down and displaying the second projection interface specifically includes:
calculating a scale-down ratio, where if a size of the second projection interface displayed on the second device is a₃×b₃, and the size of the display area of the second device is a₂×b₂, the scale-down ratio is a smaller value in a₂/a₃ and b₂/b₃, where a₃ is a length of the second projection interface, b₃ is a width of the second projection interface, a₂ is the length of the display area of the second device, and b₂ is the width of the display area of the second device; and multiplying the scale-down ratio by the size a₃×b₃ of the second projection interface, to scale down the second projection interface.

When the second device further displays a third projection interface, the projection method provided in this embodiment of this application may further include the following steps S1101a to S1106c shown in FIG. 11(b).

It should be noted that steps S1101a to S1106c may be performed after steps S1001 to S1006, or may be independently performed in parallel with steps S1001 to S1006. This is not limited in embodiments of this application.

S1101a: The second device displays the first projection interface.

For step S1101a, refer to the descriptions of S1001 in the foregoing embodiment. Details are not described again.

Optionally, when the second device further displays the third projection interface, the projection method provided in this embodiment of this application may include step S1101c.

S1101c: The second device displays the third projection interface.

In this embodiment of this application, the third projection interface corresponds to a display interface of a third application on a third device. The third device is a first device other than the first device on which the first application is located in the plurality of first devices.

S1102: The second device detects a second event that the user pays attention to the first projection interface displayed on the second device.

For step S1102, refer to the descriptions of S1102 in FIG. 11(a) in the foregoing embodiment. Details are not described again.

Refer to FIG. 8(b)-1 to FIG. 8(b)-3. The camera 252 of the smart television 250 detects that the user gazes at the video display interface 253 on the upper left in the four application display interfaces that are being synchronously displayed on the display 250. The video display interface 253 is the first projection interface, and corresponds to the video display interface displayed on the display 211 on the first device, namely, the smartphone 210. The third device may be the smartphone 220, the photograph display interface displayed on the display 221 of the smartphone is the third application, and the photograph display interface 254 displayed on the smart television 250 is the corresponding third projection interface. The third device may alternatively be the smartphone 230, the game display interface displayed on the display 231 of the smartphone is the third application, and the game display interface 255 displayed on the smart television 250 is the corresponding third projection interface. The third device may alternatively be the smartphone 240, the video display interface displayed on the display 241 of the smartphone is the third application, and the video display interface 256 displayed on the smart television 250 is the corresponding third projection interface.

Optionally, when the second device further displays the third projection interface, the projection method provided in this embodiment of this application may include steps S1103c and S1104c.

S1103c: The second device sends, to the third device, a third instruction for adjusting a projection effect.

In response to detecting the second event that the user pays attention to the first projection interface displayed on the second device, the second device sends, to the third device, the third instruction for adjusting the projection effect.

S1104c: The third device adjusts the projection effect of the display interface of the third application according to the received third instruction.

In this embodiment of this application, that the third device adjusts the projection effect of the display interface of the third application according to the received third instruction includes but is not limited to: reducing at least one of a bitrate, a frame rate, and resolution of a video picture corresponding to the display interface of the third application.

In some embodiments, the reducing at least one of a bitrate, a frame rate, and resolution of a video picture corresponding to the display interface of the third application includes: when the display interface of the third application belongs to the video music category, at a specific time interval, first reducing the encoding bitrate until a lowest-level bitrate, then reducing the frame rate until a lowest-level frame rate, and finally reducing the resolution until lowest-level resolution; when the display interface of the third application belongs to the office photograph category, at a specific time interval, first reducing the frame rate until a lowest-level frame rate, then reducing an encoding bitrate until a lowest-level bitrate, and finally reducing the resolution until lowest-level resolution; or when the display interface of the third application belongs to the game and other category, at a specific time interval, first reducing the encoding bitrate until a lowest-level bitrate, then reducing the resolution until lowest-level resolution, and finally reducing the frame rate until a lowest-level frame rate.

For example, FIG. 8(a)-1 to FIG. 8(a)-3 change to the scenario shown in FIG. 8(b)-1 to FIG. 8(b)-3. The photograph display interface 254, the game display interface 255, and the video display interface 256 that are synchronously displayed on the display 251 are application display interfaces that the user does not pay attention to. Correspondingly, the photograph display interface displayed on the display of the smartphone 220 belongs to the office photograph category, and the frame rate, the bitrate, and resolution are reduced in sequence based on importance. The game display interface displayed on the display 231 of the smartphone 230 belongs to the game and other category, and the bitrate, the resolution, and the frame rate are reduced in sequence based on importance. The video display interface displayed on the display 241 of the smartphone 240 belongs to the video music category, and the bitrate, the frame rate, and the resolution are reduced in sequence based on importance. It is still assumed that a time interval is 2 seconds, and the bitrates, the frame rates, and the resolution of the foregoing three application display interfaces separately have three levels, as shown in Table 1 to Table 3. In this case, after 2 seconds, the foregoing three application display interfaces change from the bitrates, the frame rates, and the resolution shown in FIG. 8(a)-1 to FIG. 8(a)-3 to bitrates, frame rates, and resolution shown in FIG. 8(b)-1 to FIG. 8(b)-3. More specifically, changes, with time, of the bitrates, the frame rates, and the resolution of the foregoing three application display interfaces are respectively shown in Table 14 and Table 16.

**Table 14 Table of the changes, with the time, of the bitrate, the frame rate, and the resolution of the photograph display interface**

| Time | 2s | 4s | 6s |
|---|---|---|---|
| Bitrate | 2 mbps | 2 mbps | 2 mbps |
| Frame rate | 15 fps | 15 fps | 15 fps |
| Resolution | 1080p | 720p | 360p |

**Table 15 Table of the changes, with the time, of the bitrate, the frame rate, and the resolution of the game display interface**

| Time | 2s | 4s | 6s |
|---|---|---|---|
| Bitrate | 2 mbps | 2 mbps | 2 mbps |
| Frame rate | 60 fps | 30 fps | 15 fps |
| Resolution | 360p | 360p | 360p |

**Table 16 Table of the changes, with the time, of the bitrate, the frame rate, and the resolution of the video display interface**

| Time | 2s | 4s | 6s |
|---|---|---|---|
| Bitrate | 2 mbps | 2 mbps | 2 mbps |
| Frame rate | 15 fps | 15 fps | 15 fps |
| Resolution | 1080p | 720p | 360p |

After 6 seconds, the bitrates, the frame rates, and the resolution of the foregoing three application display interfaces respectively remain unchanged at lowest levels of 2 mbps, lowest levels of 15 fps, and lowest levels of 360p.

In another possible implementation, the one or any two of the bitrates, the frame rates, and the resolution of the photograph display interface displayed on the display of the smartphone 220, the game display interface displayed on the display 231 of the smartphone 230, and the video display interface displayed on the display 241 of the smartphone 240 may alternatively be reduced. This is not limited in this application.

Optionally, when the second device further displays the third projection interface, the projection method provided in this embodiment of this application may include step S1105c.

S1105c: The third device projects, onto the second device, the display interface that is of the third application and that is obtained after the projection effect is adjusted according to the third instruction.

S1106a: The second device displays the first projection interface obtained after the projection effect is adjusted.

For step S1106a, refer to the descriptions of S1106a in FIG. 11(a) in the foregoing embodiment. Details are not described again.

Optionally, when the second device further displays the third projection interface, the projection method provided in this embodiment of this application may include step S1106c.

S1106c: The second device displays the third projection interface obtained after the projection effect is adjusted.

In this embodiment of this application, the third projection interface obtained after the projection effect is adjusted corresponds to the display interface that is of the third application on the third device and that is obtained after the projection effect is adjusted according to the third instruction.

In a possible implementation, the third projection interface obtained after the projection effect is adjusted includes at least one of the following: the third projection interface that is scaled down and displayed, the third projection interface that is displayed on the edge of the screen, or the third projection interface for which at least one of a bitrate, a frame rate, and resolution is reduced.

For example, the third projection interface obtained after the projection effect is adjusted may be the third projection interface that is scaled down and displayed on the edge of the screen.

Refer to FIG. 8(c)-1 to FIG. 8(c)-3. The smartphones 220, 230, and 240 separately send, to the smart television 250, an instruction (the third instruction) for scaling down the photograph display interface 254, the game display interface 255, and the video display interface 256 that are synchronously displayed on the smart television 250 and arranging the photograph display interface, the game display interface, and the video display interface on the lower edge of the display for display. The smart television 250 scales down the photograph display interface 254, the game display interface 255, and the video display interface 256 and arranges the photograph display interface, the game display interface, and the video display interface on the lower edge of the display for display.

In some embodiments, scaling down and displaying the third projection interface specifically includes:
calculating a scale-down ratio, where if a size of the third projection interface displayed on the second device is a₃×b₃, and the size of the display area of the second device is a₂×b₂, the scale-down ratio is a smaller value in a₂/a₃ and b₂/b₃, where a₃ is a length of the third projection interface, b₃ is a width of the third projection interface, a₂ is the length of the display area of the second device, and b₂ is the width of the display area of the second device; and multiplying the scale-down ratio by the size a₃×b₃ of the third projection interface, to scale down the third projection interface.

In some other embodiments, the second device displays a plurality of projection interfaces, and a focus of the user may be switched, to a projection interface that the user does not pay attention to, from a projection interface that the user originally pays attention to. Steps S1101a, S1102, S1103, S1104a, S1105a, and S1106a may be performed on a projection interface that the user pays attention to and a display interface that is of an application and that corresponds to the projection interface. Steps S1101b, S1102, S1103, S1104b, S1105b, and S1106b may be performed on a projection interface that the user does not pay attention to and a display interface that is of an application and that corresponds to the projection interface. Steps S1101c, S1102, S1103c, S1104c, S1105c, and S1106c may alternatively be performed on the projection interface that the user does not pay attention to and the display interface that is of the application and that corresponds to the projection interface.

Refer to a change from the scenario in FIG. 8(d)-1 to FIG. 8(d)-3 to the scenario in FIG. 8(e)-1 to FIG. 8(e)-3. In the scenario shown in FIG. 8(d)-1 to FIG. 8(d)-3, the camera 252 detects that the user gazes at the game display interface 255 on the lower edge of the display 251, as shown in FIG. 8(d)-1 to FIG. 8(d)-3. The smart television 250 separately sends, to the smartphones 230 and 210, different instructions for adjusting projection effects. The smartphone 230 increases, according to the preset scenario rule of the game and other category, the bitrate, the frame rate, and the resolution of the video display interface that is being projected, and sends, to the smart television 250, an instruction for scaling up the game display interface 255 that is synchronously displayed on the smart television 250 and displaying the game display interface in the middle. The smartphone 210 reduces, according to the preset scenario rule of the video music category, the bitrate, the frame rate, and the resolution of the video display interface that is being projected, and sends, to the smart television 250, an instruction for scaling down the video display interface 253 that is synchronously displayed on the smart television 250 and arranging the video display interface on the lower edge of the display 251. The smart television 250 adjusts display effects according to corresponding instructions, and the adjustment results are shown in FIG. 8(e)-1 to FIG. 8(e)-3.

According to the method provided in the foregoing embodiments of this application, the first device can adjust the projection effect based on the fact that second device detects that the user pays attention to the first projection interface displayed on the second device. This reduces power consumption of the first device, increases the battery life of the first device, and increases subjective visual experience of the user.

It should be understood that the solutions in embodiments of this application may be appropriately combined for use, and explanations or descriptions of terms in embodiments may be cross-referenced or explained in embodiments. This is not limited.

It should be further understood that sequence numbers of the processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the first device and the second device include a corresponding hardware structure and/or software module for executing each function. A person skilled in the art should be easily aware that, in combination with units and algorithm steps of the examples described in embodiments disclosed in this specification, this application can be implemented by hardware or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device and the second device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division during actual implementation.

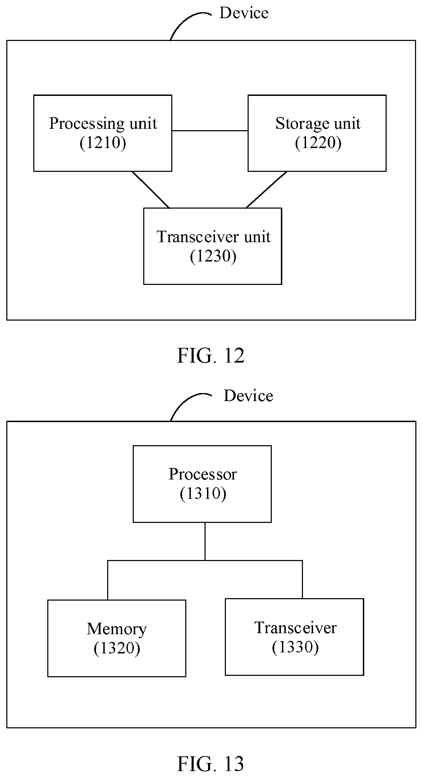

For example, when each functional module is obtained through division in an integrated manner, FIG. 12 is a block diagram of a structure of a device according to an embodiment of this application. For example, the electronic device may be the first device or the second device. As shown in FIG. 12, the electronic device may include a processing unit 1210, a storage unit 1220, and a transceiver unit 1230.

When the electronic device is the second device, the processing unit 1210 is configured to: process display of a first projection interface, and detect whether a user pays attention to the first projection interface displayed on the second device. In response to detecting a first event that the user does not pay attention to the first projection interface displayed on the second device, the second device sends, to the first device, a first instruction for adjusting a projection effect. In response to detecting a second event that the user pays attention to the first projection interface displayed on the second device, the second device sends, to the first device, a second instruction for adjusting a projection effect. For example, the processing unit 1210 is configured to support the device in performing steps S1001, S1002, S1006, S1101a, S1101b, S1101c, S1102, S1106a, S1106b, and S1106c, and/or another process of the technology described in this application. The storage unit 1220 is configured to store a computer program, processing data and/or a processing result during implementation of the method provided in embodiments of this application, and the like. The transceiver unit 1230 is configured to communicate with the first device, for example, receive interface configuration information of a projection interface and a control instruction from the first device, and for another example, send, to the first device, information about whether the user pays attention to a display interface on the second device.

It should be noted that the transceiver unit 1230 may include a radio frequency circuit. Specifically, the electronic device may receive and send radio signals through the radio frequency circuit. Usually, the radio frequency circuit includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an email, a messaging service, and the like.

It should be understood that each module in the electronic device may be implemented in a form of software and/or hardware. This is not limited herein. In other words, the electronic device is presented in a form of a functional module. The "module" herein may be an application-specific integrated circuit ASIC, a circuit, a processor that executes one or more software or firmware programs, a memory, an integrated logic circuit, and/or another component that can provide the foregoing functions. Optionally, in a simple embodiment, a person skilled in the art may figure out that the portable device may be in a form shown in FIG. 13. The processing unit 1210 may be implemented by using a processor 1310 shown in FIG. 13. The transceiver unit 1230 may be implemented by using a transceiver 1330 shown in FIG. 13. Specifically, the processor is implemented by executing a computer program stored in a memory. Optionally, the memory is a storage unit in a chip, for example, a register or a cache. The storage unit may alternatively be a storage unit that is in a computer device and that is located outside the chip, for example, a memory 1320 shown in FIG. 13.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions in embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or a wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

Method or algorithm steps described with reference to embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a detection apparatus. Certainly, the processor and the storage medium may alternatively exist in the detection apparatus as discrete components.

Based on the foregoing descriptions of the implementations, a person skilled in the art may clearly understand that, for ease and brevity of description, division into the foregoing functional modules is merely used as an example for description. During actual application, the foregoing functions may be allocated to different functional modules for implementation based on a requirement, that is, an inner structure of the apparatus is divided into different functional modules, to implement all or some of the functions described above.

## Claims

1. A projection method, applied to a second device, wherein the method comprises:
displaying, by the second device, a first projection interface, wherein the first projection interface corresponds to a display interface of a first application on a first device; and
in response to detecting a first event that a user does not pay attention to the first projection interface displayed on the second device, sending, by the second device to the first device, a first instruction for adjusting a projection effect.

2. The method according to claim 1, wherein the first event comprises at least one of the following events: the user does not gaze at the first projection interface, the head of the user turns to an area other than the first projection interface, or the user does not touch the first projection interface.

3. The method according to claim 1, wherein after the sending, by the second device to the first device, a first instruction for adjusting a projection effect, the method further comprises:
displaying, by the second device, the first projection interface obtained after the projection effect is adjusted, wherein the first projection interface obtained after the projection effect is adjusted corresponds to the display interface that is of the first application on the first device and that is obtained after the projection effect is adjusted according to the first instruction.

4. The method according to claim 3, wherein the first projection interface obtained after the projection effect is adjusted comprises at least one of the following:
the first projection interface that is scaled down and displayed, the first projection interface that is displayed on an edge of a screen, or the first projection interface for which at least one of a bitrate, a frame rate, and resolution is reduced.

5. The method according to claim 1, wherein after the sending, by the second device to the first device, a first instruction for adjusting a projection effect, the method further comprises:
stopping, by the second device, displaying the first projection interface.

6. The method according to claim 5, further comprising:
restoring, by the second device, display of the first projection interface in response to an emergency event.

7. The method according to claim 6, wherein the emergency event comprises a road condition navigation event.

8. The method according to any one of claims 1 to 5, further comprising:
in response to detecting a second event that the user pays attention to the first projection interface, sending, by the second device to the first device, a second instruction for adjusting a projection effect.

9. The method according to claim 8, wherein the second event comprises at least one of the following events: the user gazes at the first projection interface, the head of the user turns to the first projection interface, or the user touches the first projection interface.

10. The method according to claim 8, further comprising:
displaying, by the second device, the first projection interface obtained after the projection effect is adjusted, wherein the first projection interface obtained after the projection effect is adjusted corresponds to the display interface that is of the first application on the first device and that is obtained after the projection effect is adjusted according to the second instruction.

11. The method according to claim 10, wherein the first projection interface obtained after the projection effect is adjusted comprises at least one of the following:
the first projection interface that is scaled up and displayed, the first projection interface that is displayed in a middle, or the first projection interface for which at least one of the bitrate, the frame rate, and the resolution is increased.

12. The method according to claim 8, wherein the second device further displays a second projection interface, the second projection interface corresponds to a display interface of a second application on the first device, and the method further comprises:
displaying, by the second device, the second projection interface obtained after a projection effect is adjusted, wherein the second projection interface obtained after the projection effect is adjusted corresponds to the display interface that is of the second application on the first device and that is obtained after the projection effect is adjusted according to the second instruction.

13. The method according to claim 12, wherein the second projection interface obtained after the projection effect is adjusted comprises at least one of the following:
the second projection interface that is scaled down and displayed, the second projection interface that is displayed on the edge of the screen, or the second projection interface for which at least one of a bitrate, a frame rate, and resolution is reduced.

14. The method according to claim 8, wherein the second device further displays a third projection interface, the third projection interface corresponds to a display interface of a third application on a third device, and the method further comprises:
sending, by the second device to the third device, a third instruction for adjusting a projection effect of the display interface of the third application.

15. The method according to claim 14, further comprising:
displaying, by the second device, the third projection interface obtained after the projection effect is adjusted, wherein the third projection interface obtained after the projection effect is adjusted corresponds to the display interface that is of the third application on the third device and that is obtained after the projection effect is adjusted according to the third instruction.

16. The method according to claim 15, wherein the third projection interface obtained after the projection effect is adjusted comprises at least one of the following:
the third projection interface that is scaled down and displayed, the third projection interface that is displayed on the edge of the screen, or the third projection interface for which at least one of a bitrate, a frame rate, and resolution is reduced.

17. A projection method, applied to a projection system, wherein the projection system comprises a first device and a second device, and the method comprises:
projecting, by the first device, a display interface of a first application onto the second device;
displaying, by the second device, a first projection interface, wherein the first projection interface corresponds to the display interface of the first application on the first device;
in response to detecting a first event that a user does not pay attention to the first projection interface displayed on the second device, sending, by the second device to the first device, a first instruction for adjusting a projection effect;
receiving, by the first device, the first instruction; and
adjusting, by the first device, the projection effect of the display interface of the first application according to the first instruction.

18. The method according to claim 17, wherein the first event comprises at least one of the following events: the user does not gaze at the first projection interface, the head of the user turns to an area other than the first projection interface, or the user does not touch the first projection interface.

19. The method according to claim 17, wherein the adjusting, by the first device, the projection effect of the display interface of the first application according to the first instruction comprises at least one of the following:
stopping encoding of a video picture corresponding to the display interface of the first application, stopping encoding of an audio corresponding to the display interface of the first application, or reducing at least one of a bitrate, a frame rate, or resolution of the video picture corresponding to the display interface of the first application.

20. The method according to claim 17 or 19, wherein after the adjusting, by the first device, the projection effect of the display interface of the first application according to the first instruction, the method further comprises:
projecting, by the first device onto the second device, the display interface that is of the first application and that is obtained after the projection effect is adjusted according to the first instruction; and
displaying, by the second device, the first projection interface obtained after the projection effect is adjusted, wherein the first projection interface obtained after the projection effect is adjusted corresponds to the display interface that is of the first application on the first device and that is obtained after the projection effect is adjusted according to the first instruction.

21. The method according to claim 20, wherein the first projection interface obtained after the projection effect is adjusted comprises at least one of the following:
the first projection interface that is scaled down and displayed, the first projection interface that is displayed on an edge of a screen, or the first projection interface for which at least one of a bitrate, a frame rate, and resolution is reduced.

22. The method according to claim 17, wherein the adjusting, by the first device, the projection effect of the display interface of the first application according to the first instruction further comprises:
stopping, by the first device, displaying the display interface of the first application.

23. The method according to claim 17 or 22, wherein after the adjusting, by the first device, the projection effect of the display interface of the first application according to the first instruction, the method further comprises:
stopping, by the second device, displaying the first projection interface.

24. The method according to claim 22, further comprising:
in response to an emergency event, restoring, by the first device, display of the display interface of the first application, and restoring, by the second device, display of the first projection interface.

25. The method according to claim 24, wherein the emergency event comprises a road condition navigation event.

26. The method according to any one of claims 17 to 25, further comprising:
in response to detecting a second event that the user pays attention to the first projection interface, sending, by the second device to the first device, a second instruction for adjusting a projection effect;
receiving, by the first device, the second instruction; and
adjusting, by the first device, the projection effect of the display interface of the first application according to the second instruction.

27. The method according to claim 26, wherein the second event comprises at least one of the following events: the user gazes at the first projection interface, the head of the user turns to the first projection interface, or the user touches the first projection interface.

28. The method according to claim 26, wherein the adjusting, by the first device, the projection effect of the display interface of the first application according to the second instruction comprises at least one of the following:
starting encoding of the video picture corresponding to the display interface of the first application, starting encoding of the audio corresponding to the display interface of the first application, or increasing at least one of the bitrate, the frame rate, or the resolution of the video picture corresponding to the display interface of the first application.

29. The method according to any one of claims 26 to 28, wherein after the adjusting, by the first device, the projection effect of the display interface of the first application according to the second instruction, the method further comprises:
projecting, by the first device onto the second device, the display interface that is of the first application and that is obtained after the projection effect is adjusted according to the second instruction; and
displaying, by the second device, the first projection interface obtained after the projection effect is adjusted, wherein the first projection interface obtained after the projection effect is adjusted corresponds to the display interface that is of the first application on the first device and that is obtained after the projection effect is adjusted according to the second instruction.

30. The method according to claim 29, wherein the first projection interface obtained after the projection effect is adjusted comprises at least one of the following:
the first projection interface that is scaled up and displayed, the first projection interface that is displayed in a middle, or the first projection interface for which at least one of the bitrate, the frame rate, and the resolution is increased.

31. The method according to claim 26, wherein the second device further displays a second projection interface, the second projection interface corresponds to a display interface of a second application on the first device, and the method further comprises:
adjusting, by the first device, the projection effect of the display interface of the second application according to the second instruction.

32. The method according to claim 31, wherein the adjusting, by the first device, the projection effect of the display interface of the second application according to the second instruction comprises:
stopping encoding of a video picture corresponding to the display interface of the second application, stopping encoding of an audio corresponding to the display interface of the second application, or reducing at least one of a bitrate, a frame rate, or resolution of the video picture corresponding to the display interface of the second application.

33. The method according to claim 31 or 32, wherein after the adjusting, by the first device, the projection effect of the display interface of the second application according to the second instruction, the method further comprises:
projecting, by the first device onto the second device, the display interface that is of the second application and that is obtained after the projection effect is adjusted according to the second instruction; and
displaying, by the second device, the second projection interface obtained after the projection effect is adjusted, wherein the second projection interface obtained after the projection effect is adjusted corresponds to the display interface that is of the second application on the first device and that is obtained after the projection effect is adjusted according to the second instruction.

34. The method according to claim 33, wherein the second projection interface obtained after the projection effect is adjusted comprises at least one of the following:
the second projection interface that is scaled down and displayed, the second projection interface that is displayed on the edge of the screen, or the second projection interface for which at least one of a bitrate, a frame rate, and resolution is reduced.

35. The method according to claim 26, wherein the second device further displays a third projection interface, the third projection interface corresponds to a display interface of a third application on a third device, and the method further comprises:
sending, by the second device to the third device, a third instruction for adjusting a projection effect of the display interface of the third application; and
adjusting, by the third device, the projection effect of the display interface of the third application according to the third instruction.

36. The method according to claim 35, wherein the adjusting, by the third device, the projection effect of the display interface of the third application according to the third instruction comprises:
stopping encoding of a video picture corresponding to the display interface of the third application, stopping encoding of an audio corresponding to the display interface of the third application, or reducing at least one of a bitrate, a frame rate, or resolution of the video picture corresponding to the display interface of the third application.

37. The method according to claim 35 or 36, wherein after the adjusting, by the third device, the projection effect of the display interface of the third application according to the third instruction, the method further comprises:
projecting, by the third device onto the second device, the display interface that is of the third application and that is obtained after the projection effect is adjusted according to the third instruction; and
displaying, by the second device, the third projection interface obtained after the projection effect is adjusted, wherein the third projection interface obtained after the projection effect is adjusted corresponds to the display interface that is of the third application on the third device and that is obtained after the projection effect is adjusted according to the third instruction.

38. The method according to claim 37, wherein the third projection interface obtained after the projection effect is adjusted comprises at least one of the following:
the third projection interface that is scaled down and displayed, the third projection interface that is displayed on the edge of the screen, or the third projection interface for which at least one of a bitrate, a frame rate, and resolution is reduced.

39. A projection method, applied to a first device, wherein the method comprises:
projecting, by the first device, a display interface of a first application onto a second device, so that the second device displays a first projection interface, wherein the first projection interface corresponds to the display interface of the first application on the first device;
receiving, by the first device, a first instruction that is for adjusting a projection effect and that is sent by the second device; and
adjusting, by the first device, the projection effect of the display interface of the first application according to the first instruction.

40. The method according to claim 39, wherein the adjusting, by the first device, the projection effect of the display interface of the first application according to the first instruction comprises at least one of the following:
stopping encoding of a video picture corresponding to the display interface of the first application, stopping encoding of an audio corresponding to the display interface of the first application, or reducing at least one of a bitrate, a frame rate, or resolution of the video picture corresponding to the display interface of the first application.

41. The method according to claim 39 or 40, wherein after the adjusting, by the first device, the projection effect of the display interface of the first application according to the first instruction, the method further comprises:
projecting, by the first device onto the second device, the display interface that is of the first application and that is obtained after the projection effect is adjusted according to the first instruction.

42. The method according to claim 41, wherein the adjusting, by the first device, the projection effect of the display interface of the first application according to the first instruction further comprises:
stopping, by the first device, displaying the display interface of the first application.

43. The method according to claim 42, further comprising:
restoring, by the first device, display of the display interface of the first application in response to an emergency event.

44. The method according to claim 43, wherein the emergency event comprises a road condition navigation event.

45. The method according to claim 39, further comprising:
receiving, by the first device, a second instruction that is for adjusting a projection effect and that is sent by the second device; and
adjusting, by the first device, the projection effect of the display interface of the first application according to the second instruction.

46. The method according to claim 45, wherein the adjusting, by the first device, the projection effect of the display interface of the first application according to the second instruction comprises:
starting encoding of a video picture corresponding to the display interface of the first application, starting encoding of an audio corresponding to the display interface of the first application, or increasing at least one of a bitrate, a frame rate, or resolution of the video picture corresponding to the display interface of the first application.

47. The method according to claim 45 or 46, wherein after the adjusting, by the first device, the projection effect of the display interface of the first application according to the second instruction, the method further comprises:
projecting, by the first device onto the second device, the display interface that is of the first application and that is obtained after the projection effect is adjusted according to the second instruction.

48. The method according to claim 45, wherein the first device further projects a display interface of a second application onto the second device, and the method further comprises:
adjusting, by the first device, the projection effect of the display interface of the second application according to the second instruction.

49. The method according to claim 48, wherein the adjusting, by the first device, the projection effect of the display interface of the second application according to the second instruction comprises:
stopping encoding of a video picture corresponding to the display interface of the second application, stopping encoding of an audio corresponding to the display interface of the second application, or reducing at least one of a bitrate, a frame rate, or resolution of the video picture corresponding to the display interface of the second application.

50. The method according to claim 48 or 49, wherein after the adjusting, by the first device, the projection effect of the display interface of the second application according to the second instruction, the method further comprises:
projecting, by the first device onto the second device, the display interface that is of the second application and that is obtained after the projection effect is adjusted according to the second instruction.

51. A second device, comprising a memory, one or more processors, and one or more programs, wherein the one or more programs are stored in the memory, and when the one or more processors execute the one or more programs, the second device is enabled to perform the method according to any one of claims 1 to 16.

52. A vehicle, comprising:
a vehicle driving module, configured to control various driving operations on the vehicle;
a sensor module, configured to detect a signal related to running of the vehicle;
a camera, configured to detect whether a user pays attention to a projection interface displayed on the vehicle;
a memory, configured to store instructions to be executed by one or more processors of the vehicle; and
the processor, wherein when the processor executes the instructions in the memory, the vehicle is enabled to perform the projection method according to any one of claims 1 to 16.

53. A first device, comprising a memory, one or more processors, and one or more programs, wherein the one or more programs are stored in the memory, and when the one or more processors execute the one or more programs, the first device is enabled to perform the method according to any one of claims 39 to 50.

54. A projection system, wherein
the projection system comprises a first device and a second device, the second device is configured to perform the projection method according to any one of claims 1 to 16, and the first device is configured to perform the projection method according to any one of claims 39 to 50.

55. A chip, wherein the chip system comprises a processing circuit and a storage medium, the storage medium stores computer program code, and when the computer program code is executed by the processing circuit, the method according to any one of claims 1 to 50 is implemented.

56. A computer-readable storage medium, wherein the computer-readable storage medium is configured to store a computer program, and when the computer program is run on a computer, the computer is enabled to perform the method according to any one of claims 1 to 50.
